# EUROPÄISCHE PATENTSCHRIFT

(11) **EP 2 817 786 B1**
(45) Veröffentlichungstag und Bekanntmachung des Hinweises auf die Patenterteilung: **04.11.2020**
(21) Anmeldenummer: 13702575.5
(22) Anmeldetag: 28.01.2013
(51) Int. Cl.: G07B 15/06, G06Q 10/02

(54) **BUCHUNGS- UND STORNIERUNGSVERFAHREN SOWIE GEBÜHRENERHEBUNGSVERFAHREN IN EINEM GEBÜHRENERHEBUNGSSYSTEM**
BOOKING AND CANCELLATION METHOD, AND METHOD FOR COLLECTING TOLLS IN A TOLL COLLECTION SYSTEM
PROCÉDÉ DE RÉSERVATION ET D'ANNULATION AINSI QUE PROCÉDÉ DE PRÉLÈVEMENT DE TAXES DANS UN SYSTÈME DE PRÉLÈVEMENT DE TAXES

(30) Priorität: 20.02.2012 DE 102012003622
(43) Veröffentlichungstag der Anmeldung: 31.12.2014
(73) Patentinhaber: Toll Collect GmbH, 10785 Berlin (DE)
(72) Erfinder: BUCHHEIM, Timm, 15366 Neuenhagen (DE); JANSSEN, Hartmut, 14195 Berlin (DE)
(86) Internationale Anmeldenummer: PCT/EP2013/000289
(87) Internationale Veröffentlichungsnummer: WO 2013/124032

(56) Entgegenhaltungen:
- EP-A1- 1 517 271
- DE-A1-102005 015 693
- DE-A1-102006 027 191

## Beschreibung

Diese Schutzrechtsanmeldung nimmt die Priorität der deutschen Patentanmeldung mit dem Aktenzeichen 10 2012 003 622.1 vom 20.02.2012 in Anspruch, zu der ein Prüfungsbescheid ergangen ist, mit dem keine weiteren Druckschriften als die Offenlegungsschriften DE 10 2006 027 191 A1 und EP 1 696 208 A1 zitiert und in Betracht gezogen wurden.
Diese Druckschriften werden weiter unten hinsichtlich ihres Beitrages zum Stand der Technik, der die Erfindung betrifft, gewürdigt.

Die Erfindung betrifft ein Buchungs- und Stornierungsverfahren sowie ein Gebührenerhebungsverfahren in einem System für die Erhebung von Gebühren für die Nutzung von gebührenpflichtigen Verkehrsflächen durch ein Fahrzeug. Im Zusammenhang damit betrifft die Erfindung ferner ein Gebührenerhebungssystem, eine Datenverarbeitungseinrichtung, eine Fahrzeugeinrichtung, ein Mobilfunkgerät und ein Computerprogrammprodukt.

In einem Mautsystem als Beispiel für ein System für die Erhebung von Gebühren für die Nutzung von gebührenpflichtigen Verkehrsflächen durch ein Fahrzeug besteht die Aufgabe, die durch ein Fahrzeug erfolgende Nutzung einer gebührenpflichtigen Verkehrsfläche zu erkennen und für diese gebührenpflichtige Verkehrsfläche eine verkehrsflächen- und fahrzeugspezifische Mautgebühr zu erheben. Für eine vom Fahrzeug nicht genutzte Verkehrsfläche soll keine Mautgebühr anfallen.
Typische Verkehrsflächen sind Straßenabschnitte oder Streckenabschnitte, insbesondere die von mehrspurigen Straßen - zum Beispiel Autobahnen -, die zufahrtsseitig oder am Beginn durch eine Auffahrt und abfahrtsseitig oder am Ende durch eine Ausfahrt gekennzeichnet sein können. Eine alternative Kennzeichnung besteht in einem Straßenabschnitt oder Streckenabschnitt mit definierter Fahrtrichtung (zum Beispiel Fahrtrichtung Nord oder alternativ Fahrtrichtung Süd).
Aus dem Stand der Technik ist bekannt, das Auffahren auf eine gebührenpflichtige Verkehrsfläche durch die Auswertung von positionsbezogenen Daten des Fahrzeugs zu erkennen, indem anhand der positionsbezogenen Daten festgestellt wird, dass sich das Fahrzeug auf der gebührenpflichtigen Verkehrsfläche befinden muss.
Dies wird beispielsweise möglich durch eine vom Fahrzeug mitgeführte Fahrzeugeinrichtung, die eine Positionsbestimmungseinrichtung umfasst - beispielsweise einen GNSS-Empfänger, der zur Positionsbestimmung geeignete Daten von Satelliten eines Globalen Navigations-Satelliten-Systems (GNSS) empfängt - und positionsbezogene Daten ausgibt. Ein von der Fahrzeugeinrichtung umfasster Prozessor vergleicht die positionsbezogenen Daten mit geographischen Daten von Geo-Objekten, die gebührenpflichtige Verkehrsflächen (auch Tarif-Objekte genannt), hier der gebührenpflichtige Streckenabschnitt einer gebührenpflichtigen Straße, repräsentieren. Ergibt der Vergleich eine Assoziation der positionsbezogenen Daten mit einem gebührenpflichtigen Streckenabschnitt - beispielsweise durch die Feststellung, dass die positionsbezogene Daten einer Position des Fahrzeugs innerhalb einer von den geographischen Daten des Geo-Objektes des gebührenpflichtigen Streckenabschnitts aufgespannten Fläche entsprechen - so gilt die gebührenpflichtige Verkehrsfläche als durch das Fahrzeug benutzt. In Folge wird für die Benutzung der gebührenpflichtigen Verkehrsfläche - teilweise nachträglich - eine auf das Fahrzeug bezogene Gebühr erhoben und damit eine Nutzungsberechtigung erworben.
Solche Fahrzeugeinrichtungen und Verfahren sind beispielsweise aus den Patentschriften DE 43 04 838 C2 und DE 43 10 099 C2 und seit der Einführung des satellitengestützten deutschen Mautsystem durch die Toll Collect GmbH im Jahr 2005 als OBU (On-Board Unit) und dem damit verbundenen automatischen Verfahren (AV) bekannt.

Verfahrensbedingt muss zunächst immer die Nutzung des gebührenpflichtigen Streckenabschnitts festgestellt werden, bevor eine Gebührenerhebung erfolgen kann. Diesem Umstand haftet der Nachteil an, zur Feststellung der Nutzung einen kurzen Teilabschnitt des gebührenpflichtigen Streckenabschnitts ohne Nutzungsberechtigung zu fahren. In diesem Bereich könnten mobile Kontrollfahrzeuge bei der Abfrage der Nutzungsberechtigung von der OBU über eine DSRC-Kommunikation die mangelnde Nutzungsberechtigung unbeabsichtigterweise als Mautprellerei interpretieren. Wird der gebührenpflichtige Streckenabschnitt in seinem Verlauf ab Beginn über eine lange Strecke von einem gebührenfreien Streckenabschnitt in einem Abstand begleitet, der so gering ist, dass eine GNSS-basierte Unterscheidung einer Nutzung des gebührenfreien Streckenabschnitts von einer Nutzung des gebührenpflichtigen Streckenabschnitts nicht möglich ist, so muss diese Unterscheidung in einem späteren Teilabschnitt des gebührenpflichtigen Streckenabschnitt getroffen werden, zu dem der gebührenfreie Straßenabschnitt einen Abstand aufweist, der hinreichend groß ist, um die besagte Unterscheidung treffen zu können. Damit kann es sein, dass der Nutzer mehr als die Hälfte der Länge des gebührenpflichtigen Streckenabschnitts ohne Nutzungsberechtigung beziehungsweise Gebührenerhebung unterwegs ist.
Ein weiterer Nachteil ergibt sich für gebührenpflichtige Streckenabschnitte, die so kurz sind, dass eine Nutzung aufgrund der Unsicherheiten der GNSS-Positionsbestimmung nicht mit hinreichender Sicherheit auf der kurzen Länge des betreffenden Streckenabschnitts bestimmt werden kann. Dies trifft weniger auf Autobahnabschnitte, mehr jedoch auf Abschnitte von Bundesstraßen zu, die im Mittel kürzer sind als Autobahnabschnitte. Ein derart kurzer Streckenabschnitt wird bei ausbleibender Erkennung nicht nur vollständig ohne Nutzungsberechtigung befahren, sondern es bleibt auch eine Gebührenerhebung aus.

Neben dem automatischen Verfahren betreibt die Toll Collect GmbH seit 2005 ein manuelles Verfahren, in dem ein Nutzer eine auf sein Fahrzeug bezogene Nutzungsberechtigung für eine aus mehreren gebührenpflichtigen Streckenabschnitten bestehenden Route vor Fahrtantritt an einer ersten dezentralen Buchungsvorrichtung oder über einen zentralen Webdienst im Internet in einer zentralen Datenverarbeitungseinrichtung buchen und eine Gebühr dafür entrichten kann. Mit der Erhebung der Gebühr durch das Mautsystem wird dem Nutzer die Nutzungsberechtigung für die durch die Gebühr gedeckten Streckenabschnitte erteilt. Damit ist der Nutzer allerdings nachteiligerweise prinzipiell zunächst auf die Nutzung der gebuchten Route festgelegt. Ändert er seine Route unterwegs - d. h. entspricht seine gefahrene Route nicht seiner gebuchten Route -, so kann er seine Nutzungsberechtigung für die nicht genutzten gebührenpflichtigen Streckenabschnitte durch die entsprechende Verwendung einer zweiten dezentralen Buchungsvorrichtung stornieren (Teilstornierung) und bekommt die entrichtete Gebühr teilweise erstattet oder gutgeschrieben.
Eine Teilstornierung über den zentralen Webdienst ist nicht gestattet, weil dieser im Gegensatz zu den dezentralen Buchungsvorrichtungen örtlich ungebunden ist, und der der Routenänderung entsprechende Ort jedoch durch die Anwesenheit des Nutzers an diesem Ort überprüft werden muss. Dies erfolgt in der Praxis dadurch, dass der Nutzer nur an einer (der zweiten) dezentralen Buchungsvorrichtung ein Teilstornierung vornehmen kann, die an der Schnittstelle zwischen einem benutztem und nicht benutztem (zu stornierenden) Streckenabschnitt liegt. Ein solches Verfahren ist kompliziert und für den Nutzer sehr aufwändig.

Aus der Offenlegungsschrift EP 1 696 208 ist bekannt, mehrere Positionsdaten zu erfassen und mit einer gebührenpflichtigen Fläche zu assoziieren.
Aus der Offenlegungsschrift DE 10 2005 015 693 A1 ist bekannt, für eine von einem Fahrzeuggerät aus vorgegebene Startposition und Zielposition eine Route zu ermitteln und für die auf dieser Route liegenden Streckenabschnitte entsprechende Nutzungsberechtigungen zu buchen. Bei Abweichung von dieser Route wird die Route neu berechnet; die Buchung von außerhalb der neuen Route liegenden Streckenabschnitten wird gegebenenfalls storniert, während für neue noch nicht gebuchte Streckenabschnitte der neuen Route eine Nutzungsberechtigung nachgebucht wird.

Über ein ähnliches Verfahren berichtet auch die Offenlegungsschrift DE 10 2006 027 191 A1.

Diese Verfahren stellen quasi eine mobile, teilautomatisierte Variante des oben beschriebenen manuellen Verfahrens dar und werden ihm als ebenfalls manuelle Verfahren gleichgestellt in der Hinsicht, dass ein Fahrziel manuell vorgegeben werden muss.

Eine derartige Mitteilung des Zielortes - sei es auch nur durch den letzten Streckenabschnitt einer Reihe von mehreren entlang einer Route aufeinanderfolgenden Streckenabschnitten - an eine Zentrale kann bei datenschutzsensiblen Nutzern Ablehnung hervorrufen.

Besonders nachteilig sind die manuellen Verfahren für einen Nutzer, der einmal die vorbestimmte Abfahrt von der gebührenpflichtigen Route verpasst oder nicht nutzen kann. Dann fährt er streckenweise unbeabsichtigt als Mautpreller weiter und kann eine empfindliche Strafzahlung riskieren. Dies ist ein typischer Nachteil eines ansonsten vorteilhaft Ressourcen sparenden barrierefreien Mautsystems.

Die Offenlegungsschrift EP 1 517 271 beschreibt für den Fall der Assoziierung einer Fahrzeugposition mit der möglichen, bevorstehenden Nutzung mehrerer alternativ befahrbarer Routen eine vom Fahrer zu bestätigende Auswahl einer möglichen Route und die Buchung einer Nutzungsberechtigung für die ausgewählte Route.

Nachteilig an dieser Lösung ist die vom Fahrer geforderte Interaktion, die typisch für ein manuelles Verfahren ist.

Andererseits schlägt die Offenlegungsschrift EP 1 517 271 ein automatisches Verfahren vor, in dem bei mehreren alternativ befahrbaren Streckenabschnitten die Buchung der Nutzungsberechtigung für den tatsächlich befahrenen Streckenabschnitt aufgeschoben wird, bis die Befahrung des betreffenden Streckenabschnittes tatsächlich erfolgt ist.

Nachteilig an dieser Lösung ist, dass der Fahrer den Streckenabschnitt befährt, bevor er überhaupt eine Nutzungsberechtigung dazu erhalten hat.

Es ist daher die Aufgabe der Erfindung, Verfahren und Komponenten zu beschreiben, mit denen die genannten Nachteile sowohl von automatischen Verfahren als auch von manuellen Verfahren bekannter Mautsysteme beseitigt werden.

Allgemein ist es Aufgabe der Erfindung, in einem Gebührenerhebungssystem das unbeabsichtigte Fehlen einer Nutzungsberechtigung für benutzte gebührenpflichtige Verkehrsflächen zu vermeiden.

Ferner ist es Aufgabe der Erfindung, unter datenschutzrechtlichen Aspekten weniger bedenkliche Buchungsverfahren und -komponenten für Nutzungsberechtigungen vorzuschlagen.

Dabei ist es insbesondere Aufgabe der Erfindung, ein nutzerfreundliches Buchungs- und Stornierungsverfahren und entsprechende Buchungs- und Stornierungskomponenten in einem Gebührenerhebungssystem bereitzustellen.

Die Aufgaben werden erfindungsgemäß gelöst durch ein Buchungs- und Stornierungsvertahren gemaß Anspruch 1, durch eine Fahrzeugeinrichtung nach Anspruch 5, ein Mobiltunkgerat nach Anspruch 6, ein Computerprogrammprodukt nach Anspruch 9 und ein Gebuhrenerhebungssystem nacn Anspruch 12.

Die unabhängigen Erzeugnisansprüche 5, 6, 9 und 12 epräsentieren unterschiedliche Kategorien von Erzeugnissen zur erfindungsgemäßen Lösung der erwähnten Probleme. Von diesen erfindungsgemäßen Erzeugnissen kann eines oder eine seiner Weiterbildungen ein Erzeugnis zur Durchführung eines erfindungsgemäßen Verfahrens oder einer seiner Weiterbildungen umfassen oder von diesem umfasst werden. Umgekehrt kann die Verwendung eines beanspruchten erfindungsgemäßen Erzeugnisses oder einer seiner Weiterbildungen die Ausübung eines erfindungsgemäßen Verfahrens oder einer seiner Weiterbildung umfassen oder von ihr umfasst werden. Die durch die zahlreichen Anspruchskategorien manifestierten unterschiedlichen Aspekte der Erfindung reflektieren die Vielseitigkeit der Erfindung, die sowohl für dezentrale Buchungs-, Stornierungs- und Gebührenerhebungsverfahren als auch für zentrale Buchungs-, Stornierungs- und Gebührenerhebungsverfahren zur Anwendung kommen kann.

Innerhalb bestimmter Kategorien sind bevorzugte Ausführungen der Erfindung Gegenstand abhängiger Ansprüche.

Vereinfacht gesprochen stellt die Erfindung für ein System zum Erhebung von Gebühren für die Nutzung Verkehrsflächen Verfahren und Erzeugnisse bereit, die dezentral initiierte, Benutzungen von Verkehrsflächen vorausgehende, Buchungen von Nutzungsberechtigungen der Verkehrsflächen, und dezentral initiierte, Nichtnutzungen der Verkehrsflächen folgende, Stornierungen der Nutzungsberechtigungen in einer dezentralen Fahrzeugeinrichtung und/ oder einer zentralen Datenverarbeitungseinrichtung vorsehen.

Die Erfindung wird nachfolgend anhand mehrerer Aspekte beschrieben, die die verschiedenen Kategorien der Erfindung repräsentieren. Unter einem Aspekt der Erfindung erwähnte Vorteile, Merkmale und Ausführungsformen gelten dabei als übertragbar auf alle anderen Aspekte der Erfindung, soweit dies nicht zu einem Widerspruch führt.

Gemäß einem ersten Aspekt der Erfindung weist ein Verfahren zur Buchung und Stornierung von Nutzungsberechtigungen in einem System für die Erhebung von Gebühren für die Nutzung von gebührenpflichtigen Verkehrsflächen durch ein Fahrzeug folgenden Phasen auf: a) eine erste Datenerfassungsphase, in der erste positionsbezogene Daten des Fahrzeugs erfasst werden, b) eine erste Assoziierungsphase, in der die ersten positionsbezogenen Daten mit einer möglichen, bevorstehenden Nutzung wenigstens einer ersten gebührenpflichtigen Verkehrsfläche durch das Fahrzeug und mit wenigstens einer möglichen, zur ersten gebührenpflichtigen Verkehrsfläche alternativ bevorstehenden, Nutzung einer zweiten gebührenpflichtigen Verkehrsfläche durch das Fahrzeug assoziiert werden, c) eine Buchungsphase, in der für die erste gebührenpflichtige Verkehrsfläche eine erste auf das Fahrzeug bezogene Nutzungsberechtigung und zusätzlich zur ersten Nutzungsberechtigung eine zweite auf das Fahrzeug bezogene Nutzungsberechtigung für die zweite gebührenpflichtige Verkehrsfläche gebucht wird, d) eine zweite Datenerfassungsphase, in der zweite positionsbezogene Daten des Fahrzeugs erfasst werden e) eine zweite Assoziierungsphase, in der die zweiten positionsbezogenen Daten mit einer bestätigten Nichtnutzung wenigstens der ersten gebührenpflichtigen Verkehrsfläche durch das Fahrzeug assoziiert werden und f) eine Stornierungsphase, in der wenigstens die erste Nutzungsberechtigung für die erste gebührenpflichtige Verkehrsfläche storniert wird.

Da von der Stornierungsphase auch ein Buchungsprozess umfasst ist - nämlich derjenige, der datentechnisch zur Stornierung führt -, kann die Stornierungsphase auch als zweite Buchungsphase aufgefasst werden, wodurch die oben genannte Buchungsphase, die datentechnisch zur Erzeugung/ Aktivierung der Nutzungsberechtigungen führt, als erste Buchungsphase angesehen werden kann.

Aufgrund des alternativen Nutzungscharakters, mit der die Nutzung der ersten gebührenpflichtigen Verkehrsfläche ausgeschlossen ist, kann, wenn die zweite gebührenpflichtige Verkehrsfläche genutzt wird, die Nichtnutzung der ersten Verkehrsfläche gegebenenfalls implizit dadurch bestimmt werden, dass die zweiten positionsbezogenen Daten mit einer bestätigten Nutzung der zweiten gebührenpflichtigen Verkehrsfläche durch das Fahrzeug assoziiert werden.
Ferner kann aufgrund des alternativen Nutzungscharakters, mit der die Nutzung der ersten gebührenpflichtigen Verkehrsfläche ausgeschlossen ist, wenn die zweite gebührenpflichtige Verkehrsfläche genutzt wird, die Stornierung der Nutzungsberechtigung in der zweiten Buchungsphase dadurch impliziert sein, dass für die in der zweiten Assoziationsphase bestätigte, durch das Fahrzeug erfolgte, Nutzung der zweiten gebührenpflichtigen Verkehrsfläche eine Gebühr erhoben wird.

In diesem Sinne gilt die Erhebung einer Nutzungsgebühr für die zweite gebührenpflichtige Verkehrsfläche in der zweiten Buchungsphase als Stornierung einer gebührenfreien Nutzungsberechtigung für die erste gebührenpflichtige Verkehrsfläche.

Von diesem erfindungsgemäßen Buchungs und Stornierungsverfahren, das um die - zweckbedingt nicht ausgeschlossene - Erhebung einer Gebühr im Falle der bestätigten Nutzung der zweiten gebührenpflichtigen Verkehrsfläche zu einem Gebührenerhebungsverfahren weitergebildet werden kann, sollen für die Gesamtheit der Verfahrensschritte c) erste Buchungsphase, e) (zweite Assoziierungsphase) und f) (zweite Buchungsphase) folgende drei mögliche Kombinationsvarianten mit den Abkürzungen
NN1.für die bestätigte Nichtnutzung der ersten gebührenpflichtigen Verkehrsfläche in der zweiten Assoziierungsphase,
N2 für die bestätigte Nutzung der zweiten gebührenpflichtigen Verkehrsfläche in der zweiten Assoziierungsphase,
S1 für die Stornierung der Nutzungsberechtigung für die erste gebührenpflichtige Verkehrsfläche in der zweiten Buchungsphase,
G2 für die Erhebung einer Gebühr für die (mögliche und/ oder bestätigte) Nutzung der zweiten gebührenpflichtigen Verkehrsfläche, in der erste oder zweiten Buchungsphase, als Maßnahme zur Erlangung einer Nutzungsberechtigung für die zweite gebührenpflichtige Verkehrsfläche in der ersten Buchungsphase oder als Maßnahme zur Bezahlung für die in der zweiten Assoziierungsphase nachgewiesene Benutzung der zweiten Verkehrsfläche,
G1 für die Erhebung einer Gebühr für die mögliche Nutzung der ersten gebührenpflichtigen Verkehrsfläche als Maßnahme zur Erlangung einer Nutzungsberechtigung für die erste gebührenpflichtige Verkehrsfläche in der ersten Buchungsphase,
R1 für die Buchung einer gebührenfreien Berechtigung zur Nutzung der ersten gebührenpflichtigen Verkehrsfläche,
R2 für die Buchung einer gebührenfreien Berechtigung zur Nutzung der zweiten gebührenpflichtigen Verkehrsfläche,
A2 für die zweite Assoziierungsphase,
B2 für die zweite Buchungsphase und
B1 für die erste Buchungsphase, in der
   i) gebührenfreie Buchungen R1 und R2 von Nutzungsberechtigungen für die erste und die zweite gebührenpflichtige Verkehrsfläche dann angezeigt sind, wenn eine Gebührenerhebung G2 für die zweite gebührenpflichtige Verkehrsfläche erst in der zweiten Buchungsphase B2 bei erfolgtem Nachweis der tatsächlichen Nutzung derselben in der zweiten Assoziierungsphase A2 erfolgt und
   ii) die Erhebung G1 und G2 von Gebühren zur Erlangung einer Berechtigung zur möglichen alternativen Nutzung der ersten gebührenpflichtigen Verkehrsfläche und der zweiten gebührenpflichtigen Verkehrsfläche dann angezeigt sind, wenn in der zweiten Buchungsphase B2 keine Gebührenerhebung G2 für die zweite gebührenpflichtige Verkehrsfläche vorgesehen ist, obwohl in der zweiten Assoziierungsphase eine Nutzung der zweiten Verkehrsfläche nachgewiesen wurde:
näher betrachtet werden:

| Variante | Phase A2 | Phase B2 | Phase B1 |
|---|---|---|---|
| Variante 1 | NN1 | S1 | R1+ R2 oder G1+G2 |
| Variante 2 | N2→NN1 | G2→S1 | R1+R2 |

| | | | |
|---|---|---|---|
| Variante 3 | N2→NN1 | S1 | G1+G2 |

Für den Fall der Variante 2 impliziert zum einen die bestätigte Nutzung N2 der zweiten gebührenpflichtigen Verkehrsfläche und die Gebührenerhebung G2 für diese in der zweiten Buchungsphase B2 aufgrund der erfindungsbedingt ausgeschlossenen Ko-Nutzung der ersten und der zweiten gebührenpflichtigen Verkehrsfläche zum einen die Nichtnutzung der ersten gebührenpflichtigen Verkehrsfläche NN1 mit der Folge der Stornierung S1 der Nutzungsberechtigung für die erste gebührenpflichtige Verkehrsfläche allein durch die erfolgte Gebührenerhebung G2 und zum anderen die Gebührenlosigkeit der Buchung der Nutzungsberechtigungen R1 und R2 in der ersten Buchungsphase B1 (keine einfache Gebühr darf am Ende zwei Mal wirksam erhoben worden sein).

Für den Fall der Variante 3, in der trotz der in der zweiten Assoziierungsphase A2 bestätigten Nutzung der zweiten gebührenpflichtigen Verkehrsfläche in der zweiten Buchungsphase B2 keine Erhebung einer Gebühr G2 für die Nutzung der zweiten gebührenpflichtigen Verkehrsfläche vorgesehen ist, impliziert die Gebührenpflicht der ersten und zweiten gebührenpflichtigen Verkehrsfläche die Erhebung von Gebühren G1 und G2 als Maßnahme für die Erwirkung einer Nutzungsberechtigung in der ersten Buchungsphase B1 mit der Folge der Gebührenrückerstattung als Stomierungsmaßnahme für die Nichtnutzung der ersten gebührenpflichtigen Verkehrsfläche aufgrund der erfindungsbedingt ausgeschlossenen Ko-Nutzung der ersten und der zweiten gebührenpflichtigen Verkehrsfläche.

Das erfindungsgemäße Verfahren kann laut Variante 1 in der zweiten Assoziierungsphase A2 darauf beschränkt sein, die zweiten positionsbezogenen Daten mit einer bestätigten Nichtnutzung NN1 wenigstens der ersten gebührenpflichtigen Verkehrsfläche durch das Fahrzeug zu assoziieren und in der zweiten Buchungsphase B2 auf eine Stornierungsphase beschränkt sein, in der wenigstens die erste Nutzungsberechtigung R1 oder G1 für die erste gebührenpflichtige Verkehrsfläche storniert wird. Das ist beispielsweise dann der Fall, wenn in der ersten Buchungsphase B1 die Buchungen der Nutzungsberechtigungen bereits mit der Erhebung von Gebühren G1 und G2 verbunden ist, von denen wenigstens die der ersten gebührenpflichtigen Verkehrsfläche in der zweiten Buchungsphase dadurch storniert wird, dass sie ganz oder teilweise gelöscht, gutgeschrieben oder zurückgezahlt wird oder aber wenn generell sämtliche Nutzungsberechtigungen R1, R2, usw., die in der ersten Buchungsphase für die erste, zweite und gegebenenfalls weitere jeweils nur in zueinander alternativer Weise nutzbare Verkehrsflächen ohne Gebührenerhebung gebucht wurden, in der zweiten Buchungsphase B2 deswegen storniert werden, weil in der zweiten Assoziierungsphase A2 die zweiten positionsbezogenen Daten mit einer bestätigten Nichtnutzung NN1, NN2, usw. aller gebührenpflichtigen Verkehrsflächen, für die in der ersten Buchungsphase B1 jeweils eine gebührenlose Nutzungsberechtigung gebucht wurde, durch das Fahrzeug assoziiert werden.
Ohne ein weiteres Merkmal, das eine Gebührenerhebung G2 für die zweite Verkehrsfläche in irgendeiner der beiden Buchungsphasen B1 oder B2 explizit benennt oder impliziert, ist die Variante 1 die einzige, die - ebenfalls ganz im Sinne der Erfindung - eine Stornierung S1 und S2 aller gebührenpflichtiger Verkehrsflächen in der zweiten Buchungsphase B2 (hier: Stornierungsphase) im Sinne eines ergänzten Merkmals für die Stornierung S2 der zweiten gebührenpflichtigen Verkehrsfläche zulässt, für die in der ersten Buchungsphase Nutzungsberechtigungen R1, R2, usw. oder G1, G2, usw. gebucht wurden.

Das schließt selbstverständlich nicht aus, dass es bei nachgewiesener Nutzung der zweiten Verkehrsfläche zu einer Gebührenerhebung G2 für die zweite Verkehrsfläche kommt, die stets in zu Variante 1 ergänzender Weise nachfolgend der ersten Assoziierungsphase möglich ist, vorzugsweise im Rahmen der Stornierungsphase, die in verallgemeinerter Form als zweite Buchungsphase gilt.
Ebensowenig schließt diese Variante 1 aus, dass bereits in der (ersten) Buchungsphase Gebühren für die erste und die zweite gebührenpflichtige erhoben werden können, wenn diese Gebührenerhebung Voraussetzung für die erste und zweite Nutzungsberechtigung ist oder ihr entspricht, wobei die Erhebung zumindest der Gebühr für die erste gebührenpflichtige Verkehrsfläche in der Stornierungsphase (zweite Buchungsphase) durch eine entsprechende datentechnische Maßnahme unwirksam gemacht werden muss.
Ebensowenig schließen die Varianten 1, 2 und 3 Mischvarianten aus, die in der ersten Buchungsphase die Erhebung von Teilgebühren für die erste und zweite Verkehrsfläche und in der zweiten Buchungsphase bei bestätigter Nutzung N2 die Erhebung einer ergänzenden Teilgebühr für die genutzte zweite gebührenpflichtige Verkehrsfläche und die Erstattung der erhobenen Teilgebühr für die nicht genutzte erste gebührenpflichtige Verkehrsfläche als Stornierungsmaßnahme vorgesehen ist.

Im Sinne dieses Aspektes der Erfindung liegt auch ein Verfahren zur Buchung und Stornierung von Nutzungsberechtigungen in einem System für die Erhebung von Gebühren für die Nutzung von gebührenpflichtigen Verkehrsflächen durch ein Fahrzeug mit folgenden Schritten: a) Erfassung von ersten positionsbezogene Daten des Fahrzeugs, b) Assoziierung der ersten positionsbezogenen Daten mit einer möglichen, bevorstehenden Nutzung wenigstens einer ersten gebührenpflichtigen Verkehrsfläche und mit wenigstens einer möglichen, zur ersten gebührenpflichtigen Verkehrsfläche alternativ bevorstehenden, Nutzung einer zweiten gebührenpflichtigen Verkehrsfläche durch das Fahrzeug, c) Buchung einer ersten auf das Fahrzeug bezogene Nutzungsberechtigung für die erste gebührenpflichtige Verkehrsfläche und einer zweiten auf das Fahrzeug bezogenen Nutzungsberechtigung für die zweite gebührenpflichtige Verkehrsfläche, d) Erfassung von zweiten positionsbezogene Daten des Fahrzeugs e) Assoziierung der zweiten positionsbezogenen Daten mit einer bestätigten Nichtnutzung der ersten gebührenpflichtigen Verkehrsfläche durch das Fahrzeug und f) Stornierung der ersten Nutzungsberechtigung für die erste gebührenpflichtige Verkehrsfläche.

Diese Schritte können beispielsweise erfindungsgemäß in den zuvor genannten Phasen des erfindungsgemäßen Verfahrens auftreten.
Dabei sind die sechs erfindungsgemäßen Phasen a) bis f) vorzugsweise zeitlich - gegebenenfalls teilweise, jedoch nicht vollständig, überlappend - in der Reihenfolge ihrer Zitierung nacheinander durchzuführen. Dies ist jedoch nicht zwingend. Beispielsweise kann die zweite Datenerfassungsphase der ersten Assoziierungsphase zeitlich vorgelagert sein, wenn ansonsten die Reihenfolge wie bevorzugt eingehalten wird: a), d), b), c), e), f). Insbesondere geht jedoch die erste Datenerfassungsphase stets der zweiten Datenerfassungsphase zumindest teilweise derart voran, dass erste positionsbezogene Daten des ersten Assoziierungsschrittes zeitlich vor den zweiten positionsbezogenen Daten des zweiten Assoziierungsschrittes erfasst werden; insbesondere geht die Buchungsphase stets der Stornierungsphase zumindest teilweise derart voran, dass der Buchungsschritt stets vor dem Stornierungsschritt ausgeführt wird.
Unter der Stornierung einer Nutzungsberechtigung wird jede Maßnahme verstanden, die geeignet ist, die Nutzungsberechtigung unwirksam werden zu lassen.

Eine Assoziierung der ersten positionsbezogenen Daten mit einer möglichen, bevorstehenden Nutzung wenigstens einer ersten gebührenpflichtigen Verkehrsfläche durch das Fahrzeug ist gleichbedeutend mit einer Assoziierung der ersten positionsbezogenen Daten mit wenigstens einer ersten gebührenpflichtigen Verkehrsfläche hinsichtlich einer möglichen, bevorstehenden Nutzung dieser ersten gebührenpflichtigen Verkehrsfläche durch das Fahrzeug.
Eine Assoziierung der ersten positionsbezogenen Daten mit einer möglichen, zur ersten gebührenpflichtigen Verkehrsfläche alternativ bevorstehenden, Nutzung einer zweiten gebührenpflichtigen Verkehrsfläche durch das Fahrzeug ist gleichbedeutend mit einer Assoziierung der ersten positionsbezogenen Daten mit wenigstens einer zweiten gebührenpflichtigen Verkehrsfläche hinsichtlich einer möglichen, bevorstehenden Nutzung dieser ersten gebührenpflichtigen Verkehrsfläche durch das Fahrzeug in zur möglichen bevorstehenden Nutzung alternativer Weise.
Alternativ nutzbare Verkehrsflächen sind solche, die von einem bestimmten Ort aus nur in alternativer Weise angefahren werden können. Beispielsweise kann am Verzweigungspunkt einer Straßenverzweigung mit einer von dem Verzweigungspunkt ausgehenden ersten Straßen und einer vom dem Verzweigungspunkt ausgehenden zweiten Straße die zweite Straßen dann nicht benutzt werden, wenn die erste Straße benutzt wird. In diesem Sinne sind die erste Straße und die zweite Straße alternativ nutzbare Verkehrsflächen.
In gleicher Weise zeichnet die alternative Nutzbarkeit zweier oder mehrerer Verkehrsflächen aus, dass die Verkehrsflächen über eine gemeinsame Zufahrt verfügen, von der aus nur entweder die erste oder die zweite Verkehrsfläche beziehungsweise überhaupt nur eine der mehreren Verkehrsfläche befahren werden kann.
Erfindungswesentlich ist die gleichrangige Buchung von Nutzungsberechtigungen (mit oder ohne Gebührenerhebung) für wenigstens zwei gebührenpflichtige Verkehrsflächen, deren konsekutive Befahrung aufgrund ihrer Kopplung an ein- und dieselbe Zufahrt ohne die erneute Nutzung dieser Zufahrt ausgeschlossen ist: Nur wenn die Zufahrt zur ersten und zweiten gebührenpflichtigen Verkehrsfläche ein zweites Mal passiert wird, kann der Fahrer erneut zwischen einer Nutzung der ersten und der zweiten gebührenpflichtigen Verkehrsfläche wählen.
Alternativ nutzbar ist folglich in dem Sinne zu verstehen, dass eine Nutzung ausschließlich in alternativer Weise - entweder die erste gebührenpflichtige Verkehrsfläche oder die zweite gebührenpflichtige Verkehrsfläche - möglich ist. Daraus folgt auch, dass eine Feststellung der Nutzung der zweiten gebührenpflichtigen Verkehrsfläche gleichbedeutend ist mit der Feststellung der Nichtnutzung der ersten gebührenpflichtigen Verkehrsfläche. Umgekehrt gilt dies nicht: Die Feststellung der Nichtnutzung der ersten gebührenpflichtigen Verkehrsfläche lässt die Frage der Nutzung der zweiten gebührenpflichtigen Verkehrsfläche so lange unbeantwortet, wie nicht die Nichtnutzung oder Nutzung der zweiten gebührenpflichtigen Verkehrsfläche festgestellt wurde.

Für gebührenpflichtige Parkflächen innerhalb eines Stadtzentrums kann diese Zufahrt im Sinne der Erfindung durch eine das Stadtzentrum umgebende - vorzugsweise geschlossene - äußere Stadtgrenze und mehrere, von der äußeren Stadtgrenze umfasste - vorzugsweise geschlossene - innere Grenzen, die die verschiedenen Parkflächen umgeben, bereitgestellt werden, die jeweils in Form von geographischen Koordinaten modelliert sein können.
Für gebührenpflichtige Streckenabschnitte von Straßen kann diese Zufahrt im Sinne der Erfindung durch eine, die gemeinsame Zufahrt der mehreren Streckenabschnitte umgebende - vorzugsweise geschlossene - Zufahrtsgrenze bereitgestellt werden, die in Form geographischen Koordinaten modelliert sein können, wobei die Zufahrtsgrenze vorzugsweise alle gebührenpflichtigen Streckenabschnitte, die von der Zufahrt ausgehen, schneidet.

In einem Kanten-Knoten-Modell eines Straßennetzes von gebührenpflichtigen Streckenabschnitten als gebührenpflichtige Verkehrsflächen bilden alternativ nutzbare Streckenabschnitte Kanten, die aus einem gemeinsamen Knoten einer Zufahrt hervorgehen. Dabei gibt es zwei Klassen alternativ nutzbarer Streckenabschnitte: Jene die eine Verzweigung auf unterschiedliche Fahrtrichtungen (Autobahndreieck: zwei alternativ nutzbare Streckenabschnitte, Autobahnkreuz: drei alternativ nutzbare Streckenabschnitte) an einem Knoten mit drei Kanten (Autobahndreieck) oder vier Kanten (Autobahnkreuz) repräsentieren und jene, die die Weiterfahrt in Fahrtrichtung oder die Rückfahrt entgegen der Fahrtrichtung an einem Knoten mit zwei Kanten und einer Wendemöglichkeit für das Fahrzeug repräsentieren. Beide Klassen können an einem Autobahnkreuz- oder Dreieck gemeinsam auftreten, wenn sich dort für das Fahrzeug außer der routenmäßigen Verzweigung auch die Möglichkeit des Wendemanövers mit der Konsequenz einer Rückfahrt entgegen der Richtung bietet, aus der es gekommen ist. In dieser Mischform gibt es an einem Autobahndreieck drei alternativ nutzbare Streckenabschnitte und an einem Autobahnkreuz vier alternativ nutzbare Streckenabschnitte.

Informationstechnisch lässt sich die Assoziierung der ersten Positionsdaten mit mehreren alternativ nutzbaren gebührenpflichtigen Streckenabschnitten wie folgt darstellen: Alle gebührenpflichtigen Streckenabschnitte (alle Kanten) eines Straßennetzes werden hinsichtlich ihrer möglichen alternativen Nutzung bezüglich ihrer einen gemeinsamen Anschlussstelle (einem gemeinsamen Quell-Knoten) zugeordnet. Man erhält dann für jede Anschlussstelle Qᵢ, alle von ihm ausgehenden gebührenpflichtigen Streckenabschnitte K_{i,j}, die datentechnisch als eindeutige Streckenabschnittskennungen mit der eindeutigen Anschlussstellenkennung der Anschlussstelle Qi verknüpft sind.
Im Rahmen der Assoziierung der ersten Positionsdaten mit den Streckenabschnitten (Kanten) K_{i,j} wird aufgrund der ersten Positionsdaten die den ersten Positionsdaten geographisch oder infrastrukturtechnisch nächstliegende Anschlussstelle (Knoten) Qᵢ erkannt, die datentechnisch verknüpft ist mit allen ihr zugeordneten von ihr ausgehenden gebührenpflichtigen Streckenabschnitten (Kanten) K_{i,j}. Alle gebührenpflichtigen Streckenabschnitte K_{i,j}, die als Kanten von einem solchen erkannten gemeinsamen Knoten Qi des Netzes von gebührenpflichtigen Streckenabschnitten ausgehen, gelten als alternativ nutzbar; diese werden mit den ersten Positionsdaten assoziiert und für diese werden die entsprechenden Nutzungsberechtigungen gebucht.
Daher ist die Buchung von Nutzungsberechtigungen für mehrere gebührenpflichtige, vorzugsweise alle gebührenpflichtigen, Streckenabschnitte, die mit einer gemeinsamen Anschlussstelle (Zufahrt oder Auffahrt) verknüpft sind, ein wesentliches Merkmal der Erfindung.

Mit einer solchen (Positiv-)Assoziierung kann von allen gebührenpflichtigen Verkehrsflächen, für die Nutzungsberechtigungen buchbar sind und die von dem Fahrzeug nutzbar sind, wenigstens eine erste gebührenpflichtige Verkehrsfläche oder eine erste Gruppe mehrerer gebührenpflichtiger Verkehrsflächen umfassend eine erste gebührenpflichtige Verkehrsfläche und eine zweite, alternativ zur ersten nutzbare, gebührenpflichtige Verkehrsfläche für die Buchung von entsprechenden Nutzungsberechtigungen ausgewählt werden, wobei die erste und die zweite Verkehrsfläche von einer ersten Position des Fahrzeugs aus, die durch die ersten positionsbezogenen Daten repräsentiert wird, nächstliegend gegenüber den anderen nicht assoziierten gebührenpflichtigen Verkehrsflächen befahrbar sind.

Eine Assoziierung von zweiten positionsbezogenen Daten mit einer bestätigten Nichtnutzung der ersten gebührenpflichtigen Verkehrsfläche durch das Fahrzeug, ist gleichbedeutend mit einer Assoziierung der zweiten positionsbezogenen Daten mit der ersten gebührenpflichtigen Verkehrsfläche hinsichtlich einer bestätigten Nichtnutzung dieser ersten gebührenpflichtigen Verkehrsfläche durch das Fahrzeug.
Zusätzlich können die zweiten positionsbezogenen Daten auch mit einer bestätigten Nichtnutzung der zweiten gebührenpflichtigen Verkehrsfläche durch das Fahrzeug assoziiert werden, nämlich dann wenn das Fahrzeug nachweislich keine der beiden, ersten und zweiten, Verkehrsflächen befahren hat. Aufgrund des alternativen Nutzungscharakters schließt eine (gegebenenfalls sogar nachgewiesene) Nutzung der zweiten gebührenpflichtigen Verkehrsfläche die Nutzung der ersten gebührenpflichtigen Verkehrsfläche aus, so dass die Stornierung der Nutzungsberechtigung der ersten gebührenpflichtigen Verkehrsfläche mangels Nutzung aus mautrechtlicher Sicht obligatorisch ist, soweit eine unwiderrufliche Gebührenerhebung nutzungsabhängig ist.

Mit einer solchen (Negativ-)Assoziierung kann von der ersten Gruppe von gebührenpflichtigen Verkehrsflächen, für die eine Nutzungsberechtigung gebucht wurde und die von dem Fahrzeug noch nicht befahren wurden, wenigstens die erste gebührenpflichtige Verkehrsfläche oder eine zweite Gruppe mehrerer gebührenpflichtiger Verkehrsflächen umfassend die erste gebührenpflichtige Verkehrsfläche zur Stornierung der vorliegenden Nutzungsberechtigung(en) ausgewählt werden, die von einer zweiten Position des Fahrzeugs aus, die durch die zweiten positionsbezogenen Daten repräsentiert wird, nicht mehr befahrbar ist, ohne dass eine erneute Positiv-Assoziierung von neuen ersten positionsbezogenen Daten mit der ersten gebührenpflichtigen Verkehrsfläche hinsichtlich einer möglichen, bevorstehenden Nutzung dieser ersten gebührenpflichtigen Verkehrsfläche durch das Fahrzeug erfolgt.

Eine mögliche, bevorstehende Nutzung einer gebührenpflichtigen Verkehrsfläche heißt (a), dass die Nutzung dieser Verkehrsfläche noch nicht stattgefunden hat und (b) die Nutzung dieser Verkehrsfläche beispielsweise aufgrund der Nähe des Fahrzeugs zu der Verkehrsfläche nicht innerhalb eines Zeitraums von vorgebbarer Dauer (zum Beispiel eine Minute für zwei Kilometer Abstand des Fahrzeugs zu der Verkehrsfläche) ausgeschlossen werden kann.
Eine mögliche, bevorstehende Nutzung entweder einer ersten gebührenpflichtigen Verkehrsfläche oder einer zweiten gebührenpflichtigen Verkehrsfläche bedingt damit erfindungsgemäß die Assoziierung von ersten positionsbezogenen Daten mit einer ersten gebührenpflichtigen Verkehrsfläche und einer zweiten Verkehrsfläche, von denen keine eine Verkehrsfläche ist, auf der sich das Fahrzeug zum Zeitpunkt der Assoziierung bereits befindet, sondern jeweils eine Verkehrsfläche ist, in deren Nähe sich das Fahrzeug befindet; sprich: es werden die ersten positionsbezogenen Daten mit wenigstens einer ersten gebührenpflichtigen Verkehrsfläche und einer zweiten gebührenpflichtigen Verkehrsfläche assoziiert, deren alternative Nutzung bevorsteht und im Rahmen eines vorgebbaren Zeitfensters als möglich eingestuft ist.

Eine bestätigte Nichtnutzung der gebührenpflichtigen Verkehrsfläche bedeutet (a) dass eine Nutzung dieser Verkehrsfläche tatsächlich nicht stattgefunden hat und (b) die Nutzung dieser Verkehrsfläche beispielsweise aufgrund der großen Entfernung des Fahrzeugs von der Verkehrsfläche innerhalb eines Zeitraums von vorgebbarer Dauer (zum Beispiel eine Minute für drei Kilometer Abstand des Fahrzeugs zu der Verkehrsfläche) ausgeschlossen werden kann.
Eine bestätigte Nichtnutzung der ersten gebührenpflichtigen Verkehrsfläche bedingt damit erfindungsgemäß die Assoziierung von zweiten positionsbezogenen Daten mit der gebührenpflichtigen Verkehrsfläche, die keine Verkehrsfläche ist, auf der sich das Fahrzeug seit der Buchung der Nutzungsberechtigung für diese erste Verkehrsfläche befunden hat, sondern eine Verkehrsfläche ist, von der das Fahrzeug weit entfernt ist; sprich: es werden die zweiten positionsbezogenen Daten mit der ersten gebührenpflichtigen Verkehrsfläche assoziiert, deren Nutzung nicht stattgefunden hat und im Rahmen eines vorgebbaren Zeitfensters als ausbleibend eingestuft wird.

Vorzugsweise repräsentieren die zweiten positionsbezogenen Daten zumindest teilweise einen anderen (zweiten) Ort oder ein anderes (zweites) Gebiet, das von den zweiten positionsbezogenen Daten zumindest einige geographisch einschließt, als der (erste) Ort, der durch zumindest einige der ersten positionsbezogenen Daten repräsentiert wird oder das (erste) Gebiet, das zumindest einige der ersten positionsbezogenen Daten geographisch einschließt.

Im Prinzip sind alle alternativ nutzbaren gebührenpflichtigen Verkehrsflächen, für die Nutzungsberechtigungen gebucht wurden und die aber nachweislich nicht genutzt wurden, erfindungsgemäße erste gebührenpflichtige Verkehrsflächen, deren Nutzungsberechtigung storniert wird. Erfindungsgemäß kann es unter den alternativ nutzbaren gebührenpflichtigen Verkehrsflächen maximal eine, nämlich die zweite, gebührenpflichtige Verkehrsfläche geben, deren Nutzung tatsächlich erfolgen kann und deren Nutzung die Nutzung der übrigen ersten gebührenpflichtigen Verkehrsflächen ausschließt.
Da zum Zeitpunkt der Buchung jedoch in der Regel nicht absehbar ist, ob, und wenn ja, welche der gebührenpflichtigen Verkehrsflächen nach der Buchung genutzt wird, ist im Buchungsumfang neben einer oder mehreren ersten gebührenpflichtigen Verkehrsflächen immer genau eine zweite gebührenpflichtige Verkehrsfläche enthalten, die - falls eine der gebührenpflichtigen Verkehrsflächen genutzt wird - als diejenige definiert ist, die genutzt wird und für die bei einer Nutzung unwiderruflich eine Gebühr erhoben wird oder bleibt. Das schließt nicht aus, dass auch die Buchung der zweiten gebührenpflichtigen Verkehrsfläche storniert wird, wenn auch sie - wie die übrigen ersten gebührenpflichtigen Verkehrsflächen - nachweislich nicht genutzt wurde.
Eine Abweichung von der Regel der mangelnden Absehbarkeit von einer oder keiner Nutzung der zweiten gebührenpflichtigen Verkehrsfläche ist beispielsweise an den Verkehrsknotenpunkten von gebührenpflichtigen Streckenabschnitten gegeben, an denen der Nutzer mit seinem Fahrzeug das gebührenpflichtige Streckennetz nicht verlassen kann, sondern stets - unabhängig davon wie er sich entscheidet, am Verkehrsknotenpunkt weiterzufahren - eine der gebuchten Streckenabschnitte befährt. Diese Situation ist typisch für Autobahnkreuze, an denen in der Regel drei erste gebührenpflichtige Streckenabschnitte vorliegen (beispielsweise in Fahrtrichtung links, rechts und zurück) und ein zweiter gebührenpflichtiger Streckenabschnitt (in diesem Fall in Fahrtrichtung geradeaus).
Jedenfalls werden alle ersten gebuchten gebührenpflichtigen Verkehrsflächen erfindungsgemäß obligatorisch storniert; für die eine zweite gebuchte gebührenpflichtige Verkehrsfläche besteht jedoch in der ersten Assoziationsphase die Ambivalenz von möglicher Nutzung und möglicher Nichtnutzung bis zur tatsächlichen Feststellung der Nutzung oder Nichtnutzung in der zweiten Assoziationsphase.
Insofern wird erfindungsinhärent erst im Nachhinein in der zweiten Assoziierungsphase bei festgestellter Nutzung klar, welche der gebuchten gebührenpflichtigen Verkehrsflächen eine erste ist und welche die zweite; bei keiner Nutzung der dieser Verkehrsflächen ist die Aufteilung in erste und zweite gebührenpflichtige Verkehrsflächen willkürlich.
Das schließt im Übrigen nicht aus, dass zur einen zweiten gebührenpflichtigen Verkehrsfläche weitere zweite gebührenpflichtige Verkehrsflächen gebucht werden können, die ebensowenig wie die erste(n) genutzt werden. Der Unterschied zwischen ersten und zweiten Verkehrsflächen besteht erfindungsgemäß darin, dass erste gebührenpflichtige Verkehrsflächen storniert werden müssen, von zweiten gebührenpflichtige Verkehrsflächen alle bis auf eine letzte ebenfalls storniert werden müssen, die letzte aber diejenige ist, für die eine Nutzung gegebenenfalls bestätigt wird, mit der Folge, dass eine Gebühr für ihre Nutzung erhoben wird oder bleibt. Mit der einmaligen Nutzung dieser (letzten) zweiten gebührenpflichtigen Verkehrsfläche erschöpft sich auch die Berechtigung zur einmaligen Nutzung dieser gebührenpflichtigen Verkehrsfläche, was im Effekt auch einer Stornierung - wenn auch begleitet von einer wirksamen Gebührenerhebung - gleichkommt.

Ausführungsformen des erfindungsgemäßen Verfahrens sehen vor, dass die Buchungsphase das Erzeugen eines Buchungsbestätigungssignals beinhaltet oder nach sich zieht.

Damit kann der Nutzer über den Erfolg der Buchung einer Nutzungsberechtigung für die erste Verkehrsfläche informiert werden, bevor er diese befährt. Solange die Buchungsbestätigung ausbleibt, wird er davon absehen, die erste oder die zweite Verkehrsfläche rechtswidrig zu befahren. Diese Maßnahme bewahrt ihn vorteilhaft davor, unwissentlich eine Ordnungswidrigkeit zu begehen.
Ausführungsformen des erfindungsgemäßen Verfahrens sehen vor, dass die Stornierungsphase das Erzeugen eines Stornierungsbestätigungssignals beinhaltet oder nach sich zieht.
Damit kann der Nutzer über den Erfolg der Stornierung einer Nutzungsberechtigung für die erste Verkehrsfläche informiert werden, bevor er diese befahren hat. Diese Meldung bestätigt ihm, dass für die Nutzungsberechtigung der ersten Verkehrsfläche keine Kosten angefallen sind und erleichtert es ihm, eine spätere Gebührenaufstellung nachzuvollziehen und auf ihre Richtigkeit zu überprüfen. Ferner ist der Nutzer darüber informiert, dass fortan eine erneute Nutzungsberechtigung für die erste Verkehrsfläche zu buchen ist, wenn er diese später dann doch benutzen möchte.

Zur Durchführung des Buchungs- und Stornierungsverfahrens gemäß dem ersten Aspekt der Erfindung geeignete technische Mittel lassen sich eine vom Fahrzeug mitgeführte Positionsbestimmungseinrichtung, ein vom Fahrzeug mitgeführter oder außerhalb des Fahrzeugs angeordneter Prozessor, und ein vom Fahrzeug mitgeführter oder außerhalb des Fahrzeugs angeordneter Datenspeicher benennen. Dabei ist der Prozessor sowohl mit der Positionsbestimmungseinrichtung als auch mit dem Datenspeicher zumindest zeitweise datentechnisch gekoppelt, indem er beispielsweise zumindest zeitweise in wenigstens einer drahtgebundenen und/ oder drahtlosen Kommunikationsverbindung mit ihnen steht. Vorzugsweise werden in der ersten Datenerfassungsphase die ersten positionsbezogenen Daten mittels wenigstens einer vom Fahrzeug mitgeführten Positionsbestimmungseinrichtung erfasst.
Vorzugsweise werden auch in der zweiten Datenerfassungsphase die zweiten positionsbezogenen Daten mittels der vom Fahrzeug mitgeführten Positionsbestimmungseinrichtung erfasst.
Vorzugsweise weist dazu die Positionsbestimmungsvorrichtung einen GNSS-Empfänger auf, der dazu ausgebildet ist, zur Positionsbestimmung geeignete Signale von Satelliten eines Globalen Navigationssatellitensytems (GNSS) zumindest während der ersten und vorzugsweise auch währende der zweiten Datenerfassungsphase zu empfangen, aus denen von der Positionsbestimmungseinrichtung zumindest erste und vorzugsweise auch zweite positionsbezogene Daten erzeugt werden.

Ist an der Durchführung des erfindungsgemäßen Verfahrens ausschließlich eine vom Fahrzeug mitgeführte mobile Einrichtung beteiligt, so kann ein von ihr umfasster Prozessor zur Durchführung des erfindungsgemäßen Verfahrens ein Computerprogrammprodukt ausführen, das gekennzeichnet ist durch Mittel zur Ausführung folgender Anweisungen: (a) Empfang von ersten positionsbezogenen Daten einer von einer mobilen Einrichtung umfassten Positionsbestimmungseinrichtung, (b) Assoziierung der ersten positionsbezogenen Daten der Positionsbestimmungseinrichtung mit einer möglichen Nutzung wenigstens einer ersten gebührenpflichtigen Verkehrsfläche und mit einer zur Nutzung der ersten gebührenpflichtigen Verkehrsfläche alternativ möglichen Nutzung einer zweiten gebührenpflichtigen Verkehrsfläche durch das Fahrzeug, (c) Speichern einer ersten Nutzungsberechtigung und/ oder einer ersten Gebühr für die erste gebührenpflichtige Verkehrsfläche und einer zweiten Nutzungsberechtigung und/ oder einer zweiten Gebühr für die zweite gebührenpflichtige Verkehrsfläche in einem ersten Datenspeicher der mobilen Einrichtung, (d) Empfang von zweiten positionsbezogenen Daten der Positionsbestimmungseinrichtung, (e) Assoziierung der zweiten positionsbezogenen Daten der Positionsbestimmungseinrichtung mit einer Nichtnutzung der ersten gebührenpflichtigen Verkehrsfläche durch das Fahrzeug und (f) Lösehen der ersten Nutzungsberechtigung und/ oder ersten Gebühr für die erste gebührenpflichtige Verkehrsfläche aus dem ersten Datenspeicher und/ oder Speichern einer Stornierung der ersten Nutzungsberechtigung und/ oder einer zumindest teilweisen Gutschrift auf die erste Gebühr in dem ersten oder einem zweiten Datenspeicher der mobilen Einrichtung.

Vorzugsweise werden in der ersten Assoziierungsphase die ersten positionsbezogenen Daten mittels wenigstens eines positionsbezogene Daten verarbeitenden ersten Prozessors mit einer möglichen, bevorstehenden Nutzung wenigstens einer ersten Verkehrsfläche und der alternativ zur ersten Verkehrsfläche möglichen, bevorstehenden Nutzung einer zweiten Verkehrsfläche durch das Fahrzeug assoziiert.
Vorzugsweise umfasst das Computerprogramm Mittel zum Zugriff auf eine Datenbank, in der die erste und die zweite alternativ nutzbare gebührenpflichtige Verkehrsfläche datentechnisch in einem Datensatz miteinander verknüpft sind. Vorzugweise sind in dieser Datenbank die erste und die zweite alternativ nutzbare gebührenpflichtige Verkehrsfläche mit einem Primärschlüssel verknüpft, der eine der ersten und der zweiten Verkehrsfläche gemeinsame Anschlussstelle repräsentiert.

Vorzugsweise werden in der zweiten Assoziierungsphase die zweiten positionsbezogenen Daten mittels des ersten oder eines positionsbezogene Daten verarbeitenden zweiten Prozessors mit einer bestätigten Nichtnutzung der ersten Verkehrsfläche durch das Fahrzeug assoziiert.
Beispielsweise vergleicht der Prozessor in der ersten Assoziierungsphase die ersten positionsbezogenen Daten mit Ortsdaten, die gebührenpflichtige Verkehrsflächen repräsentieren oder mit diesen verknüpft sind, um im Ergebnis des Vergleichs festzustellen, ob die ersten positionsbezogenen Daten einer Annäherung an eine erste gebührenpflichtige Verkehrsfläche mit Unterschreitung eines vorgebbaren Minimalabstandes des Fahrzeugs zu der ersten gebührenpflichtigen Verkehrsfläche entsprechen. Fällt das Ergebnis zugunsten einer im Wege dieses Vergleichs bestimmten Annäherung an die erste gebührenpflichtige Verkehrsfläche aus, so erzeugt der Prozessor ein Signal, das die mögliche Nutzung der identifizierten ersten gebührenpflichtigen Verkehrsfläche signalisiert.
Beispielsweise vergleicht der Prozessor in der zweiten Assoziierungsphase die zweiten positionsbezogenen Daten mit Ortsdaten, die die erste gebührenpflichtige Verkehrsflächen repräsentieren oder mit diesen verknüpft sind, um im Ergebnis des Vergleichs festzustellen, ob die zweiten positionsbezogenen Daten einer Entfernung von der ersten gebührenpflichtigen Verkehrsfläche mit Überschreitung eines vorgebbaren Maximalabstandes des Fahrzeugs zu der ersten gebührenpflichtigen Verkehrsfläche entsprechen. Fällt das Ergebnis zugunsten einer im Wege dieses Vergleichs bestimmten Entfernung von der ersten gebührenpflichtigen Verkehrsfläche aus, so erzeugt der Prozessor ein Signal, das die bestätigte Nichtnutzung der ersten gebührenpflichtigen Verkehrsfläche signalisiert.

Gebührenpflichtige Verkehrsflächen, insbesondere ihre Anfangsbereiche, Anschlussstellen, Zufahrten oder Auffahrten, können durch Erkennungsobjekte repräsentiert sein.
Erkennungsobjekte sind geometrische Objekte, die durch Ortskoordinaten (angegeben zum Beispiel in Form von Längen- und Breitengraden) eines geometrischen Punktes oder mehrerer geographischer Punkte aufgespannt, gebildet oder definiert werden, gegebenenfalls unter Hinzunahme von skalaren Parametern wie Abstand, Länge oder Radius.
Eine gerade Linie L als Erkennungsobjekt kann durch zwei Punkte (x1, y1) und (x2, y2) gegeben sein, durch die die Linie geht. Die Längenbegrenzung der Linie kann durch ebenfalls diese Punkte gegeben sein, unter der Maßgabe dass diese Punkte die beiden Endpunkte der Linie darstellen.

Ein Kreis K als Erkennungsobjekt kann durch einen Ursprungspunkt (x0, y0) - beispielsweise an der Anschlussstelle, von der aus die erste und die zweite gebührenpflichtige Verkehrsfläche in alternativer Weise befahrbar sind - in Verbindung mit einem Radius r des Kreises gegeben sein.
Ein n-eckiges Polygon P kann durch n Punkte (x1, y1) ... (xn, yn) gegeben sein, die in der vorgegebenen Reihenfolge zur Bildung der Kanten miteinander zu verbinden sind unter der Maßgabe der Bildung des letzten Polygonzuges durch Verbindung der Punkte (xn, yn) und (x1, y1). Ein Beispiel für ein solches Polygon ist ein Rechteck.

Beispielsweise können in einem Datenspeicher, auf den ein Prozessor Zugriff zur Assoziation von positionsbezogenen Daten mit gebührenpflichtigen Verkehrsflächen nimmt, Verkehrsflächen-Erkennungsdatensätze (V, E, x1, y1, ...) vorliegen, die ein Verkehrsflächen-Datenelement V zur Identifizierung der jeweiligen Verkehrsfläche, einen Bezeichner E zur Festlegung des für die Verkehrsfläche verwendeten Erkennungsobjektes sowie Ortskoordinaten und gegebenenfalls skalare Parameter der geographischen Punkte umfassen, die das Erkennungsobjekt beschreiben.
Dabei können durchaus für eine Verkehrsfläche mehrere Verkehrsflächen-Datensätze vorliegen, weil für die Verkehrsfläche mehrere Erkennungsobjekte (zum Beispiel: Linien) vorliegen.
Für eine Anschlussstelle Q mit mehreren, in alternativer Weise von Q aus befahrbaren, angeschlossenen Verkehrsflächen Vⱼ kann alternativ dazu ein erster Datensatz vom Typ Anschlussstellen-Erkennungsobjekt (Q, E, x1, y1, ...) vorliegen, mittels dessen das Herannahen des Fahrzeugs an die Anschlussstelle Q erkannt werden kann, sowie ein zweiter Datensatz vom Typ Netzknoten (Q, V₁, V₂, ...), mittels dessen die von der Anschlussstelle Q aus in alternativer Weise befahrbare erste gebührenpflichtige Verkehrsfläche V₁ und zweite gebührenpflichtige Verkehrsfläche V₂ und gegebenenfalls eine oder mehrere weitere gebührenpflichtige Verkehrsflächen repräsentiert werden, für die jeweils eine Nutzungsberechtigung zu buchen ist.

Ferner kann bezüglich ein und derselben Verkehrsfläche hinsichtlich der möglichen Nutzung, der bestätigten Nutzung und der bestätigten Nichtnutzung mit jeweils durch unterschiedliche Erkennungsobjekte voneinander verschiedenen Verkehrsflächen-Datensätzen unterschieden werden, die sich durch ein weiteres Attribut, das Nutzungsattribut N, auszeichnen können (beispielsweise N=0 für mögliche Nutzung, N=1 für bestätigte Nutzung und N=2 für bestätigte Nichtnutzung).
Ein- und dasselbe Erkennungsobjekt kann sowohl die Nutzung einer zweiten gebührenpflichtigen Verkehrsfläche bestätigen als auch die Nichtnutzung der ersten gebührenpflichtigen Verkehrsfläche sowie die mögliche, bevorstehende Nutzung einer dritten und/ oder vierten Verkehrsfläche repräsentieren.

In der ersten Assoziierungsphase kann - zum Beispiel mittels des Prozessors - durch Datenvergleich geprüft werden, ob die ersten positionsbezogenen Daten einer Position (a1, b1), angegeben in Längen- und Breitengraden, des Fahrzeugs entsprechen, die (a) innerhalb eines Erkennungsobjektes (Polygon, Kreis) liegt, (b) auf einer bestimmten Seite innerhalb eines bestimmten Abstandes von dem Erkennungsobjekt (Linie) oder aber, ob (c) die ersten positionsbezogenen Daten mehreren Positionen (a1, b1) ... (ai, bi) des Fahrzeugs entsprechen, deren Interpolation oder geglättete Bewegungslinie ein Erkennungsobjekt von außen nach innen (Kreis, Polygon) oder (d) in einer bestimmten Richtung (Linie) schneiden. Ist eine solche Prüfung positiv, so gilt die entsprechende erste gebührenpflichtige Verkehrsfläche vermittels ihres Verkehrsflächen-Datensatzes als durch die positionsbezogenen Daten hinsichtlich einer möglichen Nutzung assoziiert.
Über eine Verknüpfung innerhalb des Verkehrsflächen-Erkennungsdatensatzes können weitere alternativ zur ersten Verkehrsfläche nutzbare Verkehrsflächen einschließlich der zweiten gebührenpflichtigen Verkehrsfläche parallel miterkannt werden. Über eine Verknüpfung der ersten Verkehrsfläche mit weiteren alternativ zur ersten Verkehrsfläche nutzbaren Verkehrsflächen einschließlich der zweiten gebührenpflichtigen Verkehrsfläche in einem separaten Datensatz außerhalb des Verkehrsflächen-Erkennungsdatensatzes kann die alternativ zur ersten Verkehrsfläche nutzbaren weiteren Verkehrsflächen einschließlich der zweiten gebührenpflichtigen Verkehrsfläche seriell miterkannt werden.

In der zweiten Assoziierungsphase kann - zum Beispiel mittels des Prozessors - durch Datenvergleich geprüft werden, ob die zweiten positionsbezogenen Daten einer Position (c1, d1), angegeben in Längen- und Breitengraden, des Fahrzeugs entsprechen, die (a) außerhalb eines Erkennungsobjektes (Polygon, Kreis) liegt, (b) auf einer bestimmten Seite außerhalb eines bestimmten Abstandes von dem Erkennungsobjekt (Linie) oder aber, ob (c) die ersten positionsbezogenen Daten mehreren Positionen (c1, d1) ... (ci, di) des Fahrzeugs entsprechen, deren Interpolation oder geglättete Bewegungslinie ein Erkennungsobjekt von innen nach außen (Kreis, Polygon) oder (d) in einer bestimmten Richtung (Linie) schneiden. Ist eine solche Prüfung positiv, so gilt die entsprechende erste gebührenpflichtige Verkehrsfläche vermittels ihres Verkehrsflächen-Datensatzes als durch die positionsbezogenen Daten hinsichtlich einer bestätigten Nichtnutzung assoziiert.

Die Buchung einer Nutzungsberechtigung ist gleichbedeutend mit einer Registrierung, einer Anmeldung, einer Hinzufügung, einer Erzeugung, einer Hinterlegung und einer Bildung dieser Nutzungsberechtigung. Sie kann durch die Schaffung eines Datenelementes eines, mehrere Datenelemente umfassenden, Datensatzes mit einem der Nutzungsberechtigung entsprechenden Inhalt in einem Datenspeicher und/ oder einer Datenbank erfolgen.
Vorzugsweise wird in der Buchungsphase eine erste auf das Fahrzeug bezogene Nutzungsberechtigung für die erste gebührenpflichtige Verkehrsfläche und eine zweite auf das Fahrzeug bezogene Nutzungsberechtigung für die zweite gebührenpflichtige Verkehrsfläche gebucht, indem ein die Nutzungsberechtigung für die erste gebührenpflichtige Verkehrsfläche repräsentierender erster Buchungsdatensatz und ein die Nutzungsberechtigung für die zweite gebührenpflichtige Verkehrsfläche repräsentierender zweiter Buchungsdatensatz in wenigstens einem Datenspeicher gespeichert wird. Diese Speicherung wird vorzugsweise durch den Prozessor gesteuert, durch den in der ersten Assoziierungsphase die erste und die zweite gebührenpflichtige Verkehrsfläche bestimmt wurde.
Ein jeder solcher Buchungsdatensatz kann beispielsweise das Verkehrsflächen-Datenelement umfassen, das die jeweilige gebührenpflichtige Verkehrsfläche identifiziert, und ein Zeit-Datenelement, das den Gültigkeitsbeginn der Nutzungsberechtigung nach Datum und Uhrzeit spezifiziert.
Alternativ dazu kann ein einziger Buchungsdatensatz die Nutzungsberechtigung sowohl für die erste gebührenpflichtige Verkehrsfläche als auch für die zweite gebührenpflichtige Verkehrsfläche repräsentieren.
Ein solcher, anderer Buchungsdatensatz umfasst beispielsweise dazu nur die Anschlussstelle Q als Identifikator für alle gebührenpflichtigen Verkehrsflächen, die von der Anschlussstelle Q ausgehen, wodurch die Buchung der ersten, der zweiten und gegebenenfalls weiterer alternativ nutzbarer Verkehrsflächen impliziert ist.
Erfolgt die Speicherung des ersten und des zweiten oder des anderen Buchungsdatensatzes in einem von dem Fahrzeug mitgeführten und damit dem Fahrzeug zugeordneten Datenspeicher, so ist die Nutzungsberechtigung ohne weiteres an sich schon fahrzeugbezogen. Erfolgt die Speicherung des jeweiligen Buchungsdatensatzes in einem außerhalb des Fahrzeugs angeordneten Datenspeicher, der auch für die Speicherung von Nutzungsberechtigungen anderer Fahrzeuge verwendet wird, so wird die Nutzungsberechtigung dadurch fahrzeugbezogen, dass der erste und de zweite oder der andere Buchungsdatensatz wenigstens ein Fahrzeug-Datenelement aufweist oder mit einem solchen verknüpft ist, das das Fahrzeug identifiziert.

Die Stornierung einer Nutzungsberechtigung ist gleichbedeutend mit einer Deregistrierung, einer Abmeldung, einer Entfernung, einer Vernichtung, einer Annullierung und einer Löschung dieser Nutzungsberechtigung. Sie kann durch die Beseitigung des gebuchten Datenelementes oder Datensatzes mit dem der Nutzungsberechtigung entsprechenden Inhalt aus dem Datenspeicher und/ oder der Datenbank erfolgen oder durch die Verknüpfung eines Ungültigkeitsvermerks mit dem gebuchten Datenelement oder Datensatz des der Nutzungsberechtigung entsprechenden Inhalts.
Vorzugsweise wird in der Stornierungsphase die erste Nutzungsberechtigung für die erste gebührenpflichtige Verkehrsfläche storniert, indem der in der Buchungsphase in den Datenspeicher gespeicherte erste Buchungsdatensatz gelöscht oder geändert wird. Eine solche Änderung kann darin bestehen, dass der erste Buchungsdatensatz aus dem Datenspeicher gelöscht wird oder mit einem Ungültigkeitsvermerk versehen wird. Ein Ungültigkeitsvermerk kann zum Beispiel erzeugt werden, indem ein vom ersten Buchungsdatensatz umfasster Gültigkeitsflag 1 durch einen Ungültigkeitsflag 0 ersetzt wird.
Alternativ erfolgt eine Stornierung durch die Erzeugung eines Stornierungsdatensatzes für die erste gebührenpflichtige Verkehrsfläche in dem ersten Datenspeicher oder einem zweiten Datenspeicher.
Der erste Datenspeicher kann von einer dezentralen Datenverarbeitungseinrichtung des Fahrzeugs oder von einer zentralen Datenverarbeitungseinrichtung einer Gebührenerhebungsstelle umfasst sein.
Ebenso kann der zweite Datenspeicher kann von einer dezentralen Datenverarbeitungseinrichtung des Fahrzeugs oder von einer zentralen Datenverarbeitungseinrichtung einer Gebührenerhebungsstelle umfasst sein.
Der erste und der zweite Datenspeicher können von verschiedenen Datenverarbeitungseinrichtungen umfasst sein.
Für den anderen Datensatz, der zur Buchung nur das Anschlusselement Q enthielt, kann eine Löschung der Nutzungsberechtigung für die ungenutzten Verkehrsflächen bei festgestellter Nutzung der zweiten gebührenpflichtigen Verkehrsfläche dadurch erfolgen, dass das Anschlusselement Q im anderen Datensatz durch das Verkehrsflächenelement V₂ der zweiten Verkehrsfläche ersetzt oder ergänzt wird. Findet nachweislich keine Nutzung irgendeiner der Verkehrsflächen Vⱼ statt, die mit der Anschlussstelle Q verknüpft sind (beispielsweise, weil der Fahrer mit seinem Fahrzeug an einer Abfahrt das Netz der gebührenpflichtigen Streckenabschnitte verlassen hat), sind kann mit dem anderen Datensatz so verfahren werden wie zuvor beschrieben mit dem Datensatz der Nutzungsberechtigung der ersten gebührenpflichtigen Verkehrsfläche. Ferner kann eine Stornierung der Nutzungsberechtigung für die erste Verkehrsfläche auch durch den Verfall dieser Nutzungsberechtigung gegeben sein, der sich durch die bestätigte Nutzung der zweiten gebührenpflichtigen Verkehrsfläche, welche eine Nutzung der ersten Verkehrsfläche erfindungsgemäß ausschließt, ergibt.
Es kann prinzipiell vorgesehen sein, dass die Stornierung der Nutzungsberechtigung für die erste gebührenpflichtige Verkehrsfläche durch die aus den zweiten Positionsdaten erkannte Anwesenheit des Fahrzeugs auf der zweiten gebührenpflichtigen Verkehrsfläche eingeleitet wird.

In der ersten Datenerfassungsphase können die erfassten ersten positionsbezogenen Daten wenigstens eine erste Position oder wenigstens eine erste Sammlung mehrerer erster Positionen des Fahrzeugs umfassen, die in der ersten Datenerhebungsphase mittels einer von dem Fahrzeug mitgeführten Positionsbestimmungseinrichtung bestimmt werden, und in der ersten Assoziierungsphase die erste Position oder die erste Sammlung mehrerer erster Positionen mit der ersten und der zweiten gebührenpflichtigen Verkehrsfläche assoziiert werden, die ausgehend von der ersten Position oder einer zuletzt erfassten Position der ersten Sammlung mehrerer erster Positionen mit dem Fahrzeug in alternativer Weise erreichbar sind. Insbesondere kann vorgesehen sein, dass die erste und die zweite gebührenpflichtige Verkehrsfläche, ausgehend von der ersten Position oder einer zuletzt erfassten Position der ersten Sammlung mehrerer erster Positionen mit dem Fahrzeug unmittelbar erreichbar sind; das heißt, dass sie nur über einen Weg erreichbar sind, der keine andere gebührenpflichtige Verkehrsfläche aufweist, für die keine auf das Fahrzeug bezogene Nutzungsberechtigung vorliegt oder die zur Assoziierung mit der ersten Position oder einer Position der Sammlung mehrerer erster Positionen vorgesehen ist. Insbesondere können die in der ersten Datenerfassungsphase erfassten ersten positionsbezogenen Daten durch wenigstens eine erste Position oder wenigstens eine erste Sammlung mehrerer erster Positionen des Fahrzeugs gebildet werden.
Insbesondere kann die erste Datenerfassungsphase abgeschlossen werden, bevor das Fahrzeug in einen definierten Bereich eingefahren ist, der die Auffahrt oder den Beginn der ersten und der zweiten gebührenpflichtigen Verkehrsfläche umfasst oder einen bestimmten Abstand von der Auffahrt oder dem Beginn der ersten und der zweiten gebührenpflichtigen Verkehrsfläche unterschritten hat.
So kann die Nutzungsberechtigung bereits vor Befahren der ersten oder der zweiten gebührenpflichtigen Verkehrsfläche gebucht werden und sowohl das mögliche Befahren der ersten gebührenpflichtigen Verkehrsfläche als auch das alternativ mögliche Befahren der zweiten gebührenpflichtigen Verkehrsfläche ohne die entsprechende Nutzungsberechtigung dafür vermieden werden.
Dazu ist die vorzugsweise die erste Position oder die zuletzt erfasste Position der ersten Sammlung mehrerer erster Positionen des Fahrzeugs so weit von der Auffahrt oder dem Beginn der ersten und der zweiten gebührenpflichtigen Verkehrsfläche entfernt angeordnet, dass die Buchungszeit, die zwischen der Erfassung der ersten positionsbezogenen Daten, die mit einer möglichen Nutzung der ersten und alternativ zweiten gebührenpflichtigen Verkehrsfläche assoziiert werden, und der Buchung der Nutzungsberechtigung für die erste und die zweite gebührenpflichtige Verkehrsfläche verstreicht, geringer ist als die Fahrzeit, die das Fahrzeug geringstenfalls unter Berücksichtigung der zulässigen Höchstgeschwindigkeit oder einer vorgebbaren Maximalgeschwindigkeit (beispielsweise 300 km/ h für einen Personenkraftwagen auf deutschen Autobahnen) zur Bewältigung der Strecke zwischen der ersten Position oder der zuletzt erfassten Position der ersten Sammlung mehrerer erster Positionen des Fahrzeugs und der Auffahrt oder dem Beginn der ersten und zweiten gebührenpflichtigen Verkehrsfläche benötigt.

Das Buchen der Nutzungsberechtigungen kann insbesondere das Registrieren der dem Fahrzeug zugeordneten ersten und zweiten gebührenpflichtigen Verkehrsfläche in einer Datenbank umfassen, indem beispielsweise Daten des Fahrzeugs oder das Fahrzeug identifizierende Daten (beispielsweise die Seriennummer eines vom Fahrzeug mitgeführten Fahrzeuggerätes, welches wenigstens die ersten positionsbezogenen Daten erfasst) - kurz: Fahrzeugdaten - mit Daten der ersten und zweiten gebührenpflichtigen Verkehrsfläche oder die erste und die zweite gebührenpflichtige Verkehrsfläche identifizierenden Daten (beispielsweise die geographischen Koordinaten des Flächenschwerpunktes der gebührenpflichtigen Verkehrsfläche) - kurz: Verkehrsflächendaten - verknüpft und gemeinsam in einem Datenspeicher abgelegt werden. In dieser Weise bilden die Fahrzeugdaten zusammen mit den Verkehrsflächendaten einen Buchungsdatensatz, der außerdem Daten des Buchungszeitpunktes (Datum und Uhrzeit der Buchung) dieses Buchungsdatensatzes umfassen kann, um die Eindeutigkeit des Buchungsdatensatzes anhand seiner Einmaligkeit zu gewährleisten.
Beispiele für Fahrzeugdaten sind das Fahrzeug-Kennzeichen, die Versicherungs-Nummer für das Fahrzeug, eine Kundennummer des Nutzers, die bereits erwähnte Seriennummer des Fahrzeuggerätes oder die Mobilfunknummer eines Mobilfunkgerätes des Nutzers. Besonders bevorzugt sind die Fahrzeugdaten durch das Fahrzeug-Kennzeichen gebildet oder mit diesem verknüpft. Eine Kontrolle, die auf einer bildtechnischen Aufnahme des Fahrzeug-Kennzeichens beruht, wird damit vorteilhaft unterstützt.

Mit dem erfindungsgemäßen Verfahren wird die Anwesenheit eines Fahrzeugs an einer ersten Position zum Anlass genommen, eine Nutzungsberechtigung für eine von der ersten Position aus befahrbare erste Verkehrsfläche und eine von der ersten Position aus befahrbare zweite Verkehrsfläche zu buchen; die Anwesenheit des Fahrzeugs an einer zweiten Position wird zum Anlass genommen, die Nutzungsberechtigung für wenigstens die erste Verkehrsfläche mangels einer Nutzung der ersten Verkehrsfläche zu stornieren. Die mangelnde Nutzung der ersten Verkehrsfläche kann entweder durch die bestätigte Nichtnutzung der ersten Verkehrsfläche - beispielsweise durch das das Detektieren des Ausfahrens des Fahrzeugs aus einem für die mögliche Nutzung der ersten Verkehrsfläche maßgeblichen Gebiets - und/ oder die bestätigte Nutzung der zweiten Verkehrsfläche - beispielsweise durch das das Detektieren des Einfahrens des Fahrzeugs in ein für die bestätigte Nutzung der zweiten Verkehrsfläche maßgebliches Gebiet.
Mit dem erfindungsgemäßen Verfahren ist es in einem Gebührenerhebungssystem für gebührenpflichtige Verkehrsflächen durch die positionsabhängige automatische Buchungsfunktion möglich, dem Fahrer oder Halter des Fahrzeugs eine Nutzungsberechtigung für eine erste und eine zweite gebührenpflichtige Verkehrsfläche zuzuordnen, die er noch nicht befahren hat. Er kann ausgehend von der ersten Position oder der zuletzt erfassten Position der ersten Sammlung mehrerer erster Positionen, an der er sich gemäß der erfassten ersten positionsbezogenen Daten befindet, in sich einander ausschließender Weise sowohl die erste als auch die zweite Verkehrsfläche erreichen - beispielsweise in unmittelbarer Weise ohne eine andere gebührenpflichtige Verkehrsfläche zu benutzen. Bereits vor dem Befahren entweder der ersten oder der zweiten gebührenpflichtigen Verkehrsfläche besitzt er erfindungsgemäß die Nutzungsberechtigung für beide, weil diese Nutzungsberechtigungen nämlich bereits vor Befahren der ersten gebührenpflichtigen Verkehrsfläche gebucht wurden. Wird er im Moment des Befahrens der zweiten gebührenpflichtigen Verkehrsfläche kontrolliert, indem seine Nutzungsberechtigung von einer Datenbank für Nutzungsberechtigungen abgefragt wird, so wird eine solche Kontrolle ein positives Ergebnis ergeben, und das sogar bevor ein Positionsbestimmungssystem überhaupt in der Lage ist, positionsbezogene Daten des Fahrzeugs zu erfassen, die das Befahren der zweiten gebührenpflichtigen Verkehrsfläche bestätigen.
Damit schließt das erfindungsgemäße Verfahren vorteilhaft aus, dass ein Nutzer bei der gleichrangigen Möglichkeit, von mehreren gebührenpflichtigen Verkehrsflächen eine von diesen auszuwählen, eine solche gebührenpflichtige Verkehrsfläche befahren kann, ohne die Nutzungsberechtigung dafür zu besitzen. Er kann somit zu keinem Zeitpunkt, an dem seine Anwesenheit durch eine Kontrolle auf der gebührenpflichtigen Verkehrsfläche festgestellt wird, nicht einmal unbeabsichtigt als unberechtigter Nutzer oder Gebührenpreller angesehen werden.
Im Gegensatz zu herkömmlichen Buchungsverfahren, bei denen die in der ersten (und bezüglich einer bestimmten Verkehrsfläche Streckenabschnittes einzigen) Datenerfassungsphase erfassten ersten positionsbezogenen Daten in der ersten (und bezüglich einer bestimmten Verkehrsfläche einzigen) Assoziierungsphase zur Assoziierung mit einer tatsächlichen, bestätigten Nutzung einer aktuell vom Fahrzeug in Anspruch genommenen bestimmten, einzigen Verkehrsfläche vorgesehen sind, für die in der Buchungsphase eine Nutzungsberechtigung - gegebenenfalls in Verbindung mit einer entsprechenden Gebührenerhebung - gebucht wird, ermöglicht das erfindungsgemäße Buchungsverfahren vorteilhaft eine Buchung von mehreren Nutzungsberechtigungen für mehrere alternativ nutzbare Verkehrsflächen vor der möglichen Nutzung einer von ihnen.

Sollte sich in einer der drei Phasen des herkömmlichen Buchungsverfahrens ein Problem ergeben, das dazu führt, dass keine Nutzungsberechtigung für die aktuell genutzte gebührenpflichtige Verkehrsfläche gebucht wird, so gilt der Nutzer als Parksünder, Schwarzfahrer oder Mautpreller.
Sollte sich in einer der drei Phasen des erfindungsgemäßen Buchungsverfahrens ein Problem ergeben, das dazu führt, dass keine Nutzungsberechtigung für eine zur Nutzung anstehenden gebührenpflichtigen Verkehrsfläche gebucht wird, so kann dem Nutzer dies so rechtzeitig zur Kenntnis gebracht werden, dass er die Möglichkeit wahrnehmen kann, die unbefugte Nutzung der bevorstehenden Verkehrsfläche zu vermeiden, beispielsweise indem er eine Autobahn mit gebührenpflichtigen Streckenabschnitten an einer Ausfahrt vor Beginn eines ungebuchten Streckenabschnittes verlässt oder auf einen gebührenpflichtigen Streckenabschnitt ausweicht, für den ihm das vorliegen einer Buchung angezeigt wird. Vorzugsweise wird dazu in einer ersten Anzeigephase, die der ersten Buchungsphase nachfolgt und der zweiten Datenerfassungsphase zumindest abschnittsweise vorangeht, eine Information über die gebuchten Nutzungsberechtigungen angezeigt, die noch nicht durch eine tatsächliche Benutzung der mit ihnen verknüpften Verkehrsflächen abgegolten - und damit stornierbar - sind.
Das erfindungsgemäße Buchungsverfahren besitzt damit den Vorteil gegenüber herkömmlichen Buchungsverfahren, im Falle einer Fehlfunktion im Buchungsverfahren dem Fahrzeugführer die Möglichkeit zu geben, rechtzeitig einer unbefugten Nutzung entgegenzuwirken. Diese Möglichkeit ist ihm in herkömmlichen Buchungsverfahren nachteiligerweise verwährt.

Dies allein macht noch nicht alle Vorteile der Erfindung aus, die erfindungsgemäß außerdem vorsieht, den Fall der bestätigten Nichtnutzung der ersten gebührenpflichtigen Verkehrsfläche adäquat zu behandeln:
Dazu können die in der zweiten Datenerfassungsphase erfassten zweiten positionsbezogenen Daten wenigstens eine zweite Position oder wenigstens eine zweite Sammlung mehrerer zweiter Positionen des Fahrzeugs umfassen, die in der zweiten Datenerhebungsphase mittels einer von dem Fahrzeug mitgeführten Positionsbestimmungseinrichtung bestimmt werden, und in der zweiten Assoziierungsphase die zweite Position oder die zweite Sammlung mehrerer zweiter Positionen mit der bestätigten Nichtnutzung der ersten gebührenpflichtigen Verkehrsfläche - oder dem gleichwertig: der bestätigten Nutzung der zweiten gebührenpflichtigen Verkehrsfläche - assoziiert wird.
Insbesondere können die in der zweiten Datenerfassungsphase erfassten zweiten positionsbezogenen Daten durch wenigstens eine zweite Position oder wenigstens eine zweite Sammlung mehrerer zweiter Positionen des Fahrzeugs gebildet werden.
Insbesondere kann dabei die erste gebührenpflichtige Verkehrsfläche ausgehend von der zweiten Position oder einer zuletzt erfassten Position der zweiten Sammlung mehrerer zweiter Positionen nicht mit dem Fahrzeug erreichbar sein, ohne dass in einer der zweiten Datenerfassungsphase folgenden dritten Datenerfassungsphase dritte positionsbezogene Daten des Fahrzeugs erfasst werden, die eine erneute Assoziierung mit einer möglichen Nutzung der ersten und alternativ zweiten gebührenpflichtigen Verkehrsfläche bedingen.

Insbesondere wird die erste Nutzungsberechtigung erst storniert, nachdem das Fahrzeug einen definierten Bereiche verlassen hat, der die Auffahrt oder den Beginn der ersten gebührenpflichtigen Verkehrsfläche umfasst, oder einen bestimmten Abstand von der Auffahrt oder dem Beginn der ersten gebührenpflichtigen Verkehrsfläche überschritten hat.
So kann das Befahren der ersten gebührenpflichtigen Verkehrsfläche ohne die entsprechende Nutzungsberechtigung dafür, zum Beispiel nach einem Wendemanöver in der Nähe der Auffahrt oder des Beginns der ersten gebührenpflichtigen Verkehrsfläche, das eine sich von der der Auffahrt oder dem Beginns der ersten gebührenpflichtigen Verkehrsfläche entfernende Fahrt beendet, vermieden werden.
Dazu ist vorzugsweise die zweite Position oder die zuletzt erfasste Position der zweiten Sammlung zweiter Positionen des Fahrzeugs so weit von der Auffahrt oder dem Beginn der ersten gebührenpflichtigen Verkehrsfläche entfernt angeordnet, dass eine dritte Position oder die zuletzt erfasste Position einer dritten Sammlung mehrerer dritter Positionen des Fahrzeugs, durch die in der dritten Datenerfassungsphase erfassten dritten positionsbezogenen Daten gebildet sein können, so weit von der Auffahrt oder dem Beginn der ersten gebührenpflichtigen Verkehrsfläche entfernt angeordnet ist, dass die Buchungszeit, die zwischen der Erfassung der dritten positionsbezogenen Daten, die mit einer erneuten möglichen Nutzung der ersten gebührenpflichtigen Verkehrsfläche assoziiert werden, und der Buchung der neuerlichen Nutzungsberechtigung für die erste gebührenpflichtige Verkehrsfläche verstreicht, geringer ist als die Fahrzeit, die das Fahrzeug geringstenfalls unter Berücksichtigung der zulässigen Höchstgeschwindigkeit oder einer vorgebbaren Maximalgeschwindigkeit (beispielsweise 300 km/ h für einen Personenkraftwagen auf deutschen Autobahnen) zur Bewältigung der Strecke zwischen der ersten Position des Fahrzeugs und der Auffahrt oder dem Beginn der ersten gebührenpflichtigen Verkehrsfläche benötigt. Vereinfacht gesprochen, sollte die zweite Position einen Abstand zu dem Beginn der ersten gebührenpflichtigen Verkehrsfläche besitzen, der um die Länge der für die Erfassung der dritten positionsbezogenen Daten nötigen Strecke größer ist als der zur Buchung benötigte Abstand der dritten Position zu dem Beginn der ersten gebührenpflichtigen Verkehrsfläche.

Für gebührenpflichtige Streckenabschnitte eines Straßen-Mautsystems werden vorzugsweise die ersten positionsbezogenen Daten vollständig oder zumindest teilweise in einem ersten Gebiet erfasst, in dem der Verkehrsknotenpunkt liegt, von dem aus mehrere zur Benutzung angebotene gebührenpflichtige Streckenabschnitte ausgehen; entsprechend werden Vorzugsweise die zweiten positionsbezogenen vollständig oder zumindest teilweise in einem bezüglich des ersten Gebietes disjunkten zweiten Gebiet erfasst, das das erste Gebiet umgibt.
In Annäherung an den Verkehrsknotenpunkt befährt das Fahrzeug das erste Gebiet, was durch die Erfassung und Auswertung der ersten positionsbezogenen Daten festgestellt wird.
In Entfernung von dem Verkehrsknotenpunkt befährt das Fahrzeug das zweite Gebiet, was durch die Erfassung und Auswertung der zweiten positionsbezogenen Daten festgestellt wird.
Dabei kann das zweite Gebiet in einander disjunkte Sektoren unterteilt sein, von denen ein erster Sektor einen vom Verkehrsknotenpunkt abgewandten Teil des ersten gebührenpflichtigen Streckenabschnitts umfasst, ein zweiter Sektor einen vom Verkehrsknotenpunkt abgewandten Teil des zweiten gebührenpflichtigen Streckenabschnitts umfasst und wenigstens ein dritter Sektor, der keinen Teil des ersten und zweiten Streckenabschnitts umfasst.
Wird von einem Prozessor eines Gebührenerhebungssystems festgestellt, dass die zweiten positionsbezogenen Daten im zweiten Sektor liegen, so wird der Prozessor diese Feststellung mit der Nutzung des zweiten gebührenpflichtigen Streckenabschnitts und der Nichtnutzung des ersten gebührenpflichtigen Streckenabschnitts assoziieren.
Wird von einem Prozessor eines Gebührenerhebungssystems festgestellt, dass die zweiten positionsbezogenen Daten im dritten Sektor liegen, so wird der Prozessor diese Feststellung mit der Nichtnutzung sowohl des ersten als auch des zweiten gebührenpflichtigen Streckenabschnitts assoziieren.
Anstatt flächiger Gebiete kann auch eine linienhafte Umrandung (Ellipse, Polygonzug) des Verkehrsknotenpunktes zur Erkennung eines Buchungsbedürfnisses anhand erster positionsbezogener Daten und zur Erkennung eines Stornierungsbedürfnisses anhand zweiter positionsbezogener Daten verwendet werden, wenn die Bewegungsrichtung des Fahrzeugs bei einer Überquerung der Umrandung berücksichtigt wird:
Überquert das Fahrzeug in Richtung auf den Verkehrsknotenpunkt zu die Umrandung, so assoziiert ein Prozessor des Gebührenerhebungssystems die diesbezüglichen ersten positionsbezogenen Daten mit einem Buchungsbedürfnis für den ersten und zweiten gebührenpflichtigen Streckenabschnitt, die mit dem Verkehrsknotenpunkt verknüpft sind.
Überquert das Fahrzeug in Richtung von dem Verkehrsknotenpunkt weg die Umrandung, so assoziiert ein Prozessor des Gebührenerhebungssystems die diesbezüglichen ersten positionsbezogenen Daten mit einem Stornierungsbedürfnis für wenigstens den ersten gebührenpflichtigen Streckenabschnitt, der mit dem Verkehrsknotenpunkt verknüpft ist. Nimmt dabei die Orientierung der aus den zweiten positionsbezogenen Daten im Zug der Überquerung der Umrand gebildeten Linie eine Orientierung ein und/ oder ist der Schnittpunkt dieser Linie mit der Umrandung bezüglich des Verkehrsknotenpunktes in einer Richtung gelegen, wobei die Orientierung und/ oder Richtung mit einer für die Nutzung des zweiten gebührenpflichtigen Streckenabschnitts vorgegebenen Orientierung und/ oder Richtung im Rahmen einer vorgegebenen Genauigkeit übereinstimmt, so wertet dies der Prozessor des Gebührenerhebungssystems als Beleg für die Nutzung des zweiten gebührenpflichtigen Streckenabschnitts. Andernfalls, und in Ermangelung einer funktionsgleichen Feststellung der Nutzung des ersten Streckenabschnittes, stellt der Prozessor die Nichtnutzung der ersten und zweiten Streckenabschnitte mit einem Stornierungsbedürfnis für beide fest.

Mit dem erfindungsgemäßen Verfahren ist es in einem Gebührenerhebungssystem für gebührenpflichtige Verkehrsflächen durch die positionsabhängige automatische Stornierungsfunktion möglich, dem Fahrer oder Halter des Fahrzeugs eine Nutzungsberechtigung für eine erste gebührenpflichtige Verkehrsfläche abzunehmen, die er definitiv nicht befahren hat und die er nach der Stornierung der Nutzungsberechtigung auch nicht befahren wird, ohne dass ihn das erfindungsgemäße Buchungs- und Stornierungsverfahren mit einer neuerlichen Nutzungsberechtigung für diese erste gebührenpflichtige Verkehrsfläche ausstattet.
Sollte es sich nach der Buchung der Nutzungsberechtigung im Laufe der weiteren Fahrt herausstellen, dass der Fahrer/ Halter diese Nutzungsberechtigung überhaupt nicht benötigt, weil er die erste gebührenpflichtige Verkehrsfläche aufgrund seiner Präsenz an einem Ort, der den zweiten positionsbezogenen Daten entspricht, nachweislich nicht befahren hat, so wird die Nutzungsberechtigung für diese erste gebührenpflichtige Verkehrsfläche automatisch storniert. Gegebenenfalls im Zusammenhang mit der Buchung der Nutzungsberechtigung angefallene Gebühren, beispielsweise Nutzungsgebühren für die erste gebührenpflichtige Verkehrsfläche, werden ihm dann zumindest teilweise, vorzugsweise vollständig, erstattet oder gutgeschrieben.
Damit schließt das erfindungsgemäße Verfahren vorteilhaft aus, dass ein Nutzer eine Nutzungsberechtigung für eine gebührenpflichtige Verkehrsfläche behält, ohne diese jemals befahren zu haben. Er wird auch nicht dauerhaft, sondern allenfalls vorübergehend, mit gegebenenfalls durch die Nutzungsberechtigung angefallenen Gebühren belastet, die er aufgrund der ausbleibenden Nutzung der gebührenpflichtigen Verkehrsfläche nicht zahlen müsste.

Zusammengefasst, gelingt es mit der Erfindung, einen Nutzer von gebührenpflichtigen Verkehrsflächen rechtzeitig vor der Nutzung einer gebührenpflichtigen Verkehrsfläche automatisch mit einer Nutzungsberechtigung für alle gebührenpflichtigen Verkehrsflächen auszustatten, die vom ihm wahlweise nachfolgend alternativ genutzt werden können, und diese Nutzungsberechtigungen für nicht genutzte gebührenpflichtige Verkehrsflächen automatisch zu stornieren.

So ist erfindungsgemäß zur rechtzeitigen Buchung einer Berechtigung für die bevorstehende mögliche Nutzung einer von mehreren alternativ nutzbaren Verkehrsflächen durch ein Fahrzeug vorgesehen, erste Positionsdaten des Fahrzeugs mit allen alternativ nutzbaren Verkehrsflächen hinsichtlich ihrer bevorstehenden möglichen Nutzung zu assoziieren, und für alle diese Verkehrsflächen Nutzungsberechtigungen zu buchen, wobei diese Nutzungsberechtigungen insoweit bis auf höchstens diejenige für eine nachweislich genutzte Verkehrsfläche storniert werden, wie zweite Positionsdaten des Fahrzeugs mit denselben Verkehrsflächen hinsichtlich einer bestätigten Nichtnutzung assoziiert werden.

Erfindungsgemäß ist ein Verkehrsknotenpunkt, der von einem Fahrzeug zur Befahrung von höchstens einer von wenigstens zwei, einer ersten und einer zweiten, gebührenpflichtigen Verkehrsflächen, angesteuert oder passiert wird, datentechnisch mit einer solchen ersten und zweiten Verkehrsfläche verknüpft, wobei für das Fahrzeug in Annäherung an diesen Verkehrsknotenpunkt oder in seiner Passage völlig unabhängig davon, ob der Buchungseinrichtung eine vorbestimmte Route (zum Beispiel zu einem bestimmten Ziel) des Fahrzeugs vorliegt, Nutzungsberechtigungen für beide, die erste und die zweite gebührenpflichtige Verkehrsfläche unter der Maßgabe gebucht wird, dass wenigstens eine der Nutzungsberechtigungen, ohne Beschränkung der Allgemeinheit: hier die erste, in Entfernung des Fahrzeugs von dem Verkehrsknotenpunkt wieder storniert wird.

In einem Mautsystem können so mit der Erfindung automatisch elektronische Mauttickets beispielsweise für mautpflichtige Streckenabschnitte und/ oder mautpflichtige Stadtgebiete gebucht und storniert werden. In einem Parksystem können so mit der Erfindung automatisch elektronische Parktickets für ein gebührenpflichtiges Parkhaus und/ oder einen gebührenpflichtigen Parkplatz erstellt und widerrufen werden.
Das erfindungsgemäße Verfahren ist äußerst nutzerfreundlich, weil es dem Nutzer sowohl dem Buchungs- als auch den Stornierungsvorgang abnimmt und ihm - da jede einzelne Verkehrsfläche positionsabhängig automatisch gebucht und storniert werden kann - die Freiheit einer flexiblen Routenwahl lässt, die nicht durch mangelnde Nutzungsberechtigungen oder manuell auszuführende Stornierungsvorgänge belastet ist.

Gegenüber den aus den Offenlegungsschriften DE 10 2005 015 693 A1 und DE 10 2006 027 191 A1 bekannten Verfahren zur Buchung von Nutzungsberechtigungen für entlang einer vorgegebenen Route zu einem vorgegebenen Ziel aufeinander folgende Streckenabschnitte bestehen mit der Erfindung zwei herausragende Vorteile:
Zum einen ist es erfindungsbedingt überhaupt nicht mehr nötig, ein Fahrziel und damit eine Route vorzugeben, weil die Erfindung vorsieht, "auf Vorrat" immer alle möglichen Nutzungsberechtigungen zu buchen, von denen wenigstens eine positionsbedingt nötig werden kann.
Zum anderen kann eine plötzliche Routenänderung auf dem Weg zu einem vorgegebenen Ziel (dessen Wahl selbstverständlich nicht durch die Erfindung ausgeschlossen ist) auf einen gebührenpflichtigen Streckenabschnitt, für den keine Nutzungsberechtigung gebucht wurde, weil er dem Stand der Technik gemäß nicht auf der vorgegebenen Route lag, nicht zu einer rechtswidrigen Befahrung führen, weil ja erfindungsgemäß für jeden Punkt, von dem aus in alternativer Weise mehrere verschiedene gebührenpflichtige Streckenabschnitte befahren werden können, für jeden dieser gebührenpflichtigen Streckenabschnitte eine Nutzungsberechtigung vorliegt: Auch für den Fall, dass der Fahrer ein Routenziel in ein Navigationssystem eingegeben hat, wird er erfindungsgemäß automatisch an jeder Stelle seiner Route mit allen Nutzungsberechtigungen versehen, die für die am nächsten Knotenpunkt alternativ befahrbaren gebührenpflichtigen Streckenabschnitte buchbar sind, um für den Fall, dass er versehentlich von seiner Route auf einen ungeplanten gebührenpflichtigen Streckenabschnitt abweicht, auch für diesen ungeplanten gebührenpflichtigen Streckenabschnitt eine Nutzungsberechtigung vorweisen kann und nicht zum Mautpreller wird.

Ein weiterer Vorteil kommt zum Tragen für den Fall, in dem die Buchung der Nutzungsberechtigungen für alternativ nutzbare Verkehrsflächen mit der Erhebung einer Gebühr in der ersten Buchungsphase für jede einzelne dieser alternativ nutzbaren Verkehrsfläche verbunden ist und alle bis auf maximal eine dieser Gebühren in der zweiten Buchungsphase wieder erstattet werden. In diesem Fall ist das Missbrauchs- und Betrugsrisiko deutlich geringer als in dem Fall, in dem erst in der zweiten Buchungsphase eine Gebühr erhoben wird.
Ein Nutzer, der für mehrere Verkehrsflächen in der ersten Buchungsphase Gebühren bezahlt hat, wird darauf achten, dass sein Fahrzeuggerät oder sein Mobiltelefon, das er zur Durchführung des erfindungsgemäßen Verfahrens verwendet, auch die zweite Assoziationsphase über aktiv ist oder bleibt, um in dieser zweiten Assoziierungsphase die Nichtnutzung aller bis auf maximal einer der gebuchten Verkehrsflächen feststellen zu lassen, und in die zweite Buchungsphase zu gelangen, in der auf jeden Fall eine Gebührenerstattung bezüglich wenigstens einer, gegebenenfalls sogar aller, Verkehrsflächen erfolgt, die er nachweislich nicht genutzt hat.
Ein solches Interesse, in die zweite Assoziierungsphase zu gelangen, hat der Nutzer dann nicht, wenn erst aus der Verarbeitung der zweiten Positionsdaten folgt, dass er gegebenenfalls eine Gebühr für die Nutzung der zweiten Verkehrsfläche zu entrichten hat. Er kann in diesem Fall versucht sein, sich mit dem kostenfreien Erhalt der Nutzungsberechtigungen (die ihn ja zur Nutzung der Verkehrsfläche berechtigen) in der ersten Buchungsphase zu begnügen und das Fahrzeuggerät oder das Mobilfunkgerät im Verlauf der zweiten Assoziierungsphase zu manipulieren oder vor Eintritt in die zweite Assoziierungsphase auszuschalten, um nicht mit einer Nutzungsgebühr belastet zu werden, die in der zweiten Buchungsphase für seine Anwesenheit auf der zweiten Verkehrsfläche erhoben werden würde, insbesondere wenn es sich bei dieser zweiten Verkehrsfläche um den letzten gebührenpflichtigen Streckenabschnitt seiner Route handelt.

Eine andere Möglichkeit sieht vor, dass zwar für alle alternativ nutzbaren Verkehrsflächen in der ersten Buchungsphase eine Nutzungsberechtigung gebucht wird, dass die Erhebung einer Gebühr in der ersten Buchungsphase aber auf einen Gebührenbetrag beschränkt ist, der geringer ist als die Summe der Gebühren für alle alternativ nutzbaren Verkehrsflächen.
In einem ersten Beispiel kann dieser Gebührenbetrag dem Mittelwert der Gebühren jeder der alternativ nutzbaren Verkehrsflächen entsprechen. Je nach in der zweiten Assoziierungsphase festgestellter Nutzung einer Verkehrsfläche beziehungsweise Nichtnutzung aller bis auf maximal einer Verkehrsfläche erhält der Nutzer in der zweiten Buchungsphase den Gebührenbetrag vollständig zurück (keine Nutzung einer gebührenpflichtigen Verkehrsfläche), teilweise zurück (Nutzung einer gebührenpflichtigen Verkehrsfläche, deren Gebühr geringer ist als der Mittelwert) oder muss Gebühren nachzahlen (Nutzung einer gebührenpflichtigen Verkehrsfläche, deren Gebühr höher ist als der Mittelwert).
In einem ersten Beispiel kann dieser Gebührenbetrag dem Höchstwert an Gebühren von allen Gebühren der alternativ nutzbaren Verkehrsflächen entsprechen. Je nach in der zweiten Assoziierungsphase festgestellter Nutzung einer Verkehrsfläche beziehungsweise Nichtnutzung aller bis auf maximal einer Verkehrsfläche erhält der Nutzer in der zweiten Buchungsphase den Gebührenbetrag vollständig zurück (keine Nutzung einer gebührenpflichtigen Verkehrsfläche), teilweise zurück (Nutzung einer gebührenpflichtigen Verkehrsfläche, deren Gebühr geringer ist als der Höchstwert). Jedenfalls muss er keine Gebühren nachzahlen, weil die Nutzung der teuersten der gebuchten gebührenpflichtigen Verkehrsflächen bereits mit der Gebührenerhebung in der ersten Buchungsphase bezahlt wurde.

Ausführungsformen des erfindungsgemäßen Verfahrens sehen vor, dass mit der Buchung der ersten Nutzungsberechtigung die Erhebung einer ersten Gebühr für die erste gebührenpflichtige Verkehrsfläche und mit der der Stornierung der ersten Nutzungsberechtigung die zumindest teilweise Erstattung oder Annullierung der erhobenen ersten Gebühr erfolgt. Ausführungsformen der Erfindung sehen in Weiterbildung dazu vor, dass die Buchung der ersten Nutzungsberechtigung durch die Erhebung einer ersten Gebühr für die erste gebührenpflichtige Verkehrsfläche und die Stornierung der ersten Nutzungsberechtigung durch die zumindest teilweise Erstattung oder Annullierung der erhobenen ersten Gebühr erfolgt. In beiden Fällen wird durch die Erhebung einer Gebühr im Zusammenhang mit der Buchung der Nutzungsberechtigung die Nutzungsberechtigung bestätigt, was vorteilhaft eine erhöhte Sicherheit für die Erhebungsstelle, die für die Erhebung von Gebühren für die Nutzung von gebührenpflichtigen Verkehrsflächen verantwortlich ist, hinsichtlich einer Zahlung der Gebühr im Falle einer tatsächlichen Nutzung der gebührenpflichtigen Verkehrsfläche bedeutet.

Insbesondere können in der zweiten Assoziierungsphase die zweiten positionsbezogenen Daten mit einer bestätigten Nutzung der zweiten gebührenpflichtigen Verkehrsfläche durch das Fahrzeug assoziiert werden, wobei sich wegen der alternativen Nutzungsmöglichkeit der ersten und zweiten gebührenpflichtigen Verkehrsfläche mit der bestätigten Nutzung der zweiten gebührenpflichtigen Verkehrsfläche die bestätigte Nichtnutzung der ersten gebührenpflichtigen Verkehrsfläche ergibt.

Die Buchung kann zum Beispiel durch eine Sendung von wenigstens einem die erste gebührenpflichtige Verkehrsfläche repräsentierenden ersten Verkehrsflächen-Datenelement und wenigstens einem die zweite gebührenpflichtige Verkehrsfläche repräsentierenden zweiten Verkehrsflächen-Datenelement an wenigstens eine erste zentrale Datenverarbeitungseinrichtung mit der Anforderung ausgelöst werden, die Buchung einer ersten Nutzungsberechtigung für die erste gebührenpflichtige Verkehrsfläche und einer zweiten Nutzungsberechtigung für die zweite gebührenpflichtige Verkehrsfläche durchzuführen.
Die Stornierung der Nutzungsberechtigung für die erste gebührenpflichtige Verkehrsfläche kann zum Beispiel durch die Sendung von wenigstens einem die zweite gebührenpflichtige Verkehrsfläche repräsentierenden zweiten Verkehrsflächen-Datenelement an die erste zentrale Datenverarbeitungseinrichtung oder eine zweite zentrale Datenverarbeitungsanlage mit der Aufforderung ausgelöst werden, die bestätigte Nutzung der zweiten gebührenpflichtigen Verkehrsfläche zu registrieren. Die Registrierung einer Nutzungsbestätigung für die benutzte zweite gebührenpflichtige Verkehrsfläche entspricht vorzugsweise der Registrierung eines Löschverbots für die Nutzungsberechtigung dieser benutzten zweiten gebührenpflichtigen Verkehrsfläche. Das erfindungsgemäße Stornierungsverfahren kann diesbezüglich vorsehen, eine Aufforderung zur Registrierung der bestätigten Nutzung der zweiten gebührenpflichtigen Verkehrsfläche als eine Aufforderung zur Stornierung der Nutzungsberechtigung der ersten gebührenpflichtigen Verkehrsfläche, von der ein erstes Verkehrsflächen-Datenelement verknüpft mit dem zweiten Verkehrsflächen-Datenelement in der zentralen Datenverarbeitungseinrichtung seit der Buchung vorliegt, zu interpretieren, und die erste Nutzungsberechtigung für die erste gebührenpflichtige Verkehrsfläche sowie gegebenenfalls weitere Nutzungsberechtigungen für weitere gebührenpflichtige Verkehrsflächen, die ebenfalls zusammen mit der zweiten Nutzungsberechtigung für die zweite gebührenpflichtige Verkehrsfläche gebucht wurden, zu stornieren.

Für Ausführungsformen des erfindungsgemäßen Verfahrens sind zahlreiche Varianten denkbar: Zunächst wird die Erfindung in einem Mautsystem für Autobahnen und/ oder autobahnähnliche Bundesstraßen betrachtet, die durch zwei voneinander getrennten Richtungsfahrbahnen gekennzeichnet sind, welche in zwei entgegengesetzten Fahrtrichtungen aufeinanderfolgende gebührenpflichtige Streckenabschnitte aufweisen (Segment-Maut):
Dabei ist ein erstes Szenario - das Weiterfahrtszenario - denkbar, in dem auf einem initialen Streckenabschnitt für einen in Fahrtrichtung vorausliegenden (dem initialen Streckenabschnitt in Fahrtrichtung nachfolgenden) zweiten Streckenabschnitt als zweiter gebührenpflichtiger Verkehrsfläche die zweite Nutzungsberechtigung gebucht wird und für einen entgegengesetzt der Fahrtrichtung zum initialen Streckenabschnitt antiparallelen ersten Streckenabschnitt (Gegenfahrbahn des initialen Streckenabschnittes) als erster gebührenpflichtiger Verkehrsfläche die erste Nutzungsberechtigung gebucht wird. Am Ende des initialen Streckenabschnittes hat der Fahrer des mautpflichtigen Fahrzeugs die Wahl, ob er in Fahrtrichtung den zweiten Streckenabschnitt befährt, der sich an den initialen Streckenabschnitt in Fahrtrichtung anschließt, oder entgegen der Fahrtrichtung den ersten Streckenabschnitt antiparallel zum initialen Streckenabschnitt befährt. Letzteres bedeutet ein Wendemanöver, das die Abfahrt von der Fahrbahn und die Auffahrt auf die Gegenfahrbahn umfasst. Der Fahrer kann sich nur für eine der beiden Routen entscheiden: Fährt er in Fahrtrichtung weiter, befährt er den zweiten Streckenabschnitt und nicht den ersten Streckenabschnitt; wendet er, so befährt er den ersten Streckenabschnitt und nicht den zweiten Streckenabschnitt. Damit sind der erste und der zweite Streckenabschnitt zu der Zeit, wo sich der Fahrer auf dem initialen Streckenabschnitt befindet, zwei wahlfreie Alternativen, die sich gegenseitig ausschließen. Im Kontext der Anspruchsformulierung wählt der Fahrer den zweiten Streckenabschnitt in Fahrtrichtung zur Befahrung aus, anstatt in Gegenrichtung auf den ersten Streckenabschnitt zu wenden. Infolgedessen werden die in der zweiten Datenerfassungsphase erfassten zweiten positionsbezogenen Daten des Fahrzeugs mit einer Nichtnutzung des ersten Streckenabschnitts assoziiert, weil die in der zweiten Datenerfassungsphase erfassten zweiten positionsbezogenen Daten des Fahrzeugs mit einer bestätigten Nutzung des ersten Streckenabschnitts assoziiert werden. Infolgedessen wird die Nutzungsberechtigung des ersten Streckenabschnitts erfindungsgemäß storniert.
In einem zweiten Szenario - dem Wendeszenario - wird auf einem initialen Streckenabschnitt für einen in Fahrtrichtung vorausliegenden zweiten Streckenabschnitt als erster gebührenpflichtiger Verkehrsfläche die erste Nutzungsberechtigung gebucht und für einen entgegengesetzt der Fahrtrichtung zum initialen Streckenabschnitt antiparallelen zweiten Streckenabschnitt (Gegenfahrbahn des initialen Streckenabschnittes) als erster gebührenpflichtiger Verkehrsfläche die zweite Nutzungsberechtigung. Im Kontext der Anspruchsformulierung wählt der Fahrer den zweiten Streckenabschnitt in entgegengesetzter Fahrtrichtung auf der dem initialen Streckenabschnitt benachbarten Gegenfahrbahn zur Befahrung aus, indem er wendet, anstatt in ursprünglicher Fahrtrichtung den ersten Streckenabschnitt befahren. Infolgedessen werden die in der zweiten Datenerfassungsphase erfassten zweiten positionsbezogenen Daten des Fahrzeugs mit einer Nichtnutzung des ersten Streckenabschnitts assoziiert, weil die in der zweiten Datenerfassungsphase erfassten zweiten positionsbezogenen Daten des Fahrzeugs mit einer bestätigten Nutzung des ersten Streckenabschnitts assoziiert werden. Infolgedessen wird die Nutzungsberechtigung des ersten Streckenabschnitts erfindungsgemäß storniert.
Beide Szenarien, Wenden oder Weiterfahren, sind somit von der Erfindung umfasst. Welche die erste Verkehrsfläche ist, deren Nutzungsberechtigung storniert wird, ergibt sich durch die Wahl der zweiten Verkehrsfläche, die benutzt wird. In beiden Szenarien existiert jeweils wenigstens eine erste Verkehrsfläche, deren Nutzungsberechtigung erfindungsgemäß storniert wird.
Eine dritte Möglichkeit der Routenwahl - das sei der Vollständigkeit halber noch bemerkt - besteht selbstverständlich mit einem dritten Szenario - dem Abfahrtszenario - in dem Verlassen der mautpflichtigen Straße. In diesem Fall wird keine der gebuchten ersten und zweiten Streckenabschnitte befahren. Sobald sich das Fahrzeug so weit von der Abfahrt am Ende des initialen Streckenabschnittes entfernt hat, dass eine Assoziierung von in der zweiten Datenerfassungsphase erfassten zweiten positionsbezogenen Daten mit einer Nichtnutzung des ersten und des zweiten Streckenabschnitts erfolgen kann, werden beiden die erste und die zweite Nutzungsberechtigung storniert.
In einem vierten Szenario - dem Auffahrtszenario - befindet sich der Fahrer mit seinem Fahrzeug nicht auf einer mautpflichtigen Straße. Er nähert sich jedoch auf einer nicht mautpflichtigen Straße einer Anschlussstelle einer mautpflichtigen Autobahn, von der aus er die Autobahn entweder auf ihrer ersten Fahrbahn in einer ersten Fahrtrichtung befahren kann, indem er auf einen ersten Streckenabschnitt der Autobahn auffährt oder auf ihrer der ersten Fahrbahn gegenläufigen zweiten Fahrbahn in einer der ersten Fahrtrichtung entgegengesetzten zweiten Fahrtrichtung befahren kann, indem er auf einen zweiten Streckenabschnitt auffährt. Erfindungsgemäß werden die in der ersten Datenerfassungsphase erfassten ersten positionsbezogenen Daten mit einer möglichen Nutzung des ersten und des zweiten Streckenabschnitts durch das Fahrzeug assoziiert, und es wird eine Nutzungsberechtigung für den ersten Streckenabschnitt und den zweiten Streckenabschnitt gebucht. Fährt das Fahrzeug auf den zweiten Streckenabschnitt auf, was mit einer Assoziation der in der zweiten Datenerfassungsphase erfassten zweiten positionsbezogenen Daten mit einer bestätigten Nutzung des zweiten Streckenabschnitts festgestellt wird, so wird nur der erste Streckenabschnitt erfindungsgemäß storniert.

Fährt das Fahrzeug in einem fünften Szenario - dem Durchfahrts- oder Querungsszenario - nicht an der Anschlussstelle auf die Autobahn auf, was mit einer Assoziation der in der zweiten Datenerfassungsphase erfassten zweiten positionsbezogenen Daten mit einer bestätigten Nichtnutzung des ersten und des zweiten Streckenabschnitts festgestellt wird, so werden die Nutzungsberechtigungen für den ersten Streckenabschnitt und den zweiten Streckenabschnitt storniert. In einem sechsten Szenario - dem Verzweigungsszenario - wird auf einem initialen Streckenabschnitt für einen in Fahrtrichtung vorausliegenden (dem initialen Streckenabschnitt in Fahrtrichtung nachfolgenden) ersten Streckenabschnitt die erste Nutzungsberechtigung gebucht und für einen in Fahrtrichtung ebenfalls vorausliegenden (dem initialen Streckenabschnitt ebenfalls in Fahrtrichtung nachfolgenden) zweiten Streckenabschnitt als zweiter gebührenpflichtiger Verkehrsfläche die zweite Nutzungsberechtigung gebucht. Ein solches Szenario ergibt sich überall dort, wo sich eine mautpflichtige Straße verzweigt oder gabelt, beispielsweise an einem Autobahndreieck oder an einer Autobahnkreuzung. Entscheidet sich der Autofahrer erfindungsgemäß für die Weiterfahrt auf dem zweiten Streckenabschnitt, was mit einer Assoziation der in der zweiten Datenerfassungsphase erfassten zweiten positionsbezogenen Daten mit einer bestätigten Nutzung des zweiten Streckenabschnitts festgestellt wird, so wird nur der erste Streckenabschnitt erfindungsgemäß storniert. Mischvarianten ergeben sich je nach Ausführung von Anschlussstellen und Verzweigungen: Ein Autobahnkreuz bietet zum Beispiel in der Regel eine Weiterfahrmöglichkeit, zwei Abzweigungsmöglichen und eine Wendemöglichkeit, was zu der Buchung von vier alternativen Streckenabschnitten führt, von denen die drei, die nach der durch den Fahrer getroffenen Wahl durch Befahrung eines bestimmten der vier Streckenabschnitte nicht befahren wurden, wieder storniert werden.

Nun wird die Erfindung in einem Mautsystem für Gebiete betrachtet, in denen bei Befahrung Gebühren fällig werden. Ein derartiges gebührenpflichtiges, als Mautgebiet bezeichnetes, Gebiet stellt eine erfindungsgemäße Verkehrsfläche dar, weil es nur über eine Verkehrsfläche befahren werden kann und zu seiner Nutzung entsprechende Verkehrsflächen anbieten muss.
Mautgebiete können Gebiete sein, für die mit jeder neuerlichen Befahrung eine Gebühr fällig wird (beispielsweise Cordon-Maut), oder die auf einem Vignettensystem mit zeitbegrenzter Pauschalbenutzungsberechtigung, beispielsweise einer Tages-, Wochen-, Monats und/ oder Jahresvignette beruhen. Eine City-Maut kann verschiedene Ringgebiete unterschiedlicher Ringtarife um ein zentrales Innenstadtgebiet mit einem Zentraltarif für einmalige und/ oder wiederholte Benutzung aufweisen.
Befindet sich der Fahrer mit seinem Fahrzeug beispielsweise in einem initialen Mautgebiet in der Nähe eines Mautgebietsdreiecks nachweislich an einem Ort, von dem aus er aus dem initialen Mautgebiet heraus sowohl ein erstes Mautgebiet als auch ein zweites Mautgebiet erreichen kann, so wird erfindungsgemäß eine Nutzungsberechtigung für das erste Mautgebiet in Form einer ersten elektronischen Vignette gebucht und eine Nutzungsberechtigung für das zweite Mautgebiet in Form einer zweiten elektronischen Vignette gebucht. Beispielsweise sind beide Vignetten Tagesvignetten, die von dem Moment an, an dem sie gebucht wurden, zunächst dauerhaft Gültigkeit besitzen, und deren Gültigkeit auf weitere 24 Stunden von dem Moment an beschränkt wird, an dem das Befahren des entsprechenden Gebietes festgestellt wurde. Entscheidet sich der Fahrer für das Befahren des zweiten Mautgebietes, so wird diese Entscheidung erfindungsgemäß durch die Assoziation von zweiten positionsbezogenen Daten der zweiten Datenerfassungsphase mit dem zweiten Mautgebiet festgestellt und mit der bestätigten Nichtnutzung des ersten Mautgebietes verknüpft. Die erste elektronische Vignette für das erste Mautgebiet wird infolgedessen erfindungsgemäß storniert.

Denkbar sind auch Mischvarianten unterschiedlicher Mautobjekte. Ein Beispiel soll hier für die Kombination der Mautobjekte "Ortsumgehung" und "City-Maut" erläutert werden: In Annäherung an einen Ort, in dem für die Ortsdurchfahrt eine City-Mautgebühr in Höhe von beispielsweise 3 EUR erhoben wird, und der eine Ortsumgehung besitzt, für deren Nutzung eine Straßenmautgebühr in Höhe von 2 EUR fällig wird, sind beide Nutzungsmöglichkeiten (Ortsdurchfahrt oder Ortsumgehung) für den Fahrer möglich. Erfindungsgemäß werden in ausreichendem Abstand vor der Verzweigung zur Ortsdurchfahrt und zur Ortsumgehung in der ersten Datenerfassungsphase erfasste erste positionsbezogene Daten des Fahrzeugs mit einer möglichen Nutzung der beiden Mautobjekte assoziiert, und es wird für beide Mautobjekte jeweils eine Nutzungsberechtigung gebucht. Nach Passieren der Verzweigung ist der Autofahrer durch seine Routenwahl beispielsweise auf die Ortsumgehung festgelegt. Eine der Ortsumgehung entsprechende Position des Fahrzeugs wird in der zweiten Datenerfassungsphase anhand der erfassten zweiten positionsbezogenen Daten des Fahrzeugs festgestellt und mit einer bestätigten Nutzung der Ortsumgehung assoziiert, die eine bestätigte Nichtnutzung der Ortsdurchfahrt bedeutet. Die Nutzungsberechtigung für die Ortsdurchfahrt wird infolgedessen erfindungsgemäß storniert; eine gegebenenfalls erhobene City-Mautgebühr wird zurückerstattet.

Schließlich wird die Erfindung in einem Parksystem mit mehreren Parkhäusern und/ oder Parkflächen betrachtet, die mehrere gebührenpflichtige Parkplätze aufweisen:
Nähert sich ein Autofahrer mit seinem Personenkraftwagen (Pkw) einem Innenstadtbereich an, so bieten sich ihm beispielsweise drei Parkhäuser und zwei Parkflächen für die Wahl eines Parkplatzes an. Eine Parkberechtigung soll dabei bereits beim Befahren eines der Parkhäuser oder einer der Parkflächen vorhanden sein spätestens jedoch in dem Moment, in dem der Fahrer seinen Pkw auf einem Parkplatz abgestellt hat.
Erfindungsgemäß werden bei Annäherung an den Innenstadtbereich fünf Parkberechtigungen für die fünf Parkmöglichkeiten gebucht. Für den Fahrer kommen beispielsweise aufgrund seines (dem Gebührenerhebungssystem unbekannten) Zielwunsches nur zwei der fünf Parkmöglichkeiten in Frage. Bei der ersten muss er feststellen, dass alle Parkplätze belegt sind. Bei der zweiten kann er einen freien Parkplatz erhalten. Durch die anhand der erfassten zweiten positionsbezogenen Daten nachvollziehbare Entscheidung des Fahrers für eine dieser Parkmöglichkeiten (die besagte zweite) werden die Parkberechtigungen für die anderen vier Parkmöglichkeiten (die erste, dritte, vierte und fünfte) erfindungsgemäß wieder storniert.
Erfindungsbedingt liegt im Moment des Befahrens der Parkmöglichkeit immer eine Nutzungsberechtigung für diese Parkmöglichkeit vor. Eine an das Fahrzeug-Kennzeichen gebundenen Kontrolle kann dies anhand einer entsprechenden Abfrage einer Nutzungsberechtigungsdatenbank, in der die Nutzungsberechtigungen verknüpft mit den Fahrzeugdaten gespeichert sind, überprüfen. Bei positivem Prüfergebnis kann die Kontrolle beispielsweise durch das Heben einer Schranke die Zufahrt zu einem Parkplatz der Parkmöglichkeit freigeben.
Mit dem Verlassen der Parkmöglichkeit, welche durch das Passieren einer den Parkplatz umgebenden Grenze von durch eine Linie oder Kurve dem Parkplatz zugeordneter geographischer Koordinaten erfindungsgemäß im Zuge einer neuen ersten Assoziierungsphase festgestellt wird, eröffnet sich für den Fahrer abermals die Möglichkeit, mehrere gebührenpflichtige Parkmöglichkeiten anzufahren. Diesem Umstand wird in einer erneuten ersten Buchungsphase mit der Buchung von Nutzungsberechtigungen für alle fünf Parkmöglichkeiten Rechnung getragen.
Verlässt der Autofahrer - nachgewiesen in einer erneuten zweiten Assoziierungsphase - den Innenstadtbereich, ohne erneut eine der fünf Parkmöglichkeiten zu nutzen, so werden alle fünf Nutzungsberechtigungen in einer erneuten zweiten Buchungsphase storniert.

Diese Ausführungsformen des erfindungsgemäßen Verfahrens, die zusätzlich zur Buchung einer ersten Nutzungsberechtigung für die erste Verkehrsfläche die Buchung einer zweiten Nutzungsberechtigung für die zweite gebührenpflichtige Verkehrsfläche vorsehen, besitzen den Vorteil, dass der Fahrer, egal für welche von zwei oder mehr Fahralternativen er sich entscheidet, stets eine Nutzungsberechtigung für die Verkehrsfläche besitzt, die er befährt, und die Nutzungsberechtigung für die Verkehrsfläche storniert wird, die er nicht befährt: Alle möglicherweise demnächst nötigen Nutzungsberechtigungen werden vorab gebucht, alle schließlich nicht benötigten werden im Nachhinein storniert. Damit ist der Nutzer stets flexibel in seiner Routenwahl, ohne sich um die korrekte Buchung im Voraus und eine Stornierung im Nachhinein kümmern zu müssen. Ein solches Verfahren ist äußerst benutzerfreundlich und wird die Akzeptanz eines Gebührenerhebungsverfahrens, das ein solches erfindungsgemäßes Buchungs- und Stornierungsverfahren umfasst, unter den Nutzern erhöhen.

So kann sich in der ersten Assoziationsphase die Übereinstimmung mit den Bedingungen für das Erkennungsobjekt der ersten gebührenpflichtigen Verkehrsfläche auf weitere gebührenpflichtige Verkehrsflächen, insbesondere einer zweiten gebührenpflichtigen Verkehrsfläche, erstrecken, deren Nutzung alternativ zu der ersten gebührenpflichtigen Verkehrsfläche möglich ist.
In der zweiten Assoziationsphase kann dann - zum Beispiel mittels des Prozessors - durch Datenvergleich geprüft werden, ob die zweiten positionsbezogenen Daten einer Position (a1, b1) des Fahrzeugs entsprechen, die (a) innerhalb eines Erkennungsobjektes (Polygon, Kreis) liegt, (b) auf einer bestimmten Seite innerhalb eines bestimmten Abstandes von dem Erkennungsobjekt (Linie) oder aber, ob (c) die ersten positionsbezogenen Daten mehreren Positionen (a1, b1) ... (ai, bi) des Fahrzeugs entsprechen, deren Interpolation oder geglättete Bewegungslinie ein Erkennungsobjekt von außen nach innen (Kreis, Polygon) oder (d) in einer bestimmten Richtung (Linie) schneiden. Ist eine solche Prüfung positiv, so gilt die entsprechende zweite gebührenpflichtige Verkehrsfläche vermittels ihres Verkehrsflächen-Datensatzes als durch die positionsbezogenen Daten hinsichtlich einer bestätigten Nutzung assoziiert und damit die alternativ zur zweiten gebührenpflichtigen Verkehrsfläche nutzbare erste gebührenpflichtige Verkehrsfläche vermittels dieses Verkehrsflächen-Datensatzes als durch die positionsbezogenen Daten hinsichtlich einer bestätigten Nichtnutzung assoziiert.

Andere Ausführungsformen sehen vor, dass in der ersten Assoziierungsphase zusätzlich zur möglichen, bevorstehenden Nutzung der ersten gebührenpflichtigen Verkehrsfläche die ersten positionsbezogenen Daten mit wenigstens einer möglichen, bevorstehenden Nutzung einer dritten gebührenpflichtigen Verkehrsfläche durch das Fahrzeug assoziiert wird, die dem Fahrzeug auf dem Weg zu einer Nutzung der ersten gebührenpflichtigen Verkehrsfläche vorhergeht, und/ oder zusätzlich zur möglichen, bevorstehenden Nutzung der zweiten gebührenpflichtigen Verkehrsfläche die ersten positionsbezogenen Daten mit wenigstens einer möglichen, bevorstehenden Nutzung einer vierten gebührenpflichtigen Verkehrsfläche durch das Fahrzeug (50) assoziiert wird, die dem Fahrzeug auf dem Weg zu einer Nutzung der zweiten gebührenpflichtigen Verkehrsfläche vorhergeht, und in der ersten Buchungsphase zusätzlich zur ersten Nutzungsberechtigung für die erste gebührenpflichtigen Verkehrsfläche, deren mögliche Nutzung konsekutiv zur möglichen Nutzung der dritten gebührenpflichtigen Verkehrsfläche ist, eine dritte auf das Fahrzeug bezogene Nutzungsberechtigung für die dritte gebührenpflichtige Verkehrsfläche und/ oder zusätzlich zur zweiten Nutzungsberechtigung für die zweite gebührenpflichtigen Verkehrsfläche, deren mögliche Nutzung konsekutiv zur möglichen Nutzung der vierten gebührenpflichtigen Verkehrsfläche ist, eine vierte auf das Fahrzeug bezogene Nutzungsberechtigung für die vierte gebührenpflichtige Verkehrsfläche gebucht wird.
Derartige Ausführungsformen des erfindungsgemäßen Verfahrens eignen sich besonders in einem System zur Erhebung von Gebühren für die Benutzung aufeinanderfolgende Autobahnabschnitte (Segment-Maut oder Abschnittsmaut): Ist der einem initialen gebührenpflichtigen Streckenabschnitt im Fahrbahnverlauf folgende dritte gebührenpflichtige Streckenabschnitt zu kurz, um seine Benutzung im Verlauf einer zweiten Datenerfassungsphase festzustellen, so muss sich die zweite Datenerfassungsphase auf Bereiche erstrecken, die abseits des dritten gebührenpflichtigen Streckenabschnittes liegen, beispielsweise auf einen dem dritten gebührenpflichtigen Streckenabschnitt im Fahrbahnverlauf folgenden ersten Streckenabschnitt. Beispielsweise liefert ein von dem gebührenpflichtigen Fahrzeug mitgeführtes Positionsbestimmungsgerät, einmal pro Sekunde positionsbezogenen Daten des Fahrzeugs. Für ein mit einer Geschwindigkeit von 130 km/ h fahrendes Fahrzeug bedeutet das Positionsangaben des Fahrzeugs in Abständen von 36 m. Werden zur sicheren Feststellung der Anwesenheit des Fahrzeugs auf einem gebührenpflichtigen Streckenabschnitt beispielsweise wenigstens sieben aufeinanderfolgende Positionsangaben benötigt, so legt das Fahrzeug in der dafür benötigten Zeit 217 m zurück. Ist der gebührenpflichtige Streckenabschnitt in diesem Fall kürzer als 217 m, so kann eine Anwesenheit des Fahrzeugs auf diesem Streckenabschnitt nicht zweifelsfrei bestätigt werden. Ebensowenig kann daraus eine Position abgeleitet werden, die der Befahrung des nächstfolgenden (ersten) gebührenpflichtigen Abschnittes vorangeht, geschweige denn genügend Zeit für eine Buchung übrig ist, bevor der erste gebührenpflichtige Streckenabschnitt befahren wird. Folglich muss die Buchung einer dritten Nutzungsberechtigung für den dem ersten gebührenpflichtigen Streckenabschnitt in Fahrtrichtung vorangehenden dritten gebührenpflichtigen Streckenabschnitt bereits vor dem Befahren des dritten gebührenpflichtigen Streckenabschnitts vorzugsweise gemeinsam mit der Buchung der ersten Nutzungsberechtigung für den ersten gebührenpflichtigen Streckenabschnitt erfolgen. Dies geschieht erfindungsgemäß infolge einer ersten Datenerfassungsphase, in der sich das Fahrzeug entweder - wie in diesem Fall - auf dem initialen Streckenabschnitt befindet oder auf einer nicht mautpflichtigen Straße, in Annäherung an eine Auffahrt des dritten gebührenpflichtigen Streckenabschnittes.
Das gleiche gilt in analoger Weise auf einer zur Route des dritten und ersten Streckenabschnitts alternativen Route über einen vierten und zweiten Streckabschnitt: Die Buchung einer vierten Nutzungsberechtigung für den dem zweiten gebührenpflichtigen Streckenabschnitt in Fahrtrichtung vorangehenden vierten gebührenpflichtigen Streckenabschnitt kann bereits vor dem Befahren des vierten gebührenpflichtigen Streckenabschnitts vorzugsweise gemeinsam mit der Buchung der zweiten Nutzungsberechtigung für den zweiten gebührenpflichtigen Streckenabschnitt erfolgen. Dies geschieht erfindungsgemäß infolge einer ersten Datenerfassungsphase, in der sich das Fahrzeug entweder - wie in diesem Fall - auf dem initialen Streckenabschnitt befindet oder auf einer nicht mautpflichtigen Straße, in Annäherung an eine Auffahrt des vierten gebührenpflichtigen Streckenabschnittes, dessen Nutzung alternativ zum dritten Streckenabschnitt ist.

Erst nach Erreichen einer ausreichenden Entfernung von dem vierten gebührenpflichtigen Streckenabschnitt liegen in der zweiten Datenerfassungsphase genügend zweite positionsbezogene Daten vor, die darauf schließen lassen, ob der Fahrer a) keinen der gebuchten Streckenabschnitte, b) nur den vierten gebührenpflichtigen Streckenabschnitt und gegebenenfalls c) zusätzlich dazu auch den zweiten gebührenpflichtigen Streckenabschnitt befahren hat.
Im Falle c) wird das Befahren des zweiten gebührenpflichtigen Streckenabschnitts festgestellt und in Ermangelung alternativer Feststellungen b) und a) als Benutzung des vierten gebührenpflichtigen Streckenabschnitts interpretiert. Es findet folglich weder eine Stornierung des ersten noch des vierten gebührenpflichtigen Streckenabschnittes statt.
Die Erfindung ermöglicht auch die alternativen Fälle a) und b): Im Falle b) wird das Abfahren von der Autobahn an der Anschlussstelle zwischen dem vierten und zweiten gebührenpflichtigen Streckenabschnitt festgestellt. Infolgedessen wird im Einklang mit der Erfindung die Nutzungsberechtigung nicht nur für den ersten gebührenpflichtigen Streckenabschnitt storniert, dessen Nutzung konsekutiv zum dritten ohnehin schon alternativ zum zweiten war, sondern auch die Nutzungsberechtigung für den zweiten gebührenpflichtigen Streckenabschnitt selbst.
Im Falle a) wird das Abfahren von der Autobahn an der Anschlussstelle zwischen dem initialen und vierten gebührenpflichtigen Streckenabschnitt festgestellt. Infolgedessen wird im Einklang mit der Erfindung die Nutzungsberechtigung für den vierten und den zweiten gebührenpflichtigen Streckenabschnitt zusätzlich zu den ohnehin schon erfolgten Stornierungen der erfindungsbedingt nicht genutzten Alternativen des dritten und ersten Streckenabschnitts storniert

Mit dieser Weiterbildung der Erfindung wird vorteilhaft das Auftreten einer Lücke in einer Kette konsekutiver benötigter Nutzungsberechtigungen vermieden, die sich infolge einer nicht oder nur unter besonderen Umständen (zum Beispiel Stau) ausreichenden Dauer der Datenerfassungsphase ergeben könnte.
Es wird darauf hingewiesen, dass dritte und vierte Streckenabschnitte in einander entgegengesetzten Richtungen von einer gemeinsamen ersten Zufahrt ausgehen können, und der erste und der zweite Streckenabschnitt jeweils antiparallel zum dritten und vierten Streckenabschnitt ausgerichtet sind, wobei der erste und der zweite Streckenabschnitt als gemeinsame Abfahrt die erste Zufahrt zum dritten und vierten Streckenabschnitt umfassen. Wenn in diesem Fall der erste und der zweite Streckenabschnitt nicht unmittelbar von einer gemeinsamen Zufahrt ausgehen, so tun sie dies jedoch mittelbar über den Umweg des dritten und vierten Streckenabschnittes, für die in diesem Fall - ganz im Sinne der Erfindung - ebenfalls Nutzungsberechtigungen gebucht wurden.

Noch deutlicher manifestieren sich die Vorteile dieser Ausführungsformen der Erfindung bei der gemeinsamen Buchung von Nutzungsberechtigungen mehrerer in Fahrtrichtung aufeinander folgenden Streckenabschnitte für Streckenabschnitte, die unterirdisch und/oder in Tunneln verlaufen, und auf denen mangels Empfang von GNSS-Satellitensignalen keine Positionsbestimmung möglich ist. Ein Beispiel für eine Autobahn mit derartigen Streckenabschnitten ist der City-Tunnel von Brüssel, der mehrere aufeinander folgende Streckenabschnitte aufweist und von dem an jeder Schnittstellen zwischen zwei unmittelbar aufeinander folgenden Streckenabschnitten von der Autobahn abgefahren werden kann oder auf die an einer solchen Schnittstelle aufgefahren werden kann. Vor Einfahrt in den Tunnel wird dabei erfindungsgemäß für alle Streckenabschnitte im Tunnel (beispielsweise zehn Streckenabschnitte) und dem ersten Streckenabschnitt außerhalb des Tunnels, die zumindest in einer Fahrtrichtung aufeinander folgen, eine Nutzungsberechtigung gebucht. Fährt der Fahrzeugführer beispielsweise nach dem fünften Streckenabschnitt von der Autobahn ab, verlässt er den Tunnel und kommt an einer vorhersehbaren Stelle zurück an die Erdoberfläche, wo zweite positionsbezogene Daten des Fahrzeugs mittels eines vom Fahrzeug mitgeführten GNSS-Empfängers erfasst werden können, die typisch sind für ein Verlassen der Autobahn zwischen dem fünften und sechsten Streckenabschnitt und die als solche mit einer Nichtnutzung des sechsten Streckenabschnittes und der dem sechsten Streckenabschnitt folgenden, ebenfalls gebuchten, Streckenabschnitte assoziiert werden.
Die Nutzungsberechtigungen für den sechsten bis zehnten Streckenabschnitt des Tunnels sowie den in der ursprünglichen Fahrtrichtung nachfolgenden ersten Streckenabschnitt werden infolgedessen storniert und gegebenenfalls für diese Streckenabschnitte erhobene Gebühren werden erstattet oder gutgeschrieben.
Analog ist zu verfahren, wenn für einen Fahrzeugführer im innerstädtischen Verkehr in den Bereich der Tunneleinfahrt an der Schnittstelle zwischen dem fünften und dem sechsten Streckenabschnitt gelangt. Die entsprechend erfassten ersten positionsbezogenen Daten werden sodann mit einer möglichen Nutzung des ersten bis fünften Streckenabschnittes im Tunnel sowie eines dem ersten Streckenabschnitt entgegen der ersten möglichen Fahrtrichtung vorangehenden Streckenabschnittes außerhalb des Tunnels assoziiert, sowie mit einer möglichen Nutzung des sechsten bis zehnten Streckenabschnitts im Tunnel und eines dem zehnten Streckenabschnitt in der zweiten möglichen Fahrtrichtung folgenden Streckenabschnitts außerhalb des Tunnels assoziiert. Für diese zwölf Streckenabschnitte werden Nutzungsberechtigungen gebucht. Storniert werden anschließend diejenigen Nutzungsberechtigungen von jenen Straßenabschnitten, deren Nichtnutzung mit entsprechend erfassten zweiten positionsbezogenen Daten assoziierbar ist.
Damit bietet die Erfindung für ein Gebührenerhebungssystem ohne straßenseitige Sende- oder Empfangseinrichtungen ein vorteilhaftes Verfahren zur Buchung von Nutzungsberechtigungen auch für Straßenabschnitte, auf denen die Anwesenheit gebührenpflichtiger Fahrzeuge nicht unmittelbar aufgrund mangelnden GNSS-Satellitensignalempfangs festgestellt werden kann.

Für ein Buchungs- und Stornierungsverfahren gemäß dem ersten Aspekt der Erfindung, das erfindungsgemäß dadurch gekennzeichnet ist, dass in der ersten Assoziierungsphase zusätzlich zur ersten gebührenpflichtigen Verkehrsfläche die ersten positionsbezogenen Daten mit wenigstens einer möglichen, zur ersten gebührenpflichtigen Verkehrsfläche alternativen, Nutzung einer zweiten gebührenpflichtigen Verkehrsfläche durch das Fahrzeug assoziiert werden und in der Buchungsphase zusätzlich zur ersten Nutzungsberechtigung eine zweite auf das Fahrzeug bezogene Nutzungsberechtigung für die zweite gebührenpflichtige Verkehrsfläche gebucht wird, sehen Ausführungsformen der Erfindung ferner ein Verfahren zur Erhebung von Gebühren vor, bei dem in der zweiten Assoziierungsphase die zweiten positionsbezogenen Daten mit einer bestätigten Nutzung der zweiten gebührenpflichtigen Verkehrsfläche durch das Fahrzeug assoziiert werden, wobei sich wegen der alternativen Nutzungsmöglichkeit der ersten und zweiten gebührenpflichtigen Verkehrsfläche mit der bestätigten Nutzung der zweiten gebührenpflichtigen Verkehrsfläche die bestätigte Nichtnutzung der ersten gebührenpflichtigen Verkehrsfläche ergibt, und die Erhebung einer Gebühr für die Nutzung der zweiten gebührenpflichtigen Verkehrsfläche nach der ersten Assoziierungsphase erfolgt.

Beispielsweise kann die Erhebung einer Gebühr für die Nutzung der zweiten gebührenpflichtigen Verkehrsfläche in der Buchungsphase zusammen mit der Buchung der zweiten Nutzungsberechtigung für die zweite gebührenpflichtige Verkehrsfläche erfolgen.
Zusätzlich kann die Erhebung einer Gebühr für die mögliche Nutzung der ersten gebührenpflichtigen Verkehrsfläche in der Buchungsphase zusammen mit der Buchung der ersten Nutzungsberechtigung für die erste gebührenpflichtige Verkehrsfläche erfolgen. Diese Gebühr für die erste gebührenpflichtige Verkehrsfläche kann mit der Stornierung der Nutzungsberechtigung für die erste gebührenpflichtige Verkehrsfläche in der Stornierungsphase oder in einer der zweiten Assoziierungsphase folgenden Erstattungsphase teilweise erstattet oder annulliert werden.
Eine Gebührenerhebung in der ersten Buchungsphase ist jedoch nicht zwingend. Schließlich kann die Erhebung der Gebühr für die Nutzung der zweiten gebührenpflichtigen Verkehrsfläche stattdessen in einer der zweiten Assoziierungsphase folgenden Erhebungsphase erfolgen, die der zweiten Buchungsphase nachfolgt oder von der zweiten Buchungsphase umfasst ist. In diesem Fall findet in keiner der Phasen des erfindungsgemäßen Verfahrens die Erhebung einer Gebühr für die Nutzung der ersten gebührenpflichtigen Verkehrsfläche statt, dessen Nichtnutzung in der zweiten Assoziierungsphase ja festgestellt wurde.
Mit dem erfindungsgemäßen Gebührenerhebungsverfahren ist es vorteilhaft möglich, eine Gebühr für die Verkehrsfläche zu erheben, die auch tatsächlich benutzt wird. Gegebenenfalls unnötigerweise erhobene Gebühren für nicht benutzte Verkehrsflächen können ohne zusätzlichen Aufwand für den Nutzer erstattet werden.

Für ein Buchungs- und Stornierungsverfahren gemäß dem ersten Aspekt der Erfindung, das zusätzlich dadurch gekennzeichnet ist, dass in der ersten Assoziierungsphase zusätzlich zur möglichen, bevorstehenden Nutzung der ersten gebührenpflichtigen Verkehrsfläche die ersten positionsbezogenen Daten mit wenigstens einer möglichen, bevorstehenden Nutzung einer dritten gebührenpflichtigen Verkehrsfläche durch das Fahrzeug assoziiert wird, die dem Fahrzeug auf dem Weg zu einer Nutzung der ersten gebührenpflichtigen Verkehrsfläche vorhergeht, und in der Buchungsphase zusätzlich zur ersten Nutzungsberechtigung für die erste gebührenpflichtigen Verkehrsfläche, deren mögliche Nutzung konsekutiv zur möglichen Nutzung der dritten gebührenpflichtigen Verkehrsfläche ist, eine dritte auf das Fahrzeug bezogene Nutzungsberechtigung für die dritte gebührenpflichtige Verkehrsfläche gebucht wird, sieht die Erfindung ferner ein Verfahren zur Erhebung von Gebühren vor, bei in der ersten Assoziierungsphase die ersten positionsbezogenen Daten zusätzlich zu den möglichen, bevorstehenden Nutzungen der dritten und der, konsekutiv zur dritten, ersten gebührenpflichtigen Verkehrsfläche die ersten positionsbezogenen Daten mit der möglichen, bevorstehenden Nutzung der zweiten gebührenpflichtigen Verkehrsfläche durch das Fahrzeug assoziiert werden, die der möglichen Nutzung der dritten gebührenpflichtigen Verkehrsfläche nachfolgt und der möglichen Nutzung der ersten gebührenpflichtigen Verkehrsfläche alternativ ist, wobei in der Buchungsphase zusätzlich zur ersten und zweiten Nutzungsberechtigung eine dritte auf das Fahrzeug bezogene Nutzungsberechtigung für die dritte gebührenpflichtige Verkehrsfläche gebucht wird, in der zweiten Assoziierungsphase die zweiten positionsbezogenen Daten mit einer bestätigten Nutzung der zweiten gebührenpflichtigen Verkehrsfläche durch das Fahrzeug assoziiert werden, und die bestätigte Nutzung der zweiten gebührenpflichtigen Verkehrsfläche wegen der bezüglich der dritten gebührenpflichtigen Verkehrsfläche konsekutiven Nutzungsmöglichkeit der zweiten gebührenpflichtigen Verkehrsfläche als bestätigte Nutzung auch der dritten gebührenpflichtigen Verkehrsfläche durch das Fahrzeug interpretiert wird, und wobei das Verfahren ferner die Erhebung einer Gebühr für die Nutzung der zweiten gebührenpflichtigen Verkehrsfläche und die Erhebung einer weiteren Gebühr für die Nutzung der dritten gebührenpflichtigen Verkehrsfläche nach der ersten Assoziierungsphase vorsieht.

Beispielsweise kann die Erhebung einer Gebühr für die Nutzung der ersten, zweiten und dritten gebührenpflichtigen Verkehrsfläche bereits in der ersten Buchungsphase zusammen mit der Buchung der ersten, zweiten und dritten Nutzungsberechtigung für die zweite und dritte gebührenpflichtige Verkehrsfläche erfolgen.
Die Gebühr für die erste gebührenpflichtige Verkehrsfläche kann mit der Stornierung der Nutzungsberechtigung für die erste gebührenpflichtige Verkehrsfläche in der Stornierungsphase oder in einer der zweiten Assoziierungsphase folgenden Erstattungsphase, jeweils im Rahmen der zweiten Buchungsphase, teilweise erstattet oder annulliert werden.
Ferner kann stattdessen die Erhebung der Gebühr für die Nutzung der zweiten und dritten gebührenpflichtigen Verkehrsfläche in einer der zweiten Assoziierungsphase folgenden Erhebungsphase der zweiten Buchungsphase erfolgen. In diesem Fall findet in keiner der Phasen des erfindungsgemäßen Verfahrens die Erhebung einer Gebühr für die Nutzung der ersten gebührenpflichtigen Verkehrsfläche statt, dessen Nichtnutzung die zweite Assoziierungsphase ja festgestellt hat.
Mit dem erfindungsgemäßen Gebührenerhebungsverfahren ist es vorteilhaft möglich, eine Gebühr für zwei tatsächlich benutzte Verkehrsflächen zu erheben. Gegebenenfalls unnötigerweise erhobene Gebühren für nicht benutzte Verkehrsflächen können ohne zusätzlichen Aufwand für den Nutzer erstattet werden.

Ausführungsformen beider erfindungsgemäßer Gebührenerhebungsverfahren sehen vor, dass die in der zweiten Datenerhebungsphase erfassten zweiten positionsbezogenen Daten Daten umfassen, die jene zweite und/ oder dritte gebührenpflichtige Verkehrsfläche identifizieren und von wenigstens einer Einrichtung zur kurzreichweitigen Kommunikation oder Nahbereichskommunikation empfangen und/ oder gesendet werden. Zum Beispiel kann eine straßenseitig angeordnete Funkbake dazu ausgebildet sein, eine Information des aktuell befahrenen Streckenabschnitt, an dem sie angeordnet ist, an ein Fahrzeuggerät, das von einem vorbeifahrenden Fahrzeug mitgeführt wird, zu übertragen. Diese Information wird vom Fahrzeuggerät erfindungsgemäß als Nutzungsbestätigung für den aktuellen Streckenabschnitt interpretiert und als Bestätigung der Nichtnutzung des alternativen Streckenabschnitts, deren Nutzungsberechtigung infolgedessen storniert wird. Damit kann vorteilhaft in Gebieten, in denen kein Empfang von Satellitendaten eines globalen Navigations-Satelliten-Systems (GNSS) durch ein vom Fahrzeuggerät umfasstes GNSS-Positionsbestimmungssystem möglich ist - beispielsweise in Tunneln oder zwischen Hochhäusern - dennoch eine Information zur Bestätigung der Benutzung der gebuchten Verkehrsfläche erhalten werden.

In Ausführungsformen der Erfindung können erfindungsgemäße Buchungs- und Stornierungsverfahren und/ oder Gebührenerhebungsverfahren mit Nutzungsberechtigungen, die jeweils aus dem Fahrzeugkennzeichen abgeleitete Fahrzeugdaten umfassen, zur Bildung eines Verfahrens zum Betrieb eines Gebührenerhebungssystems um ein Kontrollverfahren ergänzt sein, das a) eine Aufnahme eines Bildes von einem Fahrzeug einer gebührenpflichtigen Verkehrsfläche zugeordneten Kontrollbereich vorsieht, b) eine Auswertung des Fahrzeugbildes zur Ermittlung des Fahrzeugkennzeichens und Ableitung diesem Fahrzeugkennzeichen entsprechender Fahrzeugdaten aus dem Fahrzeugkennzeichen und c) einen Vergleich der aus der Bildaufnahme gewonnenen Fahrzeugdaten mit Fahrzeugdaten, die von den vorliegenden Nutzungsberechtigungen für die gebührenpflichtige Verkehrsfläche, von der die besagte Bildaufnahme herrührt, umfasst ist. Dieser Fahrzeugdatenvergleich kann ein negatives Ergebnis haben, welches besagt, dass für die aus der Bildaufnahme gewonnenen Fahrzeugdaten keine äquivalenten Fahrzeugdaten in der Sammlung der vorliegenden Nutzungsberechtigungen für die gebührenpflichtige Verkehrsfläche, von der die besagte Bildaufnahme herrührt, enthalten sind. In diesem Fall wird von dem Gebührenerhebungssystem erkannt, dass das Fahrzeug die gebührenpflichtige Verkehrsfläche, von der die besagte Bildaufnahme herrührt, widerrechtlich benutzt.
Dieser Fahrzeugdatenvergleich kann aber auch ein positives Ergebnis haben, welches besagt, dass für die aus der Bildaufnahme gewonnenen Fahrzeugdaten äquivalente Fahrzeugdaten in der Sammlung der vorliegenden Nutzungsberechtigungen für die gebührenpflichtige Verkehrsfläche, von der die besagte Bildaufnahme herrührt, enthalten sind. In diesem Fall wird von dem Gebührenerhebungssystem erkannt, dass das Fahrzeug die gebührenpflichtige Verkehrsfläche, von der die besagte Bildaufnahme herrührt, vorschriftsmäßig benutzt.

Mit einem solchen Kontrollverfahren wird es vorteilhaft möglich zu prüfen, ob die Buchung der Nutzungsberechtigung und/ oder die Erhebung der Gebühr eines bestimmten Fahrzeugs für die Nutzung einer bestimmten gebührenpflichtigen Verkehrsfläche ordnungsgemäß vorliegt.

Dabei erfolgt die Aufnahme des Fahrzeugbildes vorzugsweise im Kontrollbereich einer gebührenpflichtigen Verkehrsfläche, deren Nutzungsberechtigung nicht storniert wurde.
Vorzugsweise liegt der Kontrollbereich abseits der gebührenpflichtigen Verkehrsfläche in einem Zufahrtsbereich zur gebührenpflichtigen Verkehrsfläche. Damit wird es vorteilhaft möglich und sinnvoll, im Falle eines positiven Ergebnisses des Fahrzeugdatenvergleichs ein Bestätigungssignal zu erzeugen und an das Fahrzeug - zum Beispiel an eine zur Durchführung des erfindungsgemäßen Buchungs- und Stornierungsverfahrens mit dem Fahrzeug mitgeführte elektronische Einrichtung - zu übertragen und/ oder im Falle eines negativen Ergebnisses des Fahrzeugdatenvergleiches ein Fehlersignal zu erzeugen und so zeitig an das Fahrzeug zu übertragen, dass der Fahrer des Fahrzeugs gewahr des Fehlersignals Maßnahmen ergreifen kann, mit denen er vermeiden kann, dass sein Fahrzeug widerrechtlich auf die gebührenpflichtige Verkehrsfläche auffährt, beispielsweise durch das Nutzen einer Wendeschleife.
Nichtsdestoweniger kann der Kontrollbereich direkt am Beginn der gebührenpflichtigen Verkehrsfläche oder im weiteren Verlauf der gebührenpflichtigen Verkehrsfläche angeordnet sein, insbesondere für die Fälle, in denen die gebührenpflichtigen Verkehrsflächen Streckenabschnitte eines Straßenmautsystems sind.

Erfindungsgemäße Buchungs- und Stornierungsverfahren und/ oder erfindungsgemäße Gebührenerhebungsverfahren können sowohl ausschließlich durch mobile, dezentrale Datenverarbeitungseinrichtungen, die von den Fahrzeugen mitgeführt werden, durchgeführt werden als auch durch stationäre, zentrale Datenverarbeitungseinrichtungen, die fernab gebührenpflichtiger Verkehrsflächen angeordnet sind und positionsbezogene Daten von den Fahrzeugen übermittelt bekommen. Ferner können erfindungsgemäße Buchungs- und Stornierungsverfahren und/ oder erfindungsgemäße Gebührenerhebungsverfahren teilweise durch mobile, dezentrale Datenverarbeitungseinrichtungen, die von den Fahrzeugen mitgeführt werden, durchgeführt werden und teilweise durch stationäre, zentrale Datenverarbeitungseinrichtungen, die fernab gebührenpflichtiger Verkehrsflächen angeordnet sind und mit den positionsbezogenen Daten der Fahrzeuge assoziierte gebührenpflichtige Verkehrsflächen von den mobile, dezentrale Datenverarbeitungseinrichtungen der Fahrzeugen übermittelt bekommen, durchgeführt werden.
Schließlich können erfindungsgemäße Buchungs- und Stornierungsverfahren und/ oder erfindungsgemäße Gebührenerhebungsverfahren auch teilweise durch erste stationäre, zentrale Datenverarbeitungseinrichtungen, die fernab gebührenpflichtiger Verkehrsflächen angeordnet sind und von den Fahrzeugen positionsbezogene Daten empfangen, durchgeführt werden und teilweise durch zweite stationäre, zentrale Datenverarbeitungseinrichtungen, die fernab gebührenpflichtiger Verkehrsflächen angeordnet sind und mit den positionsbezogenen Daten des Fahrzeugs assoziierte gebührenpflichtige Verkehrsflächen von den ersten stationären, zentralen Datenverarbeitungseinrichtungen übermittelt bekommen, durchgeführt werden.

Gemäß einem zweiten Aspekt der Erfindung weist eine Fahrzeugeinrichtung gemäß Anspruch 6 wenigstens eine Positionsbestimmungseinrichtung, wenigstens einen Prozessor zum Empfang und zur Verarbeitung von Positionsdaten der Positionsbestimmungseinrichtung und wenigstens einen ersten Datenspeicher auf und ist dadurch gekennzeichnet, dass der Prozessor dazu ausgebildet ist, die in einer ersten Positionsbestimmungsphase von der Positionsbestimmungseinrichtung ermittelten ersten Positionsdaten zu empfangen und zu verarbeiten, indem er die empfangenen ersten Positionsdaten mit der möglichen Nutzung wenigstens einer ersten gebührenpflichtigen Verkehrsfläche und der zur Nutzung der ersten gebührenpflichtigen Verkehrsfläche alternativen möglichen Nutzung einer zweiten gebührenpflichtigen Verkehrsfläche assoziiert, und sowohl eine erste Nutzungsberechtigung für die erste gebührenpflichtige Verkehrsfläche durch die Speicherung eines ersten Nutzungsberechtigungsdatensatzes in dem ersten Datenspeicher als auch
eine zweite Nutzungsberechtigung für die zweite gebührenpflichtige Verkehrsfläche durch die Speicherung eines zweiten Nutzungsberechtigungsdatensatzes in dem ersten Datenspeicher oder einem zweiten Datenspeicher registriert, sowie die in einer auf die erste Positionsbestimmungsphase folgenden zweiten Positionsbestimmungsphase von der Positionsbestimmungseinrichtung ermittelten zweiten Positionsdaten zu empfangen und zu verarbeiten, indem er die empfangenen zweiten Positionsdaten mit einer Nichtnutzung der ersten gebührenpflichtigen Verkehrsfläche assoziiert, und die erste Nutzungsberechtigung durch die Löschung des ersten Nutzungsberechtigungsdatensatzes aus dem ersten Datenspeicher, durch die Verknüpfung des ersten Nutzungsberechtigungsdatensatzes mit einem Ungültigkeitsvermerk oder durch die Speicherung eines ersten Stornierungsdatensatzes für die erste gebührenpflichtige Verkehrsfläche storniert.
Andere Maßnahmen, die ebenfalls geeignet sind, die erste Nutzungsberechtigung durch entsprechende Datenverarbeitungsprozesse unwirksam werden zu lassen, sind vom Schutzbereich des Anspruches 6 umfasst.
Dabei kann der Prozessor ausgebildet sein, die Nichtnutzung der ersten Verkehrsfläche anhand der Assoziation der zweiten Positionsdaten mit einer bestätigten Nutzung der zweiten Verkehrsfläche zu assoziieren. Eine solche Interpretation liegt in dem Charakter der ausschließlich alternativen Nutzung der ersten und zweiten gebührenpflichtigen Verkehrsfläche begründet.
Ferner kann der Prozessor ausgebildet sein, mit einem Nutzungsbestätigungsvermerk für den zweiten Nutzungsberechtigungsdatensatz einen impliziten Ungültigkeitsvermerk für den ersten Nutzungsberechtigungsdatensatz zu erzeugen. Eine derartige datentechnische Lösung entspricht dem Charakter der ausschließlich alternativen Nutzbarkeit der ersten und zweiten gebührenpflichtigen Verkehrsfläche. In diesem Sinne kann der Prozessor ausgebildet sein, von einem auf dem Fahrzeuggerät mitgeführten Gebührenguthaben eine Gebühr für die Nutzung der zweiten gebührenpflichtigen Verkehrsfläche abzubuchen.

Vorzugsweise sind dazu in einer Datenbank des Fahrzeuggerätes Datensätze von Gruppen von alternativ nutzbaren gebührenpflichtigen Verkehrsflächen anhand ihrer jeweiligen Kennungen mit einer ihnen gemeinsamen Gruppenkennung gespeichert. Eine Assoziierung von ersten Positionsdaten mit einer ersten gebührenpflichtigen Verkehrsfläche interpretiert der Prozessor nach einer Datenbankabfrage als Assoziierung mit der ganzen Gruppe von Verkehrsflächen, die die erste gebührenpflichtige Verkehrsfläche einschließlich der zweiten umfasst. Alternativ interpretiert der Prozessor eine Assoziierung von ersten Positionsdaten mit einer Gruppenkennung nach einer Datenbankabfrage als Assoziierung mit allen Verkehrsflächen, die von der Gruppe von Verkehrflächen mit der positionsbedingt ermittelten Gruppenkennung umfasst sind.

Mit einer solchen erfindungsgemäßen Fahrzeugeinrichtung lassen sich die gebührenpflichtigen Verkehrsflächen, denen eine mögliche alternative Nutzung durch das Fahrzeug, welches die Fahrzeugeinrichtung mit sich führt, bevorsteht, zuverlässig und rechtzeitig vor der Nutzung erkennen, um präventiv für jede dieser gebührenpflichtigen Verkehrsflächen eine Nutzungsberechtigung zu erstellen. Darüber hinaus lässt sich mit einer solchen erfindungsgemäßen Fahrzeugeinrichtung zuverlässig die Nichtnutzung derjenigen Verkehrsflächen erkennen, die das Fahrzeug nicht befahren hat und von denen es sich beispielsweise über jeweils einen vorbestimmten Abstand hinaus entfernt hat, um kurativ die korrespondierenden Nutzungsberechtigungen zu annullieren, die nicht benötigt wurden.

Ausführungsformen der erfindungsgemäßen Fahrzeugeinrichtung sehen vor, dass die Positionsbestimmungseinrichtung einen GNSS-Empfänger aufweist, dessen Satelliten-Empfangsdaten von der Positionsbestimmungseinrichtung in die ersten und zweiten Positionsdaten umgerechnet werden.
Ausführungsformen der erfindungsgemäßen Fahrzeugeinrichtung sehen vor, dass der Prozessor eingerichtet ist, die empfangenen ersten Positionsdaten mit der möglichen Nutzung einer ersten gebührenpflichtigen Verkehrsfläche und einer zweiten gebührenpflichtigen Verkehrsfläche zu assoziieren, und eine erste Nutzungsberechtigung für die erste gebührenpflichtige Verkehrsfläche durch die Speicherung eines ersten Nutzungsberechtigungsdatensatzes sowie eine zweite Nutzungsberechtigung für die zweite gebührenpflichtige Verkehrsfläche durch die Speicherung eines zweiten Nutzungsberechtigungsdatensatzes in dem ersten Datenspeicher zu registrieren. Die Nutzungen der ersten und der zweiten Verkehrsflächen schließen einander erfindungsgemäß aus, weil eine alternative Nutzung der ersten und der zweiten Verkehrsfläche vorgesehen ist. Nutzungen der ersten und einer dritten Verkehrsflächen können einander bedingen, wenn eine konsekutive Nutzung der ersten nach der dritten Verkehrsfläche vorgesehen ist. Nutzungen der zweiten und einer vierten Verkehrsflächen können einander bedingen, wenn eine konsekutive Nutzung der zweiten nach der vierten Verkehrsfläche vorgesehen ist.
Ausführungsformen der erfindungsgemäßen Fahrzeugeinrichtung sehen vor, dass der Prozessor eingerichtet ist, im Falle mehrerer vorliegender Nutzungsberechtigungen für mehrere gebührenpflichtige Verkehrsflächen, die empfangenen zweiten Positionsdaten mit einer Nichtnutzung wenigstens einer ersten der mehreren gebührenpflichtigen Verkehrsfläche zu assoziieren, und von den vorliegenden Nutzungsberechtigungen diejenige der ersten gebührenpflichtigen Verkehrsfläche durch die Löschung des Nutzungsberechtigungsdatensatzes dieser ersten gebührenpflichtigen Verkehrsfläche aus dem ersten Datenspeicher oder durch die Verknüpfung des ersten Nutzungsberechtigungsdatensatzes mit einem Ungültigkeitsvermerk zu stornieren.
Ausführungsformen der erfindungsgemäßen Fahrzeugeinrichtung sehen vor, dass der Prozessor eingerichtet ist, im Falle mehrerer vorliegender Nutzungsberechtigungen für mehrere gebührenpflichtige Verkehrsflächen, die empfangenen zweiten Positionsdaten mit der tatsächlichen Nutzung wenigstens einer zweiten der mehreren gebührenpflichtigen Verkehrsflächen zu assoziieren, infolgedessen die Nutzung der zweiten gebührenpflichtigen Verkehrsfläche mit einer Nichtnutzung von wenigstens einer ersten der übrigen gebührenpflichtigen Verkehrsflächen zu assoziieren und von den vorliegenden Nutzungsberechtigungen durch die Löschung wenigstens eines ersten Nutzungsberechtigungsdatensatzes der ersten gebührenpflichtigen Verkehrsfläche aus dem ersten Datenspeicher oder durch die Verknüpfung des ersten Nutzungsberechtigungsdatensatzes mit einem Ungültigkeitsvermerk zu stornieren.

Ausführungsformen der erfindungsgemäßen Fahrzeugeinrichtung sehen vor, dass der Nutzungsberechtigungsdatensatz einer gebührenpflichtigen Verkehrsfläche ein Verkehrsflächen-Datenelement aufweist, das die gebührenpflichtige Verkehrsfläche repräsentiert, ein Buchungszeit-Datenelement, das die Zeit (Datum, Uhrzeit) repräsentiert, zu der der Nutzungsberechtigungsdatensatz erstellt wurde, und/ oder ein Datensatz-Datenelement, das den Nutzungsberechtigungsdatensatz eindeutig identifiziert, zum Beispiel ein Primärschlüssel in Form eine laufender Nummer.
Ausführungsformen der erfindungsgemäßen Fahrzeugeinrichtung weisen eine Anzeigevorrichtung auf, die dazu eingerichtet ist, Information über die gebuchten Nutzungsberechtigungen anzuzeigen, beispielsweise indem sie für eine mautpflichtige Autobahn noch nicht benutzte gebührenpflichtige Streckenabschnitte, für die eine Nutzungsberechtigung vorliegt, zusammen mit dem aktuell benutzten gebührenpflichtigen Straßenabschnitt in Textform auflistet. Die Liste kann um Symbole ergänzt sein, die die gebührenpflichtigen Straßenabschnitte, beispielsweise hinsichtlich ihrer Lage bezüglich des Fahrzeugs, näher kennzeichnen.
Ausführungsformen der erfindungsgemäßen Fahrzeugeinrichtung sind als Navigationseinrichtung ausgebildet, die eine Anzeigevorrichtung zur graphischen Anzeige der aktuellen Position des Fahrzeugs und zur graphischen Anzeige von gebührenpflichtiger Verkehrsflächen aufweist sowie Mittel zur Kennzeichnung der angezeigten gebührenpflichtigen Verkehrsflächen hinsichtlich vorliegender Nutzungsberechtigungen.
Dazu kann eine Buchungsnachricht von der Fahrzeugeinrichtung erhalten oder erzeugt werden, die eine Buchungsinformation für vorausliegend alternativ und gegebenenfalls auch konsekutiv befahrbare gebührenpflichtige Streckenabschnitte enthält.
Damit kann dem Nutzer vorteilhaft Information über die gebuchten Nutzungsberechtigungen angezeigt werden, beispielsweise als Daten auf einer Anzeigevorrichtung der Fahrzeugeinrichtung oder aber als entsprechend eingefärbte oder durch Zusatzelemente entsprechend gekennzeichnete Streckenabschnitte in der graphischen Darstellung einer digitalen Karte in der Navigationseinrichtung (z. B. grün für vorausliegenden Abschnitte mit entsprechender Nutzungsberechtigung, blau für mit der gebuchten Nutzungsberechtigung aktuell befahrenen Abschnitt, rot für Abschnitte ohne Nutzungsberechtigung, keine Einfärbung für Abschnitte, die nicht nächstliegend befahrbar sind).

Die Fahrzeugeinrichtung kann als fest im Fahrzeug eingebautes Fahrzeugmodul ausgebildet sein oder ein fest im Fahrzeug eingebautes Fahrzeugmodul aufweisen.
Die Fahrzeugeinrichtung kann auch als mobiles, zur Mitführung im Fahrzeug bestimmtes Fahrzeuggerät ausgebildet sein oder ein zur Mitführung im Fahrzeug vorgesehenes mobiles Fahrzeuggerät umfassen.
Die Navigationseinrichtung kann als fest im Fahrzeug eingebautes Navigationsmodul ausgebildet sein oder ein fest im Fahrzeug eingebautes Navigationsmodul aufweisen.
Die Navigationseinrichtung kann auch als mobiles, zur Mitführung im Fahrzeug bestimmtes, Navigationsgerät ausgebildet sein oder ein zur Mitführung im Fahrzeug vorgesehenes mobiles Navigationsgerät umfassen.

Gemäß einem zum zweiten Aspekt der Erfindung alternativen dritten Aspekt der Erfindung ist ein Mobilfunkgerät mit wenigstens einem Prozessor und wenigstens einer Positionsbestimmungseinrichtung ausgerüstet, die dem Prozessor in einer ersten Datenerfassungsphase erste Positionsdaten bereitstellt und in einer zweiten Datenerfassungsphase zweite Positionsdaten bereitstellt, wobei der Prozessor dazu ausgebildet ist, anhand der ersten Positionsdaten die mögliche Nutzung wenigstens einer ersten gebührenpflichtigen Verkehrsfläche und die zur Nutzung der ersten gebührenpflichtigen Verkehrsfläche alternativ mögliche Nutzung einer zweiten gebührenpflichtigen Verkehrsfläche festzustellen, einen ersten Webdienst (213) und/ oder einen anderen Webdienst über eine Kommunikationsschnittstelle des Mobilfunkgerätes aufzurufen und eine Anfrage zur Buchung einer ersten Nutzungsberechtigung und/ oder zur Erhebung einer ersten Gebühr für die erste gebührenpflichtige Verkehrsfläche an den ersten Webdienst und eine Anfrage zur Buchung einer zweiten Nutzungsberechtigung und/ oder zur Erhebung einer zweiten Gebühr für die zweite gebührenpflichtige Verkehrsfläche an den ersten oder den anderen Webdienst zu stellen , und anhand der zweiten Positionsdaten eine Nichtnutzung der ersten gebührenpflichtigen Verkehrsfläche festzustellen und den ersten Webdienst oder einen zweiten Webdienst über die Kommunikationsschnittstelle des Mobilfunkgerätes aufzurufen und eine Anfrage zur Stornierung der ersten Nutzungsberechtigung und/ oder zur zumindest teilweisen Erstattung der ersten Gebühr für die erste gebührenpflichtige Verkehrsfläche an den wenigstens einen ersten Webdienst oder den zweiten Webdienst zu stellen.
Mit einem solchen Mobilfunkgerät ist es dem Nutzer möglich, Nutzungsberechtigungen für Verkehrsflächen zu buchen, ohne dass ihm dafür eine Fahrzeugeinrichtung (beispielsweise eine gemäß des zweiten Aspekts der Erfindung) von der Gebührenerhebungsstelle bereitgestellt werden müsste. Zeitliche Unwägbarkeiten bei der Verwendung einer elektronischen Einrichtung zur Buchung von Nutzungsberechtigungen, deren Funktion nicht seitens der Gebührenerhebungsstelle verantwortet wird, können durch die präventive Buchung von Nutzungsberechtigungen von zur Befahrung anstehender Verkehrsflächen mit der Möglichkeit ihrer Stornierung für den Fall, dass sie nicht benötigt werden, vorteilhaft aufgefangen werden.
Ein solches Mobilfunkgerät kann beispielsweise als Mobiltelefon ausgebildet sein.
Der Prozessor ist zum Beispiel dann erfindungsgemäß ausgebildet oder konfiguriert, wenn er - beispielsweise durch das Laden eines zur Ausführung der erfindungsgemäßen Maßnahmen bestimmten Computerprogramms in einen Arbeitsspeicher des Mobilfunkgerätes, auf den der Prozessor Zugriff hat - eingerichtet ist, die erfindungsgemäßen Maßnahmen durchzuführen.
Vorzugsweise sehen der erste Webdienst und/ oder der andere Webdienst Mittel zum Empfang von Informationen zur Identifizierung der ersten gebührenpflichtige Verkehrsfläche und/oder Mittel zum Empfang von Informationen zur Identifizierung der zweiten gebührenpflichtigen Verkehrsfläche, sowie Mittel zum Empfang von Informationen zur Identifizierung des Fahrzeugs vor, auf das sich die für die erste und die zweite gebührenpflichtige Verkehrsfläche zu buchende Nutzungsberechtigung bezieht.
Informationen zur Identifizierung der ersten gebührenpflichtigen Verkehrsfläche können durch die ersten Positionsdaten gegeben sein; sie können aber auch durch ein erstes Verkehrsflächen-Datenelement gegeben sein, das die erste gebührenpflichtige Verkehrsfläche repräsentiert.
Informationen zur Identifizierung der zweiten gebührenpflichtigen Verkehrsfläche können durch die ersten Positionsdaten gegeben sein; sie können aber auch durch ein zweites Verkehrsflächen-Datenelement gegeben sein, das die zweite gebührenpflichtige Verkehrsfläche repräsentiert.
Informationen zur Identifizierung des Fahrzeugs können durch das Fahrzeug-Kennzeichen gegeben sein, welches durch ein Fahrzeug-Datenelement repräsentiert sein kann; sie können aber auch durch eine Nutzerkennung, beispielsweise die Mobilfunk-Rufnummer des Mobilfunkgerätes gegeben sein, die als Rufnummer-Datenelement in Verknüpfung mit dem Fahrzeug-Datenelement als Nutzerdatensatz in einem Datenspeicher gespeichert ist, der von dem Webdienst umfasst ist oder mit dem Webdienst zumindest zeitweise in datentechnischer Verbindung steht.
Vorzugsweise ist der Prozessor des Mobilfunkgerätes dazu ausgebildet, Informationen zur Identifizierung der ersten gebührenpflichtigen Verkehrsfläche und von Informationen zur Identifizierung des Fahrzeugs mit oder nach dem Stellen der Anfrage an den ersten Webdienst über eine Kommunikationsschnittstelle des Mobilfunkgerätes an den ersten Webdienst zu übermitteln.
Die Verwendung eines zweiten Webdienstes zu Stornierungszwecken macht es möglich, Datenkommunikationskapazitäten, Datenverarbeitungskapazitäten und Datenspeicherkapazitäten auf den Buchungsprozess im ersten Webdienst zu konzentrieren, der gegenüber dem Stornierungsprozess als vorrangig einzustufen ist.

Ausführungsformen erfindungsgemäßen Mobilfunkgeräts sind dadurch gekennzeichnet, dass der Prozessor (11) dazu ausgebildet ist, anhand der ersten Positionsdaten wenigstens eine Information zum Identifizieren des ersten Webdienstes (213) und/ oder des anderen Webdienstes zu ermitteln und diese zu verwenden, um den ersten Webdienst (213) und/ oder den anderen Webdienst über die Kommunikationsschnittstelle (13) des Mobilfunkgerätes (10) aufzurufen.
Ausführungsformen des erfindungsgemäßen Mobilfunkgeräts sind dadurch gekennzeichnet, dass der Prozessor dazu ausgebildet ist, anhand der ersten Positionsdaten eine Information zum Identifizieren eines anderen Webdienstes einer zweiten Gebührenerhebungsstelle zum Buchen einer zweiten Nutzungsberechtigung der mit den ersten Positionsdaten assoziierten zweiten gebührenpflichtigen Verkehrsfläche zu ermitteln und diese zu verwenden, um den anderen Webdienst über die Kommunikationsschnittstelle des Mobilfunkgerätes aufzurufen und eine Anfrage zur Buchung der zweiten Nutzungsberechtigung und/ oder zur Erhebung der zweiten Gebühr für die zweite gebührenpflichtige Verkehrsfläche an den anderen Webdienst zu stellen, wobei der Prozessor dazu ausgebildet ist, die Anfrage zur Buchung der ersten Nutzungsberechtigung und/ oder zur Erhebung der ersten Gebühr für die erste gebührenpflichtige Verkehrsfläche an den ersten Webdienst einer ersten Gebührenerhebungsstelle zu stellen.
Mit diesen Ausführungsformen wird es vorteilhaft möglich, unterschiedliche Typen von Verkehrsflächen (Innenstadtbereiche für City-Maut, Streckenabschnitte für Umgehungsmaut) oder unterschiedliche Eigentümer verschiedener Verkehrsflächen (Betreiber A einer ersten Autobahn A 79, Betreiber B einer zweiten Autobahn A 78) zu berücksichtigen, indem an verschiedene Webdienste, die von unterschiedlichen Betreibern für den jeweiligen Typ von Verkehrsflächen und/ oder von unterschiedlichen Eigentümern von verschiedenen Verkehrsflächen gegebenenfalls gleichen Typs betrieben werden, die Anfrage zur Buchung einer Nutzungsberechtigung für die jeweilige Verkehrsfläche zu stellen, für die die jeweilige Gebührenerhebungsstelle, die den jeweiligen Webdienst anbietet, die Erhebungshoheit besitzt.
Optional kann der Prozessor dazu ausgebildet sein, eine Nichtnutzung der ersten gebührenpflichtigen Verkehrsfläche aus einer anhand der zweiten Positionsdaten festgestellten Nutzung der zweiten gebührenpflichtigen Verkehrsfläche abzuleiten.

Gemäß einem vierten Aspekt der Erfindung ist ein Computerprogrammprodukt gekennzeichnet durch Mittel zur Ausführung folgender Anweisungen: (a) Empfang von ersten positionsbezogenen Daten eines Mobilfunkgerätes, (b) Assoziierung der ersten positionsbezogenen Daten des Mobilfunkgerätes mit einer möglichen Nutzung wenigstens einer ersten gebührenpflichtigen Verkehrsfläche und mit einer zur Nutzung der ersten gebührenpflichtigen Verkehrsfläche alternativ möglichen Nutzung einer zweiten gebührenpflichtigen Verkehrsfläche, (c) Sendung von wenigstens einer zur Buchung einer ersten Nutzungsberechtigung und/ oder Erhebung einer ersten Gebühr für die erste gebührenpflichtige Verkehrsfläche und zur Buchung einer zweiten Nutzungsberechtigung und/ oder Erhebung einer zweiten Gebühr für die zweite gebührenpflichtige Verkehrsfläche an wenigstens eine erste zentrale Datenverarbeitungseinrichtung, (d) Empfang von zweiten positionsbezogenen Daten des Mobilfunkgerätes, (e) Assoziierung der zweiten positionsbezogenen Daten des Mobilfunkgerätes mit einer Nichtnutzung der ersten gebührenpflichtigen Verkehrsfläche und (f) Sendung von wenigstens einer Aufforderung zur Stornierung der ersten Nutzungsberechtigung und/ oder zumindest teilweisen Erstattung der ersten Gebühr für die erste gebührenpflichtige Verkehrsfläche an die erste zentrale Datenverarbeitungseinrichtung oder eine zweite zentrale Datenverarbeitungseinrichtung.
Mit einem solchen Computerprogrammprodukt ist es für einen Nutzer von gebührenpflichtigen Verkehrsflächen vorteilhaft möglich, rechtzeitig für jede zur Benutzung anstehende Verkehrsfläche eine Nutzungsberechtigung zu erhalten, ohne diese aufrechterhalten zu müssen, wenn er sie nicht benötigt.
Mit einem solchen Computerprogrammprodukt ist es für eine Gebührenerhebungsstelle vorteilhaft möglich, einem Nutzer von gebührenpflichtigen Verkehrsflächen rechtzeitig für jede zu seiner Benutzung anstehende Verkehrsfläche eine Nutzungsberechtigung anzubieten, so dass die Kontrollmaßnahmen der Gebührenerhebungsstelle oder des Verkehrsflächenbesitzers nicht auf nur einen Teil der gebührenpflichtigen Verkehrsfläche eingeschränkt sind, sondern sich über den gesamten Bereich der gebührenpflichtigen Verkehrsfläche erstrecken können, weil die Nutzungsberechtigung schon vor der eigentlichen Benutzung vorliegt und nicht erst bei erkannter Benutzung gebucht wird, was insbesondere auf kürzeren Streckenabschnitten aufgrund benötigten Dauer zur Erkennung dazu führen kann, dass eine Nutzungsberechtigung erst bei Verlassen des gebührenpflichtigen Streckenabschnitts vorliegt, wenn sie nicht im Voraus präventiv gebucht wird.
Ein solches Computerprogrammprodukt kann beispielsweise gegeben sein durch eine Applikation, die, ausgeführt auf einem Mobiltelefon gemäß dem dritten Aspekt der Erfindung, ein Buchungs- und Stornierungsverfahren gemäß dem ersten Aspekt der Erfindung durchführt.
Beispielsweise kann die Sendung einer Aufforderung zur Buchung einer ersten Nutzungsberechtigung und/ oder Erhebung einer ersten Gebühr für die erste gebührenpflichtige Verkehrsfläche an wenigstens eine erste zentrale Datenverarbeitungseinrichtung durch die Sendung einer Textnachricht in Form einer Buchungs-SMS von dem Mobilfunkgerät an die erste zentrale Datenverarbeitungseinrichtung erfolgen, die vorzugsweise Informationen zur Identifizierung der ersten gebührenpflichtigen Verkehrsfläche und Informationen zur Identifizierung des Fahrzeugs umfasst sowie eine Information zur Natur der Nachricht (Buchung oder Stornierung).
Ferner kann die Sendung einer Aufforderung zur Buchung einer zweiten Nutzungsberechtigung und/ oder Erhebung einer zweiten Gebühr für die zweite gebührenpflichtige Verkehrsfläche zusammen mit der Aufforderung zur Buchung der ersten Nutzungsberechtigung und/ oder Erhebung der ersten Gebühr für die erste gebührenpflichtige Verkehrsfläche an die erste zentrale Datenverarbeitungseinrichtung oder unabhängig von der Aufforderung zur Buchung der ersten Nutzungsberechtigung und/ oder Erhebung der ersten Gebühr für die erste gebührenpflichtige Verkehrsfläche an eine andere zentrale Datenverarbeitung durch die Sendung einer Textnachricht in Form einer Buchungs-SMS von dem Mobilfunkgerät an die erste oder die andere zentrale Datenverarbeitungseinrichtung erfolgen, die vorzugsweise Informationen zur Identifizierung der zweiten gebührenpflichtigen Verkehrsfläche und Informationen zur Identifizierung des Fahrzeugs umfasst sowie eine Information zur Natur der Nachricht (Buchung oder Stornierung).

Die Bereitstellung einer zweiten zentralen Datenverarbeitungseinrichtung allein für die Stornierung besitzt den Vorteil, dass datentechnische Engpässe bei der zeitkritischen Buchung vermieden werden können, weil die weniger zeitkritischen Stornierungen von einem andere zentralen Datenverarbeitungseinrichtung entgegengenommen werden als demjenigen, der für die Buchungen verwendet wird.
Ausführungsformen des erfindungsgemäßen Computerprogrammprodukts sehen vor, dass das Computerprogrammprodukt zur Sendung der Buchungs- beziehungsweise Erhebungsaufforderung Mittel zum Aufrufen eines ersten, durch die erste zentrale Datenverarbeitungseinrichtung bereitgestellten oder mit der ersten zentralen Datenverarbeitungseinrichtung gekoppelten, Webdienstes aufweist, die Sendung der Aufforderung zur Buchung der ersten Nutzungsberechtigung und/ oder Erhebung der ersten Gebühr für die erste gebührenpflichtige Verkehrsfläche sowie zur Buchung der zweiten Nutzungsberechtigung und/ oder Erhebung der zweiten Gebühr für die zweite gebührenpflichtige Verkehrsfläche durch Stellen einer Anfrage zur Buchung der ersten Nutzungsberechtigung und/ oder Erhebung einer ersten Gebühr für die erste gebührenpflichtige Verkehrsfläche sowie zur Buchung der zweiten Nutzungsberechtigung und/ oder Erhebung einer zweiten Gebühr für die zweite gebührenpflichtige Verkehrsfläche an den Webdienst erfolgt, das Computerprogrammprodukt zur Sendung der Stornierungs- beziehungsweise Erstattungsaufforderung Mittel zum Aufrufen des ersten Webdienstes oder einer eines, durch die erste zentrale Datenverarbeitungseinrichtung bereitgestellten oder mit der ersten zentralen Datenverarbeitungseinrichtung gekoppelten, zweiten Webdienstes aufweist und die Sendung der Aufforderung zur Stornierung der ersten Nutzungsberechtigung und/ oder zumindest teilweisen Erstattung der ersten Gebühr für die erste gebührenpflichtige Verkehrsfläche durch Stellen einer Anfrage zur Stornierung der ersten Nutzungsberechtigung und/ oder zumindest teilweisen Erstattung der ersten Gebühr und/ oder Erhebung einer ersten Gebühr für die erste gebührenpflichtige Verkehrsfläche an den ersten oder den zweiten Webdienst erfolgt.
Die Bereitstellung eines Webdienstes als Schnittstelle zwischen der zentralen Datenverarbeitungseinrichtung, die die Nutzungsberechtigungen und/ oder die Gebührenerhebungen verwaltet, indem sie die korrespondierenden Datensätze in einem Datenspeicher der zentralen Datenverarbeitungseinrichtung speichert, bietet dem Nutzer ein komfortables Mittel zur Durchführung von Buchungen und/ oder Stornierungen, das in einfacher Weise über das Internet gemäß üblicher für Mobilfunkgeräte verfügbarer Protokolle (z. B. WAP) genutzt werden kann.
Die Bereitstellung eines zweiten Webdienstes allein für die Stornierung besitzt den Vorteil, dass datentechnische Engpässe bei der zeitkritischen Buchung vermieden werden können, weil die weniger zeitkritischen Stornierungen über einen anderen Webdienst abgewickelt werden als demjenigen, der für die Buchungen verwendet wird.
Ausführungsformen des erfindungsgemäßen Computerprogrammprodukts sehen ferner vor, dass der Empfang der ersten und zweiten positionsbezogenen Daten des Mobilfunkgerätes durch Entgegennahme der ersten und zweiten positionsbezogenen Daten von einer vom Mobilfunkgerät umfassten Positionsbestimmungseinrichtung erfolgt und die Sendung der Aufforderung zur Buchung der ersten Nutzungsberechtigung und/ oder Erhebung der ersten Gebühr für die erste gebührenpflichtige Verkehrsfläche und zur Buchung der zweiten Nutzungsberechtigung und/ oder Erhebung der zweiten Gebühr für die zweite gebührenpflichtige Verkehrsfläche über eine Kommunikationsschnittstelle des Mobilfunkgerätes erfolgt. Dazu können die Mittel zum Empfang der ersten und zweiten positionsbezogenen Daten des Mobilfunkgerätes zur Entgegennahme der ersten und zweiten positionsbezogenen Daten von einer vom Mobilfunkgerät umfassten Positionsbestimmungseinrichtung ausgebildet sein und die Mittel zur Sendung der Aufforderung zur Buchung der ersten Nutzungsberechtigung und/ oder Erhebung der ersten Gebühr für die erste gebührenpflichtige Verkehrsfläche sowie zur Buchung der zweiten Nutzungsberechtigung und/ oder Erhebung der zweiten Gebühr für die zweite gebührenpflichtige Verkehrsfläche ausgebildet sein, eine Kommunikationsschnittstelle des Mobilfunkgerätes zur Sendung zu nutzen.
Mit einem solchen Computerprogramm wird es möglich, dass der Nutzer mittels seines Mobilfunkgerätes eigenständig und unmittelbar Anfragen zu Buchungen und Stornierungen von Nutzungsberechtigungen an die zentrale Datenverarbeitungseinrichtung stellen kann, nachdem die positionsbezogenen Daten bereits auf dem Mobilfunkgerät mit einer entsprechenden gebührenpflichtigen Verkehrsfläche assoziiert werden, wozu im erfindungsgemäßen Computerprogrammprodukt das entsprechende Mittel vorhanden ist.

Gemäß diesen Ausführungsformen wird das Computerprogrammprodukt auf einem Mobilfunkgerät ausgeführt. Ein solches Computerprogrammprodukt kann beispielsweise von einem EETS-Anbieter (EETS = European Electronic Toll Service (Europäischer Elektronischer Mautdienst) gemäß Richtlinie 2004/52/EG) zur Verfügung gestellt werden.
Ein Mobilfunkgerät, das ausgerüstet ist, Assoziationen von positionsbezogen Daten mit gebührenpflichtigen Verkehrsflächen durchzuführen, wird auch als "Thick Client" bezeichnet, weil für die Durchführung dieser Aufgabe eine große Rechenleistung und eine große Menge an verkehrsflächenbezogenen Daten vonnöten sind.
Ausführungsformen des erfindungsgemäßen Computerprogrammprodukts sehen alternativ dazu, dass der Empfang der ersten positionsbezogenen Daten des Mobilfunkgerätes durch Entgegennahme einer vom Mobilfunkgerät in ein Mobilfunknetz an eine vermittelnde zentrale Datenverarbeitungseinrichtung versandten ersten Nachricht, die die ersten positionsbezogenen Daten enthält, erfolgt und der Empfang der zweiten positionsbezogenen Daten des Mobilfunkgerätes durch Entgegennahme einer vom Mobilfunkgerät in das Mobilfunknetz an die eine vermittelnde zentrale Datenverarbeitungseinrichtung versandten zweiten Nachricht, die die zweiten positionsbezogenen Daten enthält, erfolgt und die Sendung der Aufforderung zur Buchung der ersten Nutzungsberechtigung und/ oder Erhebung der ersten Gebühr für die erste gebührenpflichtige Verkehrsfläche und zur Buchung der zweiten Nutzungsberechtigung und/ oder Erhebung der zweiten Gebühr für die zweite gebührenpflichtige Verkehrsfläche über eine Kommunikationsschnittstelle der vermittelnden zentralen Datenverarbeitungseinrichtung erfolgt.
Dazu können die Mittel zum Empfang der ersten positionsbezogenen Daten des Mobilfunkgerätes ausgebildet sein, eine vom Mobilfunkgerät in ein Mobilfunknetz an eine vermittelnde zentrale Datenverarbeitungseinrichtung versandte erste Nachricht, die die ersten positionsbezogenen Daten enthält, entgegenzunehmen, die Mittel zum Empfang der zweiten positionsbezogenen Daten des Mobilfunkgerätes ausgebildet sein, eine vom Mobilfunkgerät in das Mobilfunknetz an die vermittelnde zentrale Datenverarbeitungseinrichtung versandte zweiten Nachricht, die die zweiten positionsbezogenen Daten enthält, entgegenzunehmen und die Mittel zur Sendung der Aufforderung zur Buchung der ersten Nutzungsberechtigung und/ oder Erhebung der ersten Gebühr für die erste gebührenpflichtige Verkehrsfläche und zur Buchung der zweiten Nutzungsberechtigung und/ oder Erhebung der zweiten Gebühr für die zweite gebührenpflichtige Verkehrsfläche ausgebildet sein, eine Kommunikationsschnittstelle der vermittelnden zentralen Datenverarbeitungseinrichtung zu nutzen.
Mit einem solchen Computerprogramm wird es möglich, dass der Nutzer mittels seines Mobilfunkgerätes Anfragen zu Buchungen und Stornierungen von Nutzungsberechtigungen mittelbar durch eine vermittelnde zentrale Datenverarbeitungseinrichtung stellen lassen kann, nachdem die positionsbezogenen Daten erst auf der zentralen Datenverarbeitungseinrichtung mit den unter dem Attribut und/ oder der Maßgabe einer Alternativnutzung miteinander verknüpften entsprechenden gebührenpflichtigen Verkehrsflächen assoziiert wurden, wozu im erfindungsgemäßen Computerprogrammprodukt das entsprechende Mittel vorhanden ist.
Gemäß dieser Ausführungsformen wird das Computerprogrammprodukt auf einer vermittelnden zentralen Datenverarbeitungseinrichtung ausgeführt, beispielsweise derjenigen einer Maut-Vermittlungsstelle, deren zentrale Aufgabe für eine Vielzahl von Nutzern entsprechender Mobilfunkgeräte es ist, die Assoziation der positionsbezogenen Daten zu einer den positionsbezogenen Daten zuordenbaren Gruppe von alternativ nutzbaren gebührenpflichtigen Verkehrsflächen, die sich durch einen gemeinsamen Ausgangspunkt auszeichnen, durchzuführen. Die Anfragen zur Buchung und zur Stornierung werden von der vermittelnden zentralen Datenverarbeitungseinrichtung (zum Beispiel die eines EETS-Anbieters) an die besagte erste und/ oder zweite zentrale Datenverarbeitungseinrichtung (zum Beispiel die eines Mautbetreibers) gerichtet. Ein Mobilfunkgerät, das nicht ausgerüstet ist, Assoziationen von positionsbezogen Daten mit gebührenpflichtigen Verkehrsflächen durchzuführen, wird auch als "Thin Client" bezeichnet, weil die Assoziation, die eine große Rechenleistung und eine große Menge an verkehrsflächenbezogenen Daten benötigt, nicht von dem Mobilfunkgerät selbst durchgeführt wird, sondern von einer zentralen Datenverarbeitungseinrichtung, die dazu die nötigen positionsbezogenen Daten von dem Mobilfunkgerät übernimmt.

Gemäß einem fünften Aspekt der Erfindung weist ein System für die Erhebung von Gebühren für die Nutzung von gebührenpflichtigen Verkehrsflächen durch ein Fahrzeug gemäß Anspruch 13 wenigstens einer zentralen Datenverarbeitungseinrichtung auf, die wenigstens einen ersten zentralen Prozessor aufweist und wenigstens einen ersten zentralen Datenspeicher aufweist, sowie und wenigstens eine vom Fahrzeug mitgeführte elektronische Einrichtung, die über wenigstens eine Positionsbestimmungseinrichtung, wenigstens einen dezentralen Prozessor zum Empfang und zur Verarbeitung von Positionsdaten der Positionsbestimmungseinrichtung sowie wenigstens einer zur zumindest teilweisen drahtlosen Kommunikation mit der zentralen Datenverarbeitungseinrichtung ausgebildeten dezentralen Kommunikationseinrichtung verfügt, wobei der dezentrale Prozessor dazu ausgebildet ist, die in einer ersten Positionsbestimmungsphase von der Positionsbestimmungseinrichtung ermittelten ersten Positionsdaten zu empfangen und zu verarbeiten, indem er der dezentralen Kommunikationseinrichtung zumindest einige zweite Daten der zweiten Positionsdaten oder aus den zweiten Positionsdaten abgeleitete zweite Daten zusammen mit einer Nutzerkennung zur Übertragung an die zentrale Datenverarbeitungseinrichtung bereitstellt und die in einer zweiten Positionsbestimmungsphase von der Positionsbestimmungseinrichtung ermittelten zweiten Positionsdaten zu empfangen und zu verarbeiten, indem er der dezentralen Kommunikationseinrichtung zumindest einige erste Daten der ersten Positionsdaten oder aus den ersten Positionsdaten abgeleitete erste Daten zusammen mit einer Nutzerkennung zur Übertragung an die zentrale Datenverarbeitungseinrichtung bereitstellt und wobei der erste zentrale Prozessor dazu ausgebildet ist, die von der elektronischen Einrichtung an die zentrale Datenverarbeitungseinrichtung übertragenen ersten Daten und die Nutzerkennung zu empfangen und zu verarbeiten, indem er eine der Nutzerkennung zugeordnete erste Nutzungsberechtigung für eine erste gebührenpflichtige Verkehrsfläche, die aus den ersten Daten assoziierbar oder identifizierbar ist, durch die Speicherung eines ersten Nutzungsberechtigungsdatensatzes in dem ersten zentralen Datenspeicher registriert und eine der Nutzerkennung zugeordnete zweite Nutzungsberechtigung für eine, alternativ zur ersten gebührenpflichtigen Verkehrsfläche nutzbare, zweite gebührenpflichtige Verkehrsfläche, die aus den ersten Daten assoziierbar oder identifizierbar ist, durch die Speicherung eines zweiten Nutzungsberechtigungsdatensatzes in dem ersten zentralen Datenspeicher registriert, und wobei der erste zentrale Prozessor oder ein zweiter zentraler Prozessor der zentralen Datenverarbeitungseinrichtung dazu ausgebildet ist, die von der elektronischen Einrichtung an die zentrale Datenverarbeitungseinrichtung übertragenen zweiten Daten und die Nutzerkennung zu empfangen und zu verarbeiten, indem er die der Nutzerkennung zugeordnete erste Nutzungsberechtigung für die erste Verkehrsfläche, die aus den zweiten Daten assoziierbar oder identifizierbar ist, durch die Löschung des ersten Nutzungsberechtigungsdatensatzes aus dem ersten Datenspeicher oder durch die Verknüpfung des ersten Nutzungsberechtigungsdatensatzes mit einem Ungültigkeitsvermerk storniert, oder aber durch die Speicherung eines ersten Stornierungsdatensatzes für die erste Verkehrsfläche in dem ersten zentralen Datenspeicher oder einem zweiten zentralen Datenspeicher der zentralen Datenverarbeitungseinrichtung als ungültig vermerkt.
Andere Maßnahmen, die ebenfalls geeignet sind, die erste Nutzungsberechtigung durch entsprechende Datenverarbeitungsprozesse unwirksam werden zu lassen, sind vom Schutzbereich des Anspruches 13 umfasst.
So können beispielsweise die zweiten Daten eine Nutzungsbestätigung für die zweite gebührenpflichtige Verkehrsfläche umfassen oder implizieren, die den ersten oder zweiten zentralen Prozessor veranlasst, eine auf die Nutzerkennung bezogene Gebühr für die zweite gebührenpflichtige Verkehrsfläche zu erheben, wodurch aufgrund des alternativen Nutzungscharakters der ersten und zweiten gebührenpflichtigen Verkehrsfläche eine Entwertung/ Annullierung der Nutzungsberechtigung für die erste gebührenpflichtige Verkehrsfläche impliziert ist.
Die bestätigte Nutzung der zweiten gebührenpflichtigen Verkehrsfläche bestätigt die Nichtnutzung der ersten gebührenpflichtigen Verkehrsfläche.
Vorzugsweise umfasst die Speicherung des ersten Nutzungsberechtigungsdatensatzes die Erhebung einer ersten Gebühr oder wird um eine solche ergänzt sowie die Speicherung des zweiten Nutzungsberechtigungsdatensatzes die Erhebung einer zweiten Gebühr oder wird um eine solche ergänzt, wobei die erste Nutzungsberechtigung durch Rückerstattung oder Annullierung der ersten Gebühr unwirksam wird und gegebenenfalls bei Nichtnutzung auch der zweiten gebührenpflichtigen Verkehrsfläche die zweite Nutzungsberechtigung durch Rückerstattung oder Annullierung der zweiten Gebühr unwirksam wird.

Ein solches System bietet den Nutzern gebührenpflichtiger Verkehrsflächen die vorteilhafte Möglichkeit, rechtzeitig vor der Benutzung einer gebührenpflichtigen Verkehrsfläche eine Nutzungsberechtigung für diese und alle weiteren gebührenpflichtigen Verkehrsflächen zu erhalten, die zum selben Zeitpunkt in alternativer Weise nutzbar sind, ohne dass diese bei Nichtbenutzung der gebührenpflichtigen Verkehrsfläche bestehen bleiben und dauerhaft mit Kosten für den Nutzer zu Buche schlagen, soweit sich die Nutzung einer der gebührenpflichtigen Verkehrsfläche nicht bestätigt.
Ein solches System bietet für einen Gebührenerhebungsdienst, der für die Kontrolle der befugten Nutzung der gebührenpflichtigen Verkehrsflächen zuständig ist, die vorteilhafte Möglichkeit, diese Kontrolle auf den gesamten Bereich der gebührenpflichtigen Verkehrsfläche auszudehnen, anstatt mangels rechtzeitiger Buchung der Nutzungsberechtigung bei der Kontrolle auf einen hinsichtlich der zeitlichen Nutzung späteren Teilbereich der gebührenpflichtigen Verkehrsfläche eingeschränkt zu sein.
Für das erfindungsgemäße System sind zwei Typen von elektronischen Einrichtungen möglich: a) der Thin Client und b) der Thick Client.
Dabei kann die elektronische Einrichtung im Falle beider Typen als stationäre oder mobile Fahrzeugeinrichtung, insbesondere im Falle b) als Navigationsgerät oder insbesondere im Falle a) als Mobilfunkgerät ausgebildet sein. Insbesondere kann die elektronische Einrichtung kann als stationäre oder mobile Fahrzeugeinrichtung oder als Navigationsgerät gemäß dem zweiten Aspekt der Erfindung oder als Mobilfunkgerät gemäß dem dritten Aspekt der Erfindung ausgebildet sein.

Im Falle a) ist der erste zentrale Prozessor der zentralen Datenverarbeitungseinrichtung dazu ausgebildet, die von der elektronischen Einrichtung an die zentrale Datenverarbeitungseinrichtung übertragenen ersten Daten und die Nutzerkennung zu empfangen und zu verarbeiten, indem er die empfangenen ersten Daten mit der möglichen Nutzung wenigstens einer ersten und einer zweiten gebührenpflichtigen Verkehrsfläche assoziiert, und der erste oder der zweite zentrale Prozessor der zentralen Datenverarbeitungseinrichtung dazu ausgebildet, die von der elektronischen Einrichtung an die zentrale Datenverarbeitungseinrichtung übertragenen zweiten Daten und die Nutzerkennung zu empfangen und zu verarbeiten, indem er die empfangenen zweiten Daten mit der Nichtnutzung wenigstens der ersten gebührenpflichtigen Verkehrsfläche assoziiert. Die rechen- und datenintensive Ermittlung der zu den ersten Daten passenden ersten und zweiten gebührenpflichtigen Verkehrsfläche und zu den zweiten Daten passenden ersten und/ oder zweiten gebührenpflichtigen Verkehrsfläche wird folglich von einem Prozessor der zentralen Datenverarbeitungseinrichtung übernommen.
Im Falle b) ist der dezentrale Prozessor der elektronischen Einrichtung dazu ausgebildet, die in einer ersten Positionsbestimmungsphase von der Positionsbestimmungseinrichtung ermittelten ersten Positionsdaten zu empfangen und zu verarbeiten, indem er die empfangenen ersten Positionsdaten mit der möglichen alternativen Nutzung wenigstens einer ersten und einer zweiten gebührenpflichtigen Verkehrsfläche assoziiert und der dezentralen Kommunikationseinrichtung zumindest die erste gebührenpflichtige Verkehrsfläche identifizierende erste Verkehrsflächendaten als erste Daten zusammen mit einer Nutzerkennung zur Übertragung an die zentrale Datenverarbeitungseinrichtung bereitstellt, wobei der erste zentrale Prozessor der zentralen Datenverarbeitungseinrichtung dazu ausgebildet ist, aus den ersten Daten die erste gebührenpflichtige Verkehrsfläche und alternativ dazu nutzbare zweite gebührenpflichtige Verkehrsfläche zu identifizieren, für die die erste und die zweite Nutzungsberechtigung zu buchen sind; ferner ist der dezentrale Prozessor der elektronischen Einrichtung dazu ausgebildet, die in einer zweiten Positionsbestimmungsphase von der Positionsbestimmungseinrichtung ermittelten zweiten Positionsdaten zu empfangen und zu verarbeiten, indem er die empfangenen zweiten Daten mit der Nichtnutzung wenigstens der ersten gebührenpflichtigen Verkehrsfläche assoziiert und der dezentralen Kommunikationseinrichtung zumindest die erste gebührenpflichtige Verkehrsfläche identifizierende erste Verkehrsflächendaten als zweite Daten zusammen mit einer Nutzerkennung - und beispielsweise einem Stornierungsvermerk - zur Übertragung an die zentrale Datenverarbeitungseinrichtung bereitstellt, wobei der erste oder zweite zentrale Prozessor der zentralen Datenverarbeitungseinrichtung dazu ausgebildet ist, aus den zweiten Daten die erste gebührenpflichtige Verkehrsfläche zu identifizieren, für die die erste Nutzungsberechtigung zu stornieren ist; alternativ ist der dezentrale Prozessor der elektronischen Einrichtung dazu ausgebildet, die in einer zweiten Positionsbestimmungsphase von der Positionsbestimmungseinrichtung ermittelten zweiten Positionsdaten zu empfangen und zu verarbeiten, indem er die empfangenen zweiten Daten mit der Nutzung der zweiten gebührenpflichtigen Verkehrsfläche assoziiert und der dezentralen Kommunikationseinrichtung zumindest die zweite gebührenpflichtige Verkehrsfläche identifizierende zweite Verkehrsflächendaten als zweite Daten zusammen mit einer Nutzerkennung - und beispielsweise einem Nutzungsvermerk - zur Übertragung an die zentrale Datenverarbeitungseinrichtung bereitstellt, wobei der erste oder zweite zentrale Prozessor der zentralen Datenverarbeitungseinrichtung dazu ausgebildet ist, aus den zweiten Daten die zweite gebührenpflichtige Verkehrsfläche zu identifizieren, für die eine Gebühr mit der Folge zu erheben ist, dass die erste Nutzungsberechtigung verfällt.
Die rechen- und datenintensive Ermittlung der zu den ersten Daten und zweiten Daten passenden ersten gebührenpflichtigen Verkehrsfläche wird folglich von dem (dezentralen) Prozessor der elektronischen Einrichtung übernommen.

Vorzugsweise ist in den Fällen, in denen nur ein einziger (der erste) zentrale Prozessor zum Empfang sowohl der ersten Daten als auch der zweiten Daten vorgesehen ist, der dezentrale Prozessor dazu ausgebildet, der dezentralen Kommunikationseinrichtung die erste Daten zusammen mit einer Buchungsanforderung zur Übertragung an die zentrale Datenverarbeitungseinrichtung bereitzustellen und die zweiten Daten zusammen mit einer Stornierungsanforderung (im Falle der Nichtnutzung der ersten gebührenpflichtigen Verkehrsfläche oder keiner der gebührenpflichtigen Verkehrsflächen) oder zusammen mit einer Gebührenerhebungsanforderung/ Nutzungsbestätigung (im Falle der festgestellten Nutzung der zweiten gebührenpflichtigen Verkehrsfläche) an die zentrale Datenverarbeitungseinrichtung bereitzustellen, und der erste (einzige) zentrale Prozessor dazu ausgebildet, die ersten Daten und die Buchungsanforderung zu empfangen und zur Registrierung der ersten Nutzungsberechtigung zu verarbeiten sowie die zweiten Daten und die Stornierungsanforderung zu empfangen und zur Stornierung der ersten Nutzungsberechtigung zu verarbeiten beziehungsweise die zweiten Daten und die Gebührenerhebungsanforderung/ Nutzungsbestätigung zu empfangen und zur Erhebung einer Gebühr für die Nutzung der zweiten gebührenpflichtigen Verkehrsfläche zu verarbeiten.

Vorzugsweise wird in den Fällen, in denen nur der erste zentrale Prozessor ausschließlich zum Empfang der ersten Daten und der zweite zentrale Prozessor ausschließlich zum Empfang der zweiten Daten vorgesehen ist, auf die Übermittlung einer gesonderten Buchungs- und Stornierungs- oder Gebührenerhebungsanforderung verzichtet, weil sich die Art der Anfrage bereits aus dem seitens der elektronischen Einrichtung ausgewählten ersten oder zweiten zentralen Prozessor ergibt. Beispielsweise kann die zentrale Datenverarbeitungseinrichtung zur Entgegennahme von Buchungsanforderungen der elektronischen Einrichtungen einen Buchungsserver aufweisen, der den ersten zentralen Prozessor umfasst, und zur Entgegennahmen von Stornierungsanforderungen einen Stornierungsserver aufweisen, der den zweiten zentralen Prozessor umfasst.
Dies ist jedoch nicht zwingend; stattdessen können Buchungs- und Stornierungs- oder Gebührenerhebungsanfragen von ein und demselben Dienstleistungsserver verarbeitet werden. Vorteilhaft ist es jedoch, für jeden Anfragetyp einen eigenen Server bereitzustellen, weil damit in einfacher Weise eine Möglichkeit gegeben ist, einen ersten Anfragetyp (Buchungen) gegenüber einem zweiten Anfragetyp (Stornierungen oder Gebührenerhebungen) zu priorisieren. Buchungen sind wegen ihrem Bezug zu einem zeitnahen Befahren der Verkehrsfläche und des dafür nötigen Nutzungsrechtes zeitkritischer als Stornierungen und sollten daher vorrangig behandelt werden.

Der Buchungsserver kann ausgebildet sein, einen ersten Webdienst zur Entgegennahme von Buchungsanfragen bereitzustellen, zu unterstützen oder auszuführen; und der Stornierungsserver kann ausgebildet sein, einen zweiten Webdienst zur Entgegennahme von Stornierungs- und/ oder Gebührenerhebungsanfragen bereitzustellen, zu unterstützen oder auszuführen.
Eine solche zentrale Datenverarbeitungseinrichtung entspricht einem sechsten Aspekt der Erfindung, gemäß dem eine Datenverarbeitungseinrichtung gekennzeichnet ist durch (a) einen ersten Webdienst zur Entgegennahme von wenigstens einer von einer mobilen Einrichtung übermittelten Buchungsanforderung für wenigstens eine positionsabhängig durch die mobile Einrichtung ermittelte erste und zweite gebührenpflichtige Verkehrsfläche, die alternativ nutzbar sind, indem sie eine gemeinsame Zufahrt aufweisen, von der aus nur eine der gebührenpflichtigen Verkehrsflächen befahren werden kann, und die an wenigstens eine erste Nutzerkennung geknüpft ist, und (b) wenigstens einen zweiten Webdienst zur Entgegennahme von wenigstens einer von der mobilen Einrichtung übermittelten unter der ersten Nutzerkennung gestellten Stornierungsanforderung für wenigstens die erste gebührenpflichtige Verkehrsfläche oder unter der ersten Nutzerkennung geführten Nutzungsbestätigung für die zweite gebührenpflichtige Verkehrsfläche.
Die mobile Einrichtung kann durch ein Fahrzeug gebildet sein oder durch eine von einem Fahrzeug mitgeführte elektronische Einrichtung, beispielsweise durch eine elektronische Einrichtung gemäß dem fünften Aspekt der Erfindung.
Die erste Nutzerkennung kann dabei von einem Prozessor der Datenverarbeitungseinrichtung, der den ersten Webdienst bereitstellt, unterstützt oder mit diesem gekoppelt ist, aufgrund der Buchungsanfrage erzeugt werden und als ein Stornierungscode durch den ersten Webdienst an die mobile Einrichtung zurück übermittelt werden. Rechtswidrige Stornierungsanfragen durch die mobile Einrichtung werden somit erschwert.
Vorzugsweise steht der erste Webdienst mit einem ersten Datenspeicher oder einem ersten Speicherbereich eines zentralen Datenspeichers zumindest zeitweise in datentechnischer Verbindung, in dem Nutzungsberechtigungen - beispielsweise in Form von Nutzungsberechtigungsdatensätzen, die die Nutzerkennung (oder ein mit der Nutzerkennung in Beziehung stehendes Nutzer-Datenelement) und wenigstens ein erstes Verkehrsflächen-Datenelement, das die erste gebührenpflichtige Verkehrsfläche identifiziert, sowie ein zweites Verkehrsflächen-Datenelement, das die zweite gebührenpflichtige Verkehrsfläche identifiziert, umfassen - speicherbar sind, wobei die zentrale Datenverarbeitungseinrichtung ausgebildet ist, derartige Nutzungsberechtigungen in dem ersten Datenspeicher oder dem ersten Speicherbereich zu speichern.
Dabei wird vorteilhaft die alternative Nutzbarkeit der ersten und der zweiten gebührenpflichtigen Verkehrsfläche dadurch registriert, dass das erste und das zweite Verkehrsflächen-Datenelement von dem gemeinsamen Nutzungsberechtigungsdatensatz umfasst und insofern miteinander verknüpft sind.
Vorzugsweise steht der zweite Webdienst mit einem zweiten Datenspeicher oder einem zweiten Speicherbereich eines zentralen Datenspeichers zumindest zeitweise in datentechnischer Verbindung, in dem Stornierungsanforderungen - beispielsweise in Form von Stornierungsdatensätzen, die die Nutzerkennung (oder ein mit der Nutzerkennung in Beziehung stehendes Nutzer-Datenelement) und wenigstens ein erstes Verkehrsflächen-Datenelement, das die erste Verkehrsfläche identifiziert, umfassen - speicherbar sind, wobei die zentrale Datenverarbeitungseinrichtung ausgebildet ist, derartige Stornierungsanforderung in dem ersten Datenspeicher oder dem ersten Speicherbereich zu speichern.
Vorzugsweise umfasst die erfindungsgemäße Datenverarbeitungseinrichtung wenigstens einen Prozessor, beispielsweise einen zentralen Prozessor, der dazu ausgebildet ist, Nutzungsberechtigungsdatensätze und Stornierungsdatensätze miteinander zu vergleichen und bei einer hinreichenden Übereinstimmung von Datenelementen dieser Datensätze Zug um Zug die entsprechenden Nutzungsberechtigungsdatensätze und die entsprechenden Stornierungsdatensätze vollständig oder teilweise zu löschen.
Möglich ist auch eine Konsolidierung der Nutzungsberechtigungsdatensätze und der entsprechenden Stornierungsdatensätze in einem dritten Datenspeicher oder einem dritten Speicherbereich des zentralen Datenspeichers, womit die Nutzungsberechtigungsdatensätze im ersten Datenspeicher oder im ersten Speicherbereich und die entsprechenden Stornierungsdatensätze im zweiten Datenspeicher oder im zweiten Speicherbereich unangetastet bleiben und zu Dokumentationszwecken archiviert werden können.
Vorzugsweise ist die erfindungsgemäße Datenverarbeitungseinrichtung ausgebildet, bei vorliegender Stornierungsanforderung für die erste gebührenpflichtige Verkehrsfläche und mangelnder Stornierungsanforderung für die zweite gebührenpflichtige Verkehrsfläche den Nutzungsberechtigungsdatendatensatz für die zweite gebührenpflichtige Verkehrsfläche in einen Gebührenerhebungsdatensatz, der eine Gebühr für die Nutzung der zweiten gebührenpflichtigen Verkehrsfläche repräsentiert, umzuwandeln oder um einen solchen zu ergänzen.
Sie kann auch ausgebildet sein, bei vorliegender Nutzungsbestätigung für die zweite gebührenpflichtige Verkehrsfläche den Nutzungsberechtigungsdatendatensatz für die zweite gebührenpflichtige Verkehrsfläche in einen Gebührenerhebungsdatensatz, der eine Gebühr für die Nutzung der zweiten gebührenpflichtigen Verkehrsfläche repräsentiert, umzuwandeln oder um einen solchen zu ergänzen.
Die Nutzungsberechtigungsdatensätze können an sich schon Gebührendatensätze für zur Gewährung der Nutzungsberechtigungen der ersten und zweiten gebührenpflichtigen Verkehrsflächen erhobene erste und zweite Gebühren für die mögliche alternative Nutzung der ersten oder zweiten gebührenpflichtigen Verkehrsfläche sein oder umfassen. Die zentrale Datenverarbeitungseinrichtung ist in diesem Fall dazu ausgebildet, die Stornierungsanforderung für wenigstens die erste gebührenpflichtige Verkehrsfläche oder die Nutzungsbestätigung für die zweite gebührenpflichtige Verkehrsfläche umzusetzen, in dem sie die erhobene erste Gebühr für die erste gebührenpflichtige Verkehrsfläche erstattet, als unwirksam erhoben kennzeichnet oder eine gleichwertige datentechnische Maßnahmen durchführt, die dem Ziel der letztendlichen Nichterhebung der ersten Gebühr entspricht.

Ausführungsformen der erfindungsgemäßen Datenverarbeitungseinrichtung sehen (c) wenigstens einen ersten Datenspeicher vor, wobei (a) der erste Webdienst zur Entgegennahme von wenigstens einer von der mobilen Einrichtung übermittelten Buchungsanforderung für wenigstens eine, zur ersten gebührenpflichtigen Verkehrsfläche alternativ nutzbare, positionsabhängig durch die mobile Einrichtung ermittelte zweite gebührenpflichtige Verkehrsfläche, die zusammen mit der ersten gebührenpflichtigen Verkehrsfläche an die erste Nutzerkennung geknüpft ist, ausgebildet ist, und (c) zumindest einige der von dem ersten Webdienst zur Buchung und dem zweite Webdienst zur Stornierung entgegengenommenen Datenelemente mit Datenelementen identisch sind oder in Beziehung stehen, die in von einem in dem ersten Datenspeicher ablegbaren Gebührendatensatz für zumindest die zweite gebührenpflichtige Verkehrsfläche umfasst sind.
Dabei kann der zweite Webdienst ausgebildet sein, Stornierungsanfragen nur für die Gesamtheit aller gebührenpflichtigen Verkehrsflächen einer vorhergehenden Buchungsanfrage zuzulassen und eine Stornierung einer Teilmenge der Gesamtheit aller gebührenpflichtigen Verkehrsflächen einer vorhergehenden Buchungsanfrage nur im Zusammenhang mit der Übermittlung einer Nutzungsbestätigung für wenigstens eine gebührenpflichtigen Verkehrsfläche zuzulassen, die nicht der zu stornierenden Teilmenge angehört.
Alternativ kann der zweite Webdienst ausgebildet sein, Stornierungsanfragen eine erste Teilmenge von ersten gebührenpflichtigen Verkehrsflächen der Gesamtheit aller gebührenpflichtigen Verkehrsflächen einer vorhergehenden Buchungsanfrage zuzulassen, und fehlende Stornierungsanfragen für zweite gebührenpflichtige Verkehrsflächen die nicht in der ersten Teilmenge der zu stornierenden ersten gebührenpflichtigen Verkehrsflächen enthalten sind, für diese zweiten gebührenpflichtigen Verkehrsflächen als eine Nutzungsbestätigung zu werten, die eine spätere Stornierung der Nutzungsberechtigungen für die zweiten gebührenpflichtigen Verkehrsflächen ausschließt.

Ausführungsformen der erfindungsgemäßen Datenverarbeitungseinrichtung sehen (d) einen dritten Webdienst, und (c) wenigstens einen ersten Datenspeicher vor, wobei (a) der erste Webdienst zur Entgegennahme von wenigstens einer von der mobilen Einrichtung übermittelten Buchungsanforderung für wenigstens eine, zur ersten gebührenpflichtigen Verkehrsfläche alternativ nutzbare, positionsabhängig durch die mobile Einrichtung ermittelte zweite gebührenpflichtige Verkehrsfläche, die zusammen mit der ersten gebührenpflichtigen Verkehrsfläche an die erste Nutzerkennung geknüpft ist, ausgebildet ist, und (d) der dritte Webdienst zur Entgegennahme von wenigstens einer unter der ersten Nutzerkennung oder unter einer mit der ersten Nutzerkennung verknüpfbaren Fahrzeugkennung übermittelten Nutzungsbestätigung für die zweite gebührenpflichtige Verkehrsfläche ausgebildet ist und (c) zumindest einige der von dem ersten Webdienst zur Buchung und dem zweite Webdienst zur Stornierung oder dem dritten Webdienst zur Nutzungsbestätigung entgegengenommenen Datenelemente mit Datenelementen identisch sind oder in Beziehung stehen, die in von einem in dem ersten Datenspeicher abgelegten Gebührendatensatz für zumindest die zweite gebührenpflichtige Verkehrsfläche umfasst sind.

Dabei kann die Nutzungsbestätigung kann sowohl von der mobilen Einrichtung aufgrund einer durch die mobile Einrichtung ermittelten Position der mobilen Einrichtung, die der Anwesenheit der mobilen Einrichtung auf der zweiten gebührenpflichtigen Verkehrsfläche entspricht an den dritten Webdienst gesendet werden als auch von einer separaten Kontrolleinrichtung (die beispielsweise außerhalb des Fahrzeugs, das die mobile Einrichtung bildet oder aufweist) angeordnet sein kann), die im Bereich der zweiten gebührenpflichtigen Verkehrsfläche anwesend ist.
Die Registrierung einer Nutzungsbestätigung für die benutzte zweite gebührenpflichtige Verkehrsfläche durch die Datenverarbeitungseinrichtung kann mit der Registrierung eines Löschverbots für die Nutzungsberechtigung dieser benutzten zweiten gebührenpflichtigen Verkehrsfläche gleichgesetzt werden, während sie eine Löschung der Nutzungsberechtigung für die erste gebührenpflichtige Verkehrsfläche auslöst.

Das Vorsehen drei verschiedener Webdienste für drei unterschiedliche Registrierungsaufgaben macht die Buchung von Nutzungsberechtigungen, Stornierungen und Nutzungsbestätigungen effizienter und gestattet es zudem vorteilhaft, einen Buchungsprozess gegenüber einem anderen in einfacher Weise zu priorisieren, indem ihm die höchste Speicher-/ Prozessor und/ oder Datenübertragungskapazität zugewiesen wird. Vorzugsweise wird so der Buchungsprozess für die Nutzungsberechtigungen gegenüber dem Buchungsprozess für die Nutzungsbestätigungen und dieser gegenüber dem Buchungsprozess für die Stornierungen priorisiert.

Ausführungsformen des Gebührenerhebungssystems nach dem fünften Aspekt der Erfindung weisen eine an oder auf einer gebührenpflichtigen Verkehrsfläche vorgesehene Kontrolleinrichtung mit einer Bildaufnahme- und - auswertevorrichtung zur Aufnahme und Auswertung von Bildern von Fahrzeugen, die die Verkehrsfläche nutzen und zur Gewinnung von Fahrzeugdaten zur Identifikation dieser Fahrzeuge aus diesen Bildern, auf, wobei die Nutzungsberechtigungsdatensätze der zentralen Datenverarbeitungseinrichtung Fahrzeugdaten umfassen, und wobei zumindest zeitweise eine Kommunikationsverbindung zwischen der Kontrolleinrichtung und der zentralen Datenverarbeitungseinrichtung zur Übertragung von Fahrzeugdaten von der zentralen Datenverarbeitungseinrichtung an die Kontrolleinrichtung und/ oder zur Übertragung von Fahrzeugdaten von der Kontrolleinrichtung an die zentrale Datenverarbeitungseinrichtung besteht. Vorzugsweise ist die Kontrolleinrichtung oder die zentralen Datenverarbeitungseinrichtung ausgebildet, die Fahrzeugdaten auf eine Verknüpfung mit einem der Verkehrsfläche zugeordneten Nutzungsberechtigungsdatensatz zu prüfen und wenigstens ein Signal zu erzeugen, welches davon abhängig ist, ob die Prüfung der Fahrzeugdaten auf eine Verknüpfung mit einem der Verkehrsfläche zugeordneten Nutzungsberechtigungsdatensatz ein positives oder negatives Ergebnis erbringt. Das schließt nicht aus, dass sowohl die Kontrolleinrichtung als auch die zentralen Datenverarbeitungseinrichtung ausgebildet sind, eine derartige Datenverarbeitung und Signalerzeugung durchzuführen.

Eine solche Kontrolleinrichtung ergänzt das Gebührenerhebungssystem um eine Möglichkeit zu prüfen, ob für ein auf einer bestimmten gebührenpflichtigen Verkehrsfläche angetroffenes Fahrzeug eine Berechtigung zur Nutzung dieser bestimmten gebührenpflichtigen Verkehrsfläche gebucht wurde. Damit schließt sich vorteilhaft der Kreis einer erfolgreichen Gebührenerhebung, der durch die Instanzen (A) Erkennung im Fahrzeug, (B) Buchung in der Zentrale und (C) Kontrolle an der Verkehrsfläche gebildet wird.

Nachfolgend wird die Erfindung anhand von Ausführungsbeispielen für ein Straßenmautsystem noch näher erläutert. Dazu zeigen
- Fig. 1a: ein erstes Ablaufdiagramm für Schritte im Verfahren eines ersten Ausführungsbeispiels der Erfindung beim Durchfahren einer ersten Route gemäß der in Fig. 2a dargestellten ersten Karte,
- Fig. 1b: ein zweites Ablaufdiagramm für Schritte im Verfahren eines zweiten Ausführungsbeispiels der Erfindung beim Durchfahren einer zweiten Route gemäß der in Fig. 2b dargestellten zweiten Karte,
- Fig. 2a: eine erste Karte, in der der Verlauf einer ersten Route eines Fahrzeugs 50 in einem ersten Ausführungsbeispiel veranschaulicht ist,
- Fig. 2b: eine zweite Karte, in der der Verlauf einer zweiten Route eines Fahrzeugs 50 in einem zweiten Ausführungsbeispiel veranschaulicht ist,
- Fig. 2c: eine dritte Karte, in der der Verlauf einer dritten Route eines Fahrzeugs 50 in einem dritten Ausführungsbeispieles veranschaulicht ist,
- Fig. 3a: eine vierte Karte, in der der Verlauf einer vierten Route eines Fahrzeugs in einem vierten Ausführungsbeispiel veranschaulicht ist,
- Fig. 3b: eine fünfte Karte, in der der Verlauf einer fünften Route eines Fahrzeugs in einem fünften Ausführungsbeispiel veranschaulicht ist,
- Fig. 3c: eine sechste Karte, in der der Verlauf einer sechsten Route eines Fahrzeugs in einem sechsten Ausführungsbeispiel veranschaulicht ist,
- Fig. 4: eine siebte Karte, in der der Verlauf einer siebten Route eines Fahrzeugs in einem siebten Ausführungsbeispiel veranschaulicht ist,
- Fig. 5: eine achte Karte, in der der Verlauf einer achten Route eines Fahrzeugs in einem achten Ausführungsbeispiel veranschaulicht ist,
- Fig. 6a: eine schematische Darstellung einer erfindungsgemäßen mobilen Einrichtung 10, die in allen Ausführungsbeispielen verwendet wird,
- Fig. 6b: die Draufsicht auf ein erfindungsgemäßes Mauterhebungsgerät 10 als erste Ausführungsform der mobilen Einrichtung 10 für das erste Ausführungsbeispiel in einem ordentlichen Betriebszustand,
- Fig. 6c: die Draufsicht auf das erfindungsgemäßes Mauterhebungsgerät 10 als erste Ausführungsform der mobilen Einrichtung 10 für das erste Ausführungsbeispiel in einem außerordentlichen Betriebszustand,
- Fig. 6d: die Draufsicht auf ein erfindungsgemäßes Navigationsgerät 10 als zweite Ausführungsform der mobilen Einrichtung 10 für das zweite Ausführungsbeispiel,
- Fig. 6e: die Draufsicht auf ein erfindungsgemäßes Mobiltelefon 10 als dritte Ausführungsform der mobilen Einrichtung 10 für das dritte Ausführungsbeispiel,
- Fig. 7a: die schematische Darstellung eines ersten Mauterhebungssystems im ersten Ausführungsbeispiel,
- Fig. 7b: die schematische Darstellung eines erfindungsgemäßen zweiten Mauterhebungssystems im zweiten Ausführungsbeispiel,
- Fig. 7c: die schematische Darstellung eines erfindungsgemäßen dritten Mauterhebungssystems im dritten Ausführungsbeispiel,
- Fig. 8a: die schematische Darstellung einer ersten erfindungsgemäßen Datenverarbeitungseinrichtung 200 einer ersten Zentrale 20 im Mauterhebungssystem des zweiten Ausführungsbeispiels,
- Fig. 8b: die schematische Darstellung einer zweiten erfindungsgemäßen Datenverarbeitungseinrichtung 200 einer ersten Zentrale 20 im Mauterhebungssystem des dritten Ausführungsbeispiels und
- Fig. 8c: die schematische Darstellung einer Variante der zweiten erfindungsgemäßen Datenverarbeitungseinrichtung 200 einer ersten Zentrale 20 in einer Variante des Mauterhebungssystem des dritten Ausführungsbeispiels.

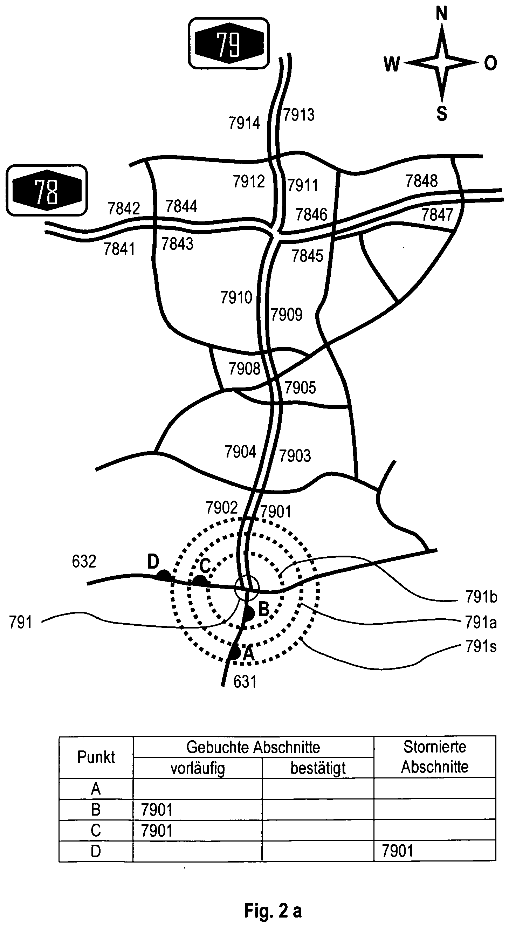

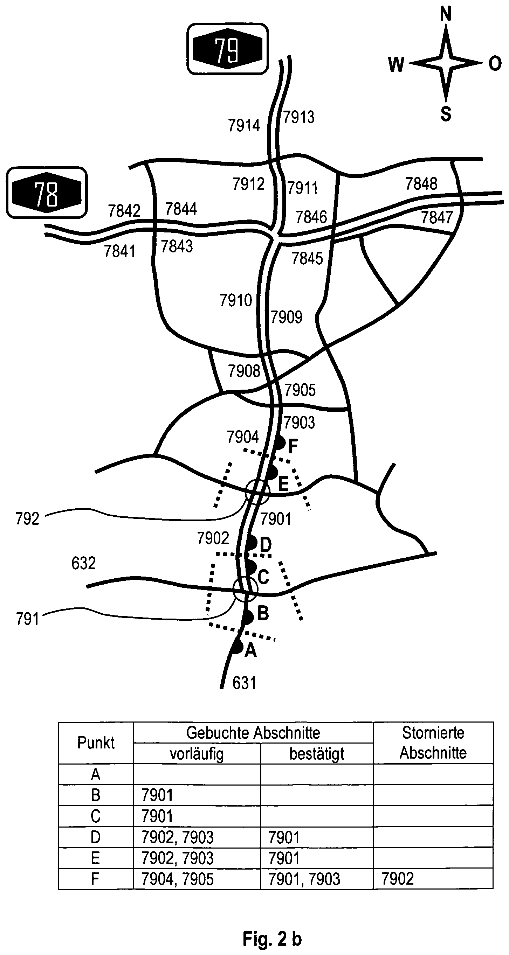

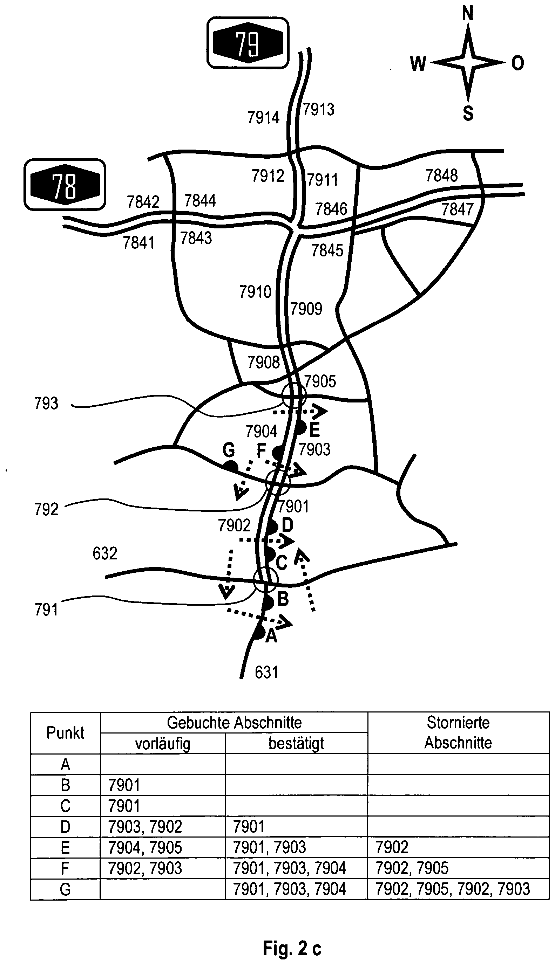

Jede der Figuren 2a, 2b, 2c, 3a, 3b, 3c, 4 und 5, die eine Karte enthält, in der der Verlauf einer Fahrzeugroute anhand von Lokalisierungen A, B, C, ... eines Fahrzeugs (eines Fahrzeugs 50 im Falle der Figuren 2a, 2b und 2c) veranschaulicht ist, enthält zusätzlich eine Liste der vorläufig gebuchten, bestätigten und stornierten Streckenabschnitte an jeder eingezeichneten Lokalisierung der jeweiligen Route des Fahrzeugs.

Allgemein zeigen alle Figuren 2a, 2b, 2c, 3a, 3b, 3c, 4 und 5 denselben Kartenausschnitt, auf dem eine in Nord-Süd-Richtung verlaufende Autobahn A 79 dargestellt ist, die sich mit der in Ost-West-Richtung verlaufenden Autobahn A 78 kreuzt. Beide Autobahnen sind vierspurig, indem sie für jede der beiden Fahrtrichtungen voneinander getrennte Richtungsfahrbahnen mit je zwei Fahrstreifen (umgangssprachlich auch: Fahrspuren) aufweisen. Alle Abschnitte der Autobahn A 79, die in nördlicher Fahrtrichtung mit 7901, 7903, 7905, 7907, 7909, 7911, 7913 und in südlicher Fahrtrichtung mit 7914, 7912, 7910, 7908, 7906, 7904, 7902 bezeichnet sind, sind mautpflichtig. Ebenso sind alle Abschnitte der Autobahn A 78, die in östlicher Richtung mit 7841, 7843, 7845, 7847 und in westlicher Richtung mit 7848, 7846, 7844, 7842 bezeichnet sind, mautpflichtig.
Die Mautgebühr ist abhängig von dem Typ des Fahrzeug, seiner Achszahl und der Schadstoffklasse seines Motors sowie von der Länge des jeweiligen Autobahnabschnitts.

### ERSTES AUSFÜHRUNGSBEISPIEL

Das erste Ausführungsbeispiel veranschaulicht die Tauglichkeit erfindungsgemäßer Erzeugnisse für Fälle, in denen keine mehreren alternativ nutzbaren gebührenpflichtigen Streckenabschnitte an der Zufahrt zu einem erste gebührenpflichtigen Streckenabschnitt vorliegen, sondern nur dieser erste gebührenpflichtige Streckenabschnitt, der entweder befahren oder nicht befahren werden kann, ohne dass die Möglichkeit besteht, einen zweiten gebührenpflichtigen Streckenabschnitt an seiner Statt zu befahren.

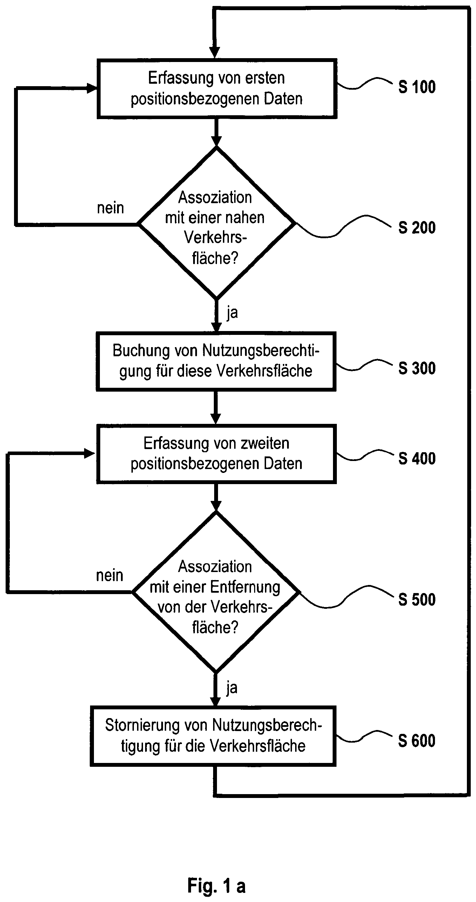

Zur Erläuterung des ersten Ausführungsbeispiels dienen die Figuren 1a, 2a, 6a, 6b, 6c und 7a.

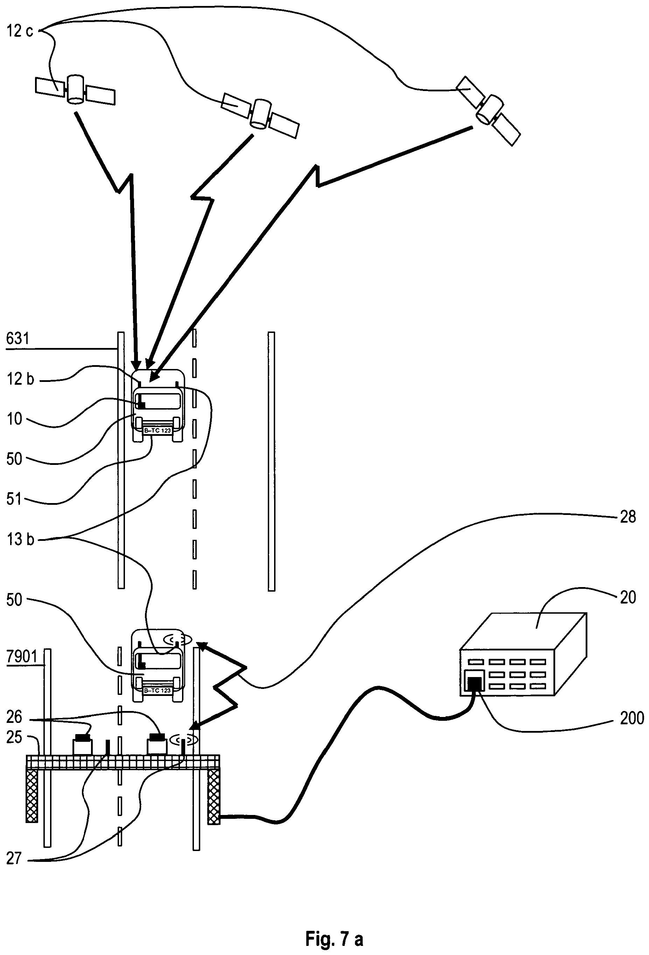

Gemäß der Route des ersten Ausführungsbeispiels (Fig. 2a) nähert sich ein Fahrer mit seinem Fahrzeug 50 (Fig. 7a) von Süden her auf der zweispurigen Bundesstraße B 631 dem Beginn der vierspurigen Autobahn A 79.

An der Anschlussstelle 791 geht die Bundesstraße B 631 in nördlicher Richtung den Abschnitt 7901 der Autobahn A 79 über. In Gegenrichtung mündet der Abschnitt 7902 der Autobahn 79 in die Bundesstraße. An der Anschlussstelle 791 besteht für den Fahrer die Möglichkeit, in westlicher oder in östlicher Richtung durch Fahrt auf der B 632 der Autobahn A 79 auszuweichen.

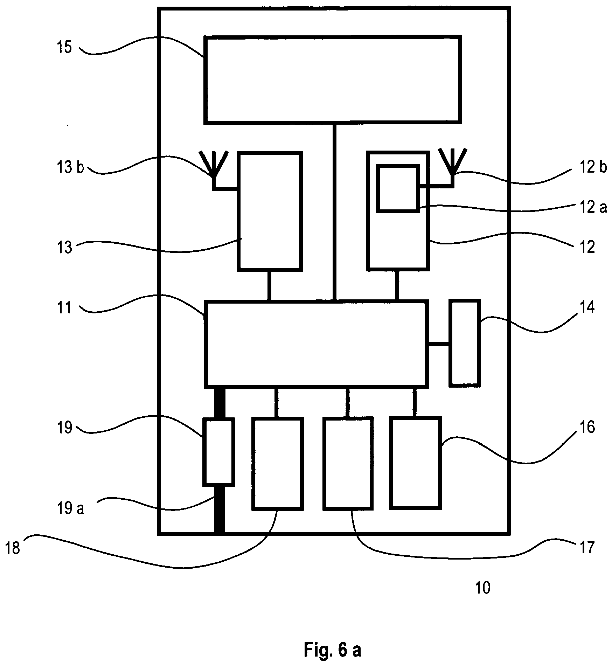

Zur Mauterhebung führt der Fahrer eine mobile Einrichtung 10 mit sich, deren allgemeiner Aufbau in Fig. 6a schematisch dargestellt ist. Sie umfasst einen Prozessor 11, verschiedene Datenspeicher 16, 17 und 18, eine Anzeigeeinrichtung 15, eine wiederaufladbare Batterie 19, die über einen Stromversorgungsanschluss 19a zur Wiederaufladung und Stromversorgung strombedürftiger Komponenten des mobilen Fahrzeuggerätes verfügt, eine Positionsbestimmungseinrichtung 12, die einen GNSS-Empfänger 12a mit einer GNSS-Empfangsantenne 12b zum Empfang von Daten eines Globalen Navigations-Satelliten-Systems (GNSS) umfasst und einen Mobilfunk-Sendeempfänger 13 mit einer Mobilfunk-Sende-/ Empfangsantenne 13b.

Der Datenspeicher 16 ist ein Lese-Speicher 16, beispielsweise ein ROM, EEPROM, und/ oder ein Flash Memory, und dient zur Speicherung von einem erfindungsgemäßen Computerprogrammprodukt zur Buchung und Stornierung von Nutzungsberechtigungen für mautpflichtige Autobahnabschnitte (Maut-Software) nebst der Datensätze, die die Autobahnabschnitte anhand ihrer Erkennungsobjekte für einen jeden möglichen Nutzungsstatus (mögliche bevorstehende Nutzung, bestätigte Nutzung, bestätigte Nichtnutzung) beschreiben (Betriebsdaten). Ein Aufbringen der Maut-Software oder eines seiner Updates auf den Lese-Speicher 16 kann über entsprechende Kommunikationsschnittstellen der mobilen Einrichtung 10 erfolgen, beispielsweise über den Mobilfunk-Sendeempfänger 13.

Der Datenspeicher 17 ist ein Schreib-Lese-Speicher, beispielsweise ein RAM, und dient zur vorübergehenden Aufnahme wenigstens der Maut-Software während des Betriebs der mobilen Einrichtung. Dazu lädt der Prozessor 11 in der Startphase der mobilen Einrichtung 10 die Maut-Software vom Lese-Speicher 16 in den Schreib-Lese-Speicher 17. Ferner dient der Schreib-Lese-Speicher 17 bei der Ausführung der Maut-Software vorübergehend zur Aufnahme von positionsbezogenen Daten, die vom Prozessor 11 von der Positionsbestimmungseinrichtung 12 empfangen werden.

Der Datenspeicher 18 ist ein kryptographischer Datenspeicher 18, beispielsweise ein ROM, EEPROM und/ oder RAM. Der kryptographische Datenspeicher 18 kann von einem Sicherheits-Modul mit eigenständigem Prozessor (nicht dargestellt) umfasst sein. Ein Beispiel für ein solches Sicherheits-Modul ist eine Smart-Card, zum Beispiel die SIM-Karte eines Mobilfunkgerätes. Der Datenspeicher 18 dient der Aufnahme von Buchungsdatensätzen von Nutzungsberechtigungen zur möglichen Benutzung anstehender Autobahnabschnitten.

Anstelle des Mobilfunk-Sendeempfängers 13 oder zusätzlich dazu ist in diesem ersten Ausführungsbeispiel ein fahrzeugseitiger DSRC-Sendeempfänger 13 mit einer DSRC-Sende-/ Empfangsantenne 13b vorgesehen, um anstelle oder zusätzlich zu der langreichweitigen drahtlosen Kommunikation über das Mobilfunknetz eine kurzreichweitige (DSRC = dedicated short-range communication) drahtlose Kommunikation 28 mit straßenseitigen DSRC-Sendeempfängern 27 von straßenseitigen Kontrolleinrichtungen 25 durchzuführen (Fig. 7a). Dabei muss keine der genannten Antennen 12b und 13b im mobilen Fahrzeuggerät 10 integriert sein. Sie können zur Verbesserung der Kommunikation und/ oder des Empfangs auch außerhalb des mobilen Fahrzeuggerätes 10 angeordnet, beispielsweise an der Innenseite der frontalen Windschutzscheibe oder an der Außenseite des Fahrzeugs 50, angebracht sein - so wie es in Fig. 7a veranschaulicht ist.

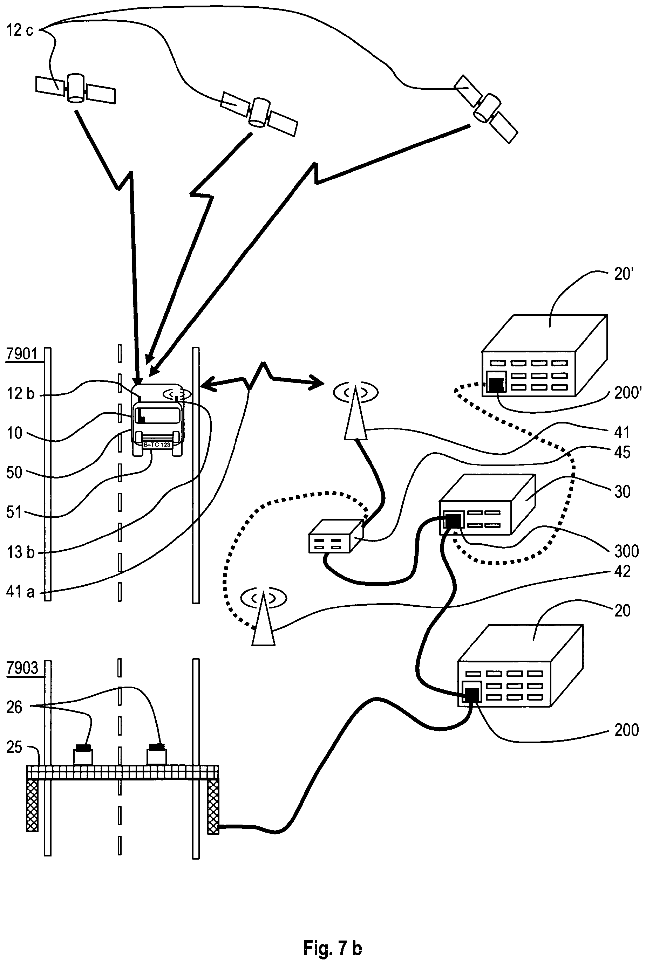

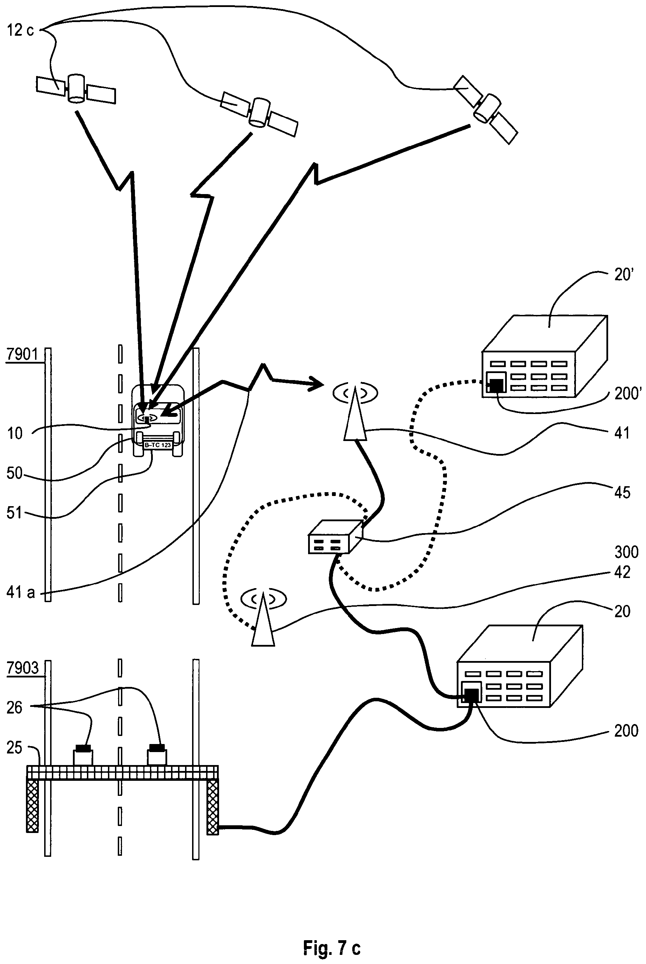

Der GNSS-Empfänger 12 dient als erfindungsgemäße Positionsbestimmungseinrichtung. Er ist als GPS-Empfänger 12 realisiert, der zur Positionsbestimmung verwendbare Signale von GPS-Satelliten 12c eines Globalen Positionsbestimmungssystems (Global Positioning System, GPS) empfängt (Fig. 7a, 7b, 7c).

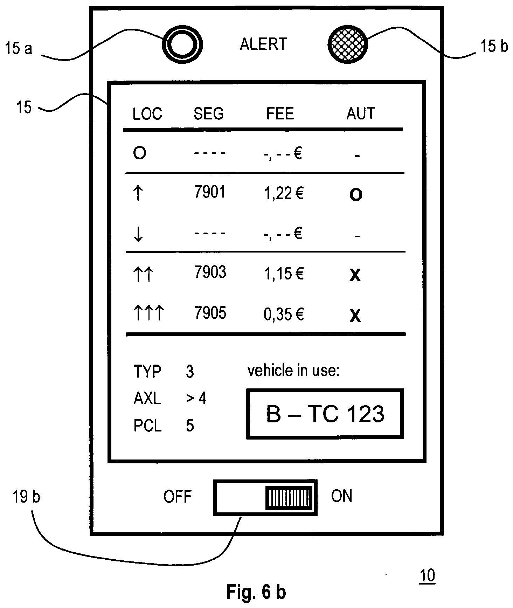

Die Draufsicht auf ein Fahrzeuggerät 10 als mobile Einrichtung ist in Fig. 6b dargestellt. Ein solches Fahrzeuggerät kann portabel sein, indem es zur Wiederentnahme aus einer Halterung in einer Halterung an der Windschutzscheibe des Fahrzeugs 50 befestigt ist. Es kann alternativ auch fest in dem Fahrzeug 50 verbaut sein. Vor dem Start des Fahrzeugs hat der Fahrer des Fahrzeugs durch Betätigung des Schalters 19b aus der OFF-Stellung in die ON-Stellung eingeschaltet. Auf dem LCD-Bildschirm 15 werden die Fahrzeugdaten angezeigt, bezüglich der das Fahrzeuggerät 10 initialisiert wurde: Der Fahrzeugtyp TYP=3 (Lastkraftwagen), die Achszahl AXL größer als 4, die Schadstoff-Klasse PCL=5 und ferner das Fahrzeug-Kennzeichen B-TC 123 als Identifikationsmerkmal des Fahrzeugs 50, welches das Fahrzeug auf seinem Nummernschild 51 von außen sichtbar mit sich führt (Fig. 7a).

In der Position A auf der B 631 (Fig. 2a) ist die Anzeige des Fahrzeuggerätes 10 bis auf die Legende der ersten (oberen) Zeile und die Symbole der ersten (linken) Spalte noch leer. Es sind aufgrund des großen Abstandes des Fahrzeugs von der A 79 noch keine mautpflichtigen Streckenabschnitte vom Fahrzeuggerät erkannt worden. Erfindungstypisch werden in einer ersten Datenerfassungsphase erste positionsbezogene Daten des Fahrzeugs durch den Prozessor 11 des Fahrzeuggerätes 10 erfasst, indem der Prozessor 11 im Sekundentakt aktuelle erste Positionsdaten des Fahrzeugs 50 von dem GPS-Modul 12 empfängt (S 100 in Fig. 1a). Dazu wird durch den Prozessor 11 die Maut-Software ausgeführt, die eine Anweisung zum Empfang der ersten Positionsdaten enthält. Die Maut-Software weist im Übrigen alle Mittel auf, die den Prozessor 11 befähigen, die weiteren Schritte auszuführen.

Durch einen Vergleich der ersten Positionsdaten mit den Betriebsdaten der mautpflichtigen Streckenabschnitte prüft der Prozessor 11, ob ein oder mehrere der empfangenen ersten Positionsdaten mit einem oder mehreren Streckenabschnitten hinsichtlich einer möglichen bevorstehenden Nutzung in Beziehung stehen (S 200). Im Negativfall wird die Erfassung erster positionsbezogener Daten gemäß S 100 fortgesetzt, gefolgt von einem erneuten Assoziierungsversuch S 200. Ein Assoziierungsversuch S 200 führt in einer ersten Assoziierungsphase dann zum Erfolg, wenn die ersten Positionsdaten des Fahrzeugs unterhalb eines bestimmten Abstandes von der Auffahrt 791 auf die A 79 liegen (Fig. 2a). Die Assoziierung der ersten Positionsdaten mit der möglichen bevorstehenden Nutzung des Autobahnabschnitts 7901 durch das Fahrzeug 50 erfolgt mit Hilfe von Positionsdaten des sich auf die Anschlussstelle 791 zu bewegenden Fahrzeugs 50, die einerseits außerhalb des Erkennungskreises 791a und andererseits innerhalb des Erkennungskreises 791a für die mögliche bevorstehende Nutzung des Autobahnabschnittes 7901 liegen. Durch Vergleich einer aus den ersten Positionsdaten gebildeten geglätteten Fahrlinie des Fahrzeugs 50 mit den Ortskoordinaten des Erkennungskreises 791a stellt der Prozessor 11 fest, dass die Fahrlinie des Fahrzeugs 50 den Erkennungskreis 791a von außen nach innen schneidet. Dieses Ergebnis assoziiert der Prozessor 11 mit einer möglichen bevorstehenden Nutzung des Autobahnabschnittes 7901 durch das Fahrzeug 50. In Ermangelung von ersten Positionsdaten außerhalb des Erkennungskreises 791a - beispielsweise, weil das Fahrzeug 50 bei ausgeschaltetem Fahrzeuggerät in den Bereich innerhalb des Erkennungskreises 791a geschleppt wurde - kann der Prozessor auch eine einzelne Ortsangabe des Fahrzeugs innerhalb des Erkennungskreises 791a mit der möglichen bevorstehenden Nutzung des Autobahnabschnittes 7901 durch das Fahrzeug 50 assoziieren. Infolge dieser Assoziierung erzeugt der Prozessor 11 einen Buchungsdatensatz, der ein von der Uhr 14 empfangenes Zeitsignal in Form eines Buchungszeit-Datenelementes, das initialisierte Fahrzeug-Kennzeichen B-TC 123 in Form eines Fahrzeug-Datenelementes sowie den Autobahnabschnitt 7901 in Form eines Streckenabschnitts-Datenelementes und die Mautgebühr in Form eines Gebühren-Datenelementes enthält. Ferner können im Buchungsdatensatz zu unmittelbaren Kontrollzwecken die mautrelevanten Fahrzeugparameter enthalten sein sowie eine Buchungszustand-Datenelement, dass den Umstand der Vorläufigkeit der Buchung repräsentiert. Dieser Buchungsdatensatz wird von dem Prozessor 11 in verschlüsselter Form in dem kryptographischen Datenspeicher 18 abgelegt. Damit ist eine auf das Fahrzeug 50 bezogene Nutzungsberechtigung für den assoziierten Streckenabschnitt 7901 gebucht worden (S 300 in Fig. 1a).

Die Buchungsphase ist somit in ausreichender Entfernung von der Anschlussstelle 791 an der Position B des Fahrzeugs abgeschlossen. Entsprechend wird auf der Anzeigevorrichtung 15 des Fahrzeuggerätes 10 (Fig. 6b) für das durch einen einfachen nach oben gerichteten Pfeil gekennzeichnete, in Fahrtrichtung vorausliegende, Autobahnsegment 7901 eine Mautgebühr von 1,22 EUR angezeigt und die gebuchte Nutzungsberechtigung durch einen Kreis in der Spalte AUT (Autorisierung) bestätigt. An der aktuellen Position in Zeile 1 nach dem Kopf der Tabelle (gekennzeichnet durch den Kreis in der Spalte LOC (Location)) ist keine Nutzungsberechtigung wegen der Mautfreiheit erforderlich, so dass weder Gebühren noch eine Autorisierung anfallen. Für weitere nach dem Segment 7901 in Fahrtrichtung vorausliegende Segmente 7903 und 7905 werden in der Zeile 4 und 5 bereits die Mautgebühren angezeigt, verbunden mit dem durch ein Kreuz gekennzeichneten Hinweis, dass eine Nutzungsberechtigung für diese Segmente noch nicht vorliegt. Im Lese-Speicher 16 liegen dazu für jedes Segment korrespondierende Folgesegmente in Fahrtrichtung und das korrespondierende Gegensegment in Gegenrichtung vor. In Gegenrichtung der aktuellen Position, gekennzeichnet durch einen nach unten gerichteten Pfeil in Zeile 3, liegt aktuell keine Mautpflicht vor; diese Zeile daher bleibt leer. Diese Informationen werden von einem Fahrzeuggerät 10 an der Fahrzeugposition B in einem ordentlichen Betriebszustand angezeigt.

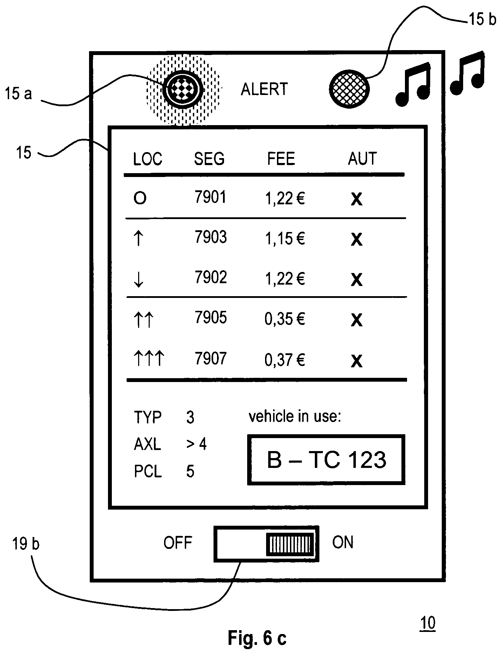

Fig. 6c zeigt das Fahrzeuggerät an der Fahrzeugposition B in einem außerordentlichen Betriebszustand. Dabei wurde im Zuge der Erfassung erster positionsbezogener Daten festgestellt, dass das Fahrzeug einen inneren Erkennungskreis 791b in Annäherung an die Anschlussstelle 791 zur Autobahn 79 überfahren hat, ohne dass eine gebuchte Nutzungsberechtigung im kryptographischen Datenspeicher vorliegt. Diese Fehlfunktion kann mehrere Ursachen haben: Vorübergehender Verlust des GPS-Empfangs, die fälschliche Verwendung nicht aktualisierter Betriebsdaten oder aber die mangelnde Deckung der anstehenden Mautgebühr durch ein auf einer Smart-Card im Fahrzeuggerät 10 mitgeführtes vorausbezahltes Gebühren-Restguthaben. An der Fahrzeugposition B geht das Fahrzeuggerät 10 im Vorgriff auf folgende Fahrzeugpositionen bereits gemäß seiner Anzeige 15 davon aus, dass das Fahrzeug sich bereits auf dem Abschnitt 7901 der Autobahn A 79 befindet. Da der Prozessor 11 kein Vorliegen einer Nutzungsberechtigung für diesen Abschnitt ermitteln kann, löst er ein Alarmsignal aus, dass eine LED 15a zum Leuchten bringt und einen Lautsprecher 15b zur Abgabe eines Warntons. Vorzugsweise sollte die Warnung so rechtzeitig abgegeben werden, dass der Fahrer noch die Möglichkeit hat, das Befahren des Abschnittes 7901 an der Anschlussstelle 791 zu vermeiden.

Infolge der angenommenen korrekten Buchung werden fortan in einer zweiten Datenerfassungsphase zweite positionsbezogene Daten des Fahrzeugs durch den Prozessor 11 des Fahrzeuggerätes 10 erfasst, indem der Prozessor 11 im Sekundentakt aktuelle zweite Positionsdaten des Fahrzeugs 50 von dem GPS-Modul 12 empfängt (S 400 in Fig. 1a). Durch einen Vergleich der zweiten Positionsdaten mit den Betriebsdaten der mautpflichtigen Streckenabschnitte prüft der Prozessor 11, ob ein oder mehrere der empfangenen ersten Positionsdaten mit dem gebuchten Streckenabschnitt 7091 hinsichtlich einer bestätigten Nutzung (dieser Fall wird im zweiten Ausführungsbeispiel näher erläutert) oder einer bestätigten Nichtnutzung einer in Beziehung stehen (S 500). Im Negativfall, beispielsweise an der Position C des Fahrzeugs 50 in Fig. 2a, wird die Erfassung erster positionsbezogener Daten gemäß S 400 fortgesetzt, gefolgt von einem erneuten Assoziierungsversuch S 500. Ein Assoziierungsversuch S 500 führt in einer zweiten Assoziierungsphase dann zum Erfolg, wenn die zweiten Positionsdaten des Fahrzeugs oberhalb eines bestimmten Abstandes von der Auffahrt 791 auf die A 79 liegen (Fig. 2a). Die Assoziierung der zweiten Positionsdaten mit der bestätigten Nichtnutzung des Autobahnabschnitts 7901 durch das Fahrzeug 50 erfolgt mit Hilfe von Positionsdaten des sich von der Anschlussstelle 791 weg bewegenden Fahrzeugs 50, die einerseits innerhalb des Erkennungskreises 791s und andererseits außerhalb des Erkennungskreises 791s für die bestätigte Nichtnutzung des Autobahnabschnittes 7901 liegen. Durch Vergleich einer aus den ersten Positionsdaten gebildeten geglätteten Fahrlinie des Fahrzeugs 50 mit den Ortskoordinaten des östlichen Quadranten des Erkennungskreises 791s stellt der Prozessor 11 fest, dass die Fahrlinie des Fahrzeugs 50 den Erkennungskreis 791s in seinem östlichen Quadranten von innen nach außen schneidet (Position D des Fahrzeugs 50 in Fig. 2a). Dieses Ergebnis assoziiert der Prozessor 11 mit einer bestätigten Nichtnutzung des Autobahnabschnittes 7901 durch das Fahrzeug 50. In Ermangelung von zweiten Positionsdaten innerhalb des Erkennungskreises 791s - beispielsweise, weil das Fahrzeug 50 bei ausgeschaltetem Fahrzeuggerät in den Bereich aus dem Erkennungskreis 791s außerhalb des Erkennungskreises 791s geschleppt wurde - kann der Prozessor auch eine einzelne Ortsangabe des Fahrzeugs außerhalb des Erkennungskreises 791a mit der bestätigten Nichtnutzung des Autobahnabschnittes 7901 durch das Fahrzeug 50 assoziieren, solange die Fahrzeugposition dabei nicht all zu weit von dem östlichen Quadranten des Erkennungskreises 791s entfernt ist.. Infolge dieser Assoziierung erzeugt der Prozessor 11 einen Stornierungsdatensatz, der ein von der Uhr 14 empfangenes Zeitsignal in Form eines Stornierungszeit-Datenelementes, das initialisierte Fahrzeug-Kennzeichen B-TC 123 in Form eines Fahrzeug-Datenelementes sowie den Autobahnabschnitt 7901 in Form eines Streckenabschnitts-Datenelementes und die Mautgebühr in Form eines Gebühren-Datenelementes enthält. Dieser Stornierungsdatensatz wird von dem Prozessor 11 in verschlüsselter Form in dem kryptographischen Datenspeicher 18 abgelegt. Damit ist eine auf das Fahrzeug 50 bezogene Nutzungsberechtigung für den assoziierten Streckenabschnitt 7901 storniert worden (S 600 in Fig. 1a). Eine alternative oder kumulative Möglichkeit der Stornierung besteht einfach in dem Löschen des Buchungsdatensatzes für den Streckenabschnitt 7901.

Bleibt eine Stornierung der Buchung bis zur Buchung eines nächstfolgenden Streckenabschnittes aus, so wird mit der nächstfolgenden Buchung der Vorläufigkeitsstatus der vorangegangen Buchung gelöscht und die Nutzungsberechtigung gilt als in Anspruch genommen, die gebuchte Strecke als benutzt. Liegt kein Buchungsstatus im Buchungsdatensatz vor, so wird mit der Aufnahme eines späteren Buchungsdatensatzes die Stornierung des früheren Buchungsdatensatzes ausgeschlossen und die Nutzungsberechtigung gilt als in Anspruch genommen, die gebuchte Strecke als benutzt. Andererseits wird in der Regel durch die Assoziation der zweiten positionsbezogenen Daten mit einer bestätigten Nutzung des gebuchten Autobahnabschnittes der Vorläufigkeitsstatus der Buchung gelöscht und/ oder durch einen Endgültigkeitsstatus ersetzt. Für derart bestätigte Buchungen kann im kryptographischen Datenspeicher 18 ein separater Gebührensatz-Speicherbereich vorliegen, in den Gebührendatensätze bestätigter Buchungen aufgenommen werden. Bei Erreichen einer bestimmten Anzahl an Gebührendatensätzen oder eines bestimmten Gebührenvolumens oder nach Überschreiten einer bestimmten Zeitdauer seit der letzten Übermittlung können diese Gebührendatensätze über eine Mobilfunk-Schnittstelle des Fahrzeuggerätes an eine Maut-Zentrale zur Abrechnung übertragen werden. Alternativ oder kumulativ können die Mautgebühren bestätigter Buchungen von einer vom Fahrzeuggerät aufgenommenen Smart-Card, die ein pauschal vorausbezahltes Gebührenguthaben enthält, abgebucht werden. Auch unbestätigte Buchungen können zu einer Abbuchung der entsprechenden Gebühren von der Smart-Card führen, wenn die Stornierung des entsprechenden Straßenabschnittes eine entsprechende Gutschrift auf der Smart-Card gewährleistet.

In Fig. 7a ist gezeigt, wie das Fahrzeug 50 alternativ zu der in Fig. 2a dargestellten Route den Abschnitt 7901 der Autobahn befährt. Im kryptographischen Speicher 18 seines Fahrzeuggerätes 10 liegt hierfür die entsprechende Nutzungsberechtigung vor. An einer Kontrollbrücke 25 wird mittels einer Bildaufnahme- und Auswertevorrichtung 26 ein Bild von dem Nummernschild 51 des Fahrzeugs 50 aufgenommen und zur Gewinnung des Fahrzeug-Kennzeichens B-TC 123 mittels eines Zeichenerkennungsprogramms ausgewertet. Ferner wird seitens einer an der Kontrollbrücke 25 befestigten straßenseitigen DSRC-Sendeempfangseinrichtung 27 ein Signal zum Aufbau einer Kommunikationsverbindung 28 mit dem Fahrzeuggerät 10 über dessen fahrzeugseitige DSRC-Sendeempfangseinrichtung 13 gesendet. Im Rahmen dieser Kommunikationsverbindung 28 fragt die Bildaufnahme- und Auswertevorrichtung 26 vom Fahrzeuggerät 10 ab, ob ihm für das erkannte Fahrzeug-Kennzeichen eine Nutzungsberechtigung vorliegt. Der Prozessor 11 des Fahrzeuggerätes 10 liest dazu den Buchungsdatensatz aus dem kryptographischen Speicher 18 aus und überträgt ihn an die fahrzeugseitige DSRC-Sendeempfangseinrichtung 13 zur Sendung an die straßenseitige Bildaufnahme- und Auswertevorrichtung 26. Stellt ein Prozessor der Bildaufnahme- und Auswertevorrichtung 26 durch einen Vergleich von dem aufgenommenen und dem übermittelten Fahrzeugdaten in Verbindung mit dem übermittelten Streckenabschnittsdaten eine Übereinstimmung für den kontrollierten Streckenabschnitt 7901 Übereinstimmung fest, so gilt die Kontrolle als erfolgreich. Infolgedessen wird das vom Fahrzeug aufgenommene Bild, das ermittelte Kennzeichen sowie das Protokoll der DSRC-Datenkommunikation 28 aus dem Datenspeicher der Bildaufnahme- und Auswertevorrichtung 26 gelöscht.

Für den Fall eines negativen Kontrollergebnisses besteht eine Datenverbindung von der Kontrollbrücke 25 zu einer zentralen Datenverarbeitungseinrichtung 200 eines Mautbetreibers 20, die von der Bildaufnahme- und Auswertevorrichtung 26 das Bild des Fahrzeugs des Mautprellers zur Initialisierung eines Ordnungswidrigkeitsverfahrens empfängt.

### ZWEITES AUSFÜHRUNGSBEISPIEL

Das zweite und die folgenden Ausführungsbeispiele veranschaulichen sowohl die Tauglichkeit der erfindungsgemäßen Erzeugnisse zur Durchführung des erfindungsgemäßen Verfahrens als auch die erfindungsgemäße Verfahren in verschiedenen Ausprägungen.

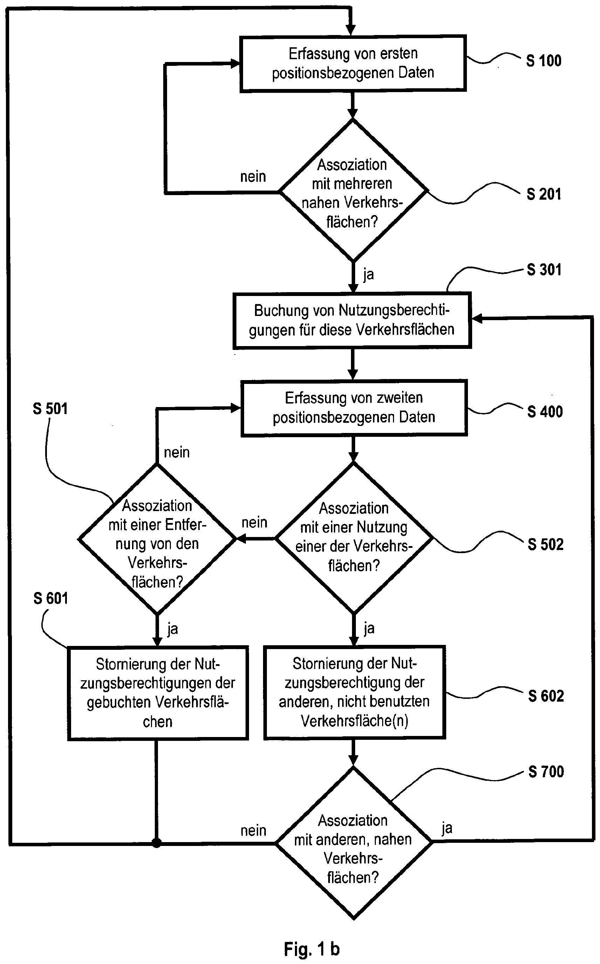

Zur Erläuterung des zweiten Ausführungsbeispiels dienen die Figuren 1b, 2b, 6a, 6d, 7b und 8a.

Gemäß der Route des zweiten Ausführungsbeispiels (Fig. 2b) nähert sich ein Fahrer - wie im ersten Ausführungsbeispiel - mit seinem Fahrzeug 50 (Fig. 7b) von Süden her auf der zweispurigen Bundesstraße B 631 dem Beginn der vierspurigen Autobahn A 79.

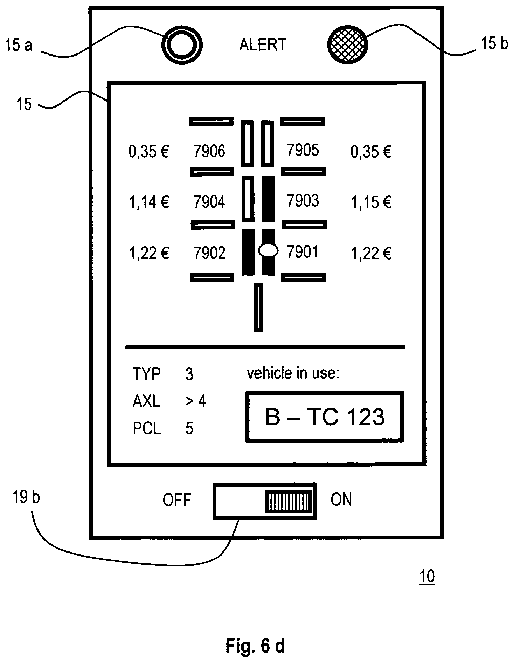

Zur Positionsbestimmung führt der Fahrer ein Navigationsgerät 10 (Fig. 6d) mit sich, dessen prinzipieller Aufbau in Fig. 6a schematisch dargestellt ist und bereits im ersten Ausführungsbeispiel erläutert wurde. Durch das Vorhandensein eines Mobilfunk-Sendeempfängers 13 ist das Navigationsgerät 10 als Mobilfunkgerät ausgebildet. Der Prozessor 11 des Navigationsgerätes 10 führt eine Positionserfassungs- und Übermittlungssoftware aus, die dazu ausgebildet ist, periodisch sekündlich aktuelle positionsbezogene Daten von dem GPS-Empfänger 12 zu empfangen und an den Mobilfunk-Sendeempfänger 13 zur sekündlichen Sendung von Positionsdaten des Navigationsgerätes 10 an die vermittelnde zentrale Datenverarbeitungseinrichtung 300 einer Mautvermittlungsstelle 30 zu übertragen. Insofern ist das Navigationsgerät als Thin Client ausgebildet, weil ihm die Mittel fehlen, eine Assoziierung der Positionsdaten mit einer gebührenpflichtigen Verkehrsfläche durchzuführen. Dies bleibt der vermittelnden zentralen Datenverarbeitungseinrichtung 300 der Mautvermittlungsstelle 30 überlassen.

Für den Empfang der Positionsdaten des Navigationsgerätes 10 tritt die vermittelnde zentrale Datenverarbeitungseinrichtung 300 mit einer Vermittlungsstelle 45 eines Mobilfunknetzes in Verbindung, die ihrerseits von den Basis-Stationen 41 und/ oder 42 zumindest zeitweise diejenige zum Aufbau und zur Aufrechterhaltung einer Kommunikationsverbindung zwischen dem Navigationsgerät 10 und der vermittelnde zentralen Datenverarbeitungseinrichtung 300 bereitstellt, die die qualitativ hochwertigste Funkverbindung 41a zu dem Navigationsgerät 10 in der den Basis-Stationen 41 und 42 zugeordneten Zellbereichen ermöglicht.

Auf der vermittelnden zentralen Datenverarbeitungseinrichtung 300 der Mautvermittlungsstelle 30 wird ein erfindungsgemäßes Mautvermittlungsprogramm ausgeführt, das einen Prozessor 311 eines Mautvermittlungsservers 310 der zentralen Datenverarbeitungseinrichtung 300 anweist, (a) erste positionsbezogenen Daten des Navigationsgerätes 10 durch Entgegennahme einer vom Navigationsgerät in ein Mobilfunknetz an die vermittelnde zentrale Datenverarbeitungseinrichtung versandten ersten Nachricht, die die ersten positionsbezogenen Daten enthält, im Sekundentakt zu empfangen und zu erfassen (S 100 in Fig. 1a) und (b) die ersten positionsbezogenen Daten des Navigationsgerätes 10 hinsichtlich einer Assoziierung mit einer möglichen bevorstehenden Nutzung wenigstens eines ersten gebührenpflichtigen Autobahnabschnitts zu prüfen (S 200 in Fig. 1a). Solange eine Assoziierung mit einem ersten gebührenpflichtigen Autobahnabschnitt nicht möglich ist, wird der Empfang von ersten Positionsdaten des Navigationsgerätes 10 fortgesetzt.

Als Erkennungsobjekte, die die Assoziierung von Positionsdaten mit einem oder mehreren Autobahnabschnitten vermitteln, werden von der vermittelnden zentralen Datenverarbeitungseinrichtung 300 Erkennungslinien verwendet, die - in einem bestimmten Abstandsbereich von der Anschlussstelle des Autobahnabschnittes - jeweils eine jede Straße schneiden, die zu der Anschlussstelle hin- oder wegführt - auch den Autobahnabschnitt selbst. Diese Erkennungslinien besitzen ein erstes Paar Ortskoordinaten als erstem Endpunkt der Erkennungslinie und ein zweites Paar Ortskoordinaten als zweitem Endpunkt der Erkennungslinie und sind als solche zusammen mit den Autobahnabschnitten, denen sie zugeordnet sind, in dem Datenspeicher 312 des Mautvermittlungsservers 310 gespeichert. Die Erkennungslinien werden als jeweils gerade Strecke zwischen ihren beiden Endpunkten aufgefasst. Sie sind in den Fig. 2b - Fig. 5 als gepunktete Linien eingezeichnet und können als virtuelles Registrierungstor über den Zufahrtsstraßen zur jeweiligen Anschlussstelle aufgefasst werden.

Kann die vermittelnde zentrale Datenverarbeitungseinrichtung 300 für eine aus mehreren aufeinanderfolgenden ersten Positionen des Navigationsgerätes 10 - und damit des Fahrzeugs 50 - gebildete geglättete Fahrlinie des Fahrzeugs 50 ein Schnittpunkt mit einer der Erkennungslinie ermitteln, so gilt der mit der Erkennungslinie verknüpfte Autobahnabschnitt als mit den ersten Positionsdaten des Fahrzeugs 50 erfolgreich assoziiert. Das passiert wenn das Fahrzeug 50 die zwischen den Positionen A und B liegende Erkennungslinie auf der Bundesstraße B 631 überquert (Fig. 2b).

Im diesem Erfolgsfall weist das Mautvermittlungsprogramm (c) den Prozessor 311 der vermittelnden zentralen Datenverarbeitungseinrichtung 300 an, die Sendung von wenigstens einer Aufforderung zur Buchung einer ersten Nutzungsberechtigung und/ oder Erhebung einer ersten Gebühr für den Autobahnabschnitt 7901 an eine erste zentrale Datenverarbeitungseinrichtung 200 durchzuführen, die durch eine erste Mautzentrale 20 bereitgestellt wird. Würde die vermittelnde zentrale Datenverarbeitungseinrichtung 300 feststellen, dass die assoziierte Verkehrsfläche oder eine der assoziierten Verkehrsflächen einer anderen Mautzentrale 20' zur Mauterhebung zugeteilt ist, beispielsweise weil mehrere assoziierte Verkehrsflächen in zwei oder mehr verschiedenen Betreibergebieten liegen, so würde das Computerprogramm den Prozessor der vermittelnden zentralen Datenverarbeitungseinrichtung 300 anweisen, die Sendung von wenigstens einer Aufforderung zur Buchung einer ersten Nutzungsberechtigung und/ oder Erhebung einer ersten Gebühr für die erste gebührenpflichtige Verkehrsfläche an eine zweite zentrale Datenverarbeitungseinrichtung 200' durchzuführen, die durch die andere, zweite Mautzentrale 20' bereitgestellt wird. Die erste zentrale Datenverarbeitungseinrichtung 200 oder die zweite Datenverarbeitungseinrichtung 200' sind eingerichtet, eine Buchungsaufforderung oder Gebührenerhebungsaufforderung für die erste gebührenpflichtige Verkehrsfläche von der vermittelnden zentralen Datenverarbeitungseinrichtung 300 entgegenzunehmen.

An der Position B angelangt, ist für das Fahrzeug 50 in der ersten zentralen Datenverarbeitungseinrichtung 200 eine Nutzungsberechtigung für den Autobahnabschnitt 7901 registriert (Fig. 2c, S 300 in Fig. 1a). Über die erfolgte Registrierung übermittelt die erste zentrale Datenverarbeitungseinrichtung 200 an die vermittelnde zentrale Datenverarbeitungseinrichtung 300 eine Buchungsbestätigungsnachricht, die die vermittelnde zentrale Datenverarbeitungseinrichtung 300 über die Mobilfunkverbindung 41a an das Navigationsgerät 10 weiterleitet. Diese Buchungsbestätigung vermittelt dem Fahrer, dass eine ordnungsgemäße Benutzung des Autobahnabschnitts 7901 möglich ist. Er fährt sodann mit seinem Fahrzeug 50 an der Anschlussstelle 791 auf den Streckenabschnitt 7901 der Autobahn 79 auf. Sein Navigationsgerät 10 sendet seit dem Empfang der Buchungsbestätigung periodisch zweite Positionsdaten an die vermittelnde zentrale Datenverarbeitungseinrichtung 300.

Das Mautvermittlungsprogramm ist weiters ausgeführt, den Prozessor 311 eines Mautvermittlungsservers 310 der zentralen Datenverarbeitungseinrichtung 300 anzuweisen, (d) die zweiten positionsbezogenen Daten des Navigationsgerätes 10 durch Entgegennahme einer vom Navigationsgerät 10 in das Mobilfunknetz an die vermittelnde zentrale Datenverarbeitungseinrichtung 300 versandten zweiten Nachricht, die die zweiten positionsbezogenen Daten enthält, im Sekundentakt entgegenzunehmen. (S400 in Fig. 1a) und (e) die ersten positionsbezogenen Daten des Navigationsgerätes 10 hinsichtlich einer Assoziierung mit einer Nichtnutzung des gebuchten Autobahnabschnittes 7901 zu prüfen (S 500 in Fig. 1a). Da jedoch das Fahrzeug auf diesen Autobahnabschnitt aufgefahren ist, bleiben derartige Positionsdaten aus. Der Prozess gemäß Fig. 1a wird daher in Schritt S 500 abgebrochen und gilt daher für den gebuchten Autobahnabschnitt 7901, der nicht storniert wird, als nicht erfindungsgemäß.

Stattdessen wertet das Mautvermittlungsprogramm die übermittelten zweiten Positionsdaten des ersten Prozesses auch als erste Positionsdaten eines, dem ersten Prozess folgenden, zweiten Prozesses für die Buchung einer weiteren Nutzungsberechtigung für den nächsten Autobahnabschnitt. Ein Ablaufdiagramm dieses zweiten Prozesses ist in Fig. 1b wiedergegeben und zeigt mit S 100 in Fig. 1b die Erfassung der ersten positionsbezogenen Daten durch die vermittelnde zentrale Datenverarbeitungseinrichtung 300, die es von dem Navigationsgerät 10 erhält, das mit dem Fahrzeug auf dem Streckenabschnitt 7901 der Autobahn 79 unterwegs ist (Position C in Fig. 2b).

Fährt das Fahrzeug 50 bereits an der Position C auf eine Kontrollbrücke 25 zu (Fig. 7b), so nimmt mittels einer Bildaufnahme- und Auswertevorrichtung 26 der Kontrollbrücke ein Bild von dem Nummernschild 51 des Fahrzeugs 50 aufgenommen und zur Gewinnung des Fahrzeug-Kennzeichens B-TC 123 mittels eines Zeichenerkennungsprogramms ausgewertet. Das Fahrzeug-Kennzeichen wird als Fahrzeugidentifikations-Datenelement zusammen mit dem Autobahnabschnitt 7903 als Verkehrsflächen-Datenelement zu einem Kontroll-Datensatz zusammengefasst, mit dem die Bildaufnahme- und Auswertevorrichtung 26 eine Buchungsabfrage an den Buchungsserver 210 der Mautzentrale 20 stellt. Diese Abfrage kann vom Buchungswebdienst aufgenommen werden. Durch einen Vergleich der Kontrolldaten mit den Buchungsdaten im Buchungsdatenspeicherbereich kann ein Kontrollprogramm der ersten zentralen Datenverarbeitungseinrichtung ermitteln, ob für das Fahrzeug 50 für den Abschnitt 7903 die Nutzungsberechtigung vorliegt. Sowohl im positiven als auch im negativen Fall sendet der Buchungsserver eine entsprechende Nachricht an die Bildaufnahme- und Auswertevorrichtung 26 der Kontrollbrücke 25 zurück. Im Falle einer vorliegenden Nutzungsberechtigung (positives Kontrollergebnis) wird das vom Fahrzeug aufgenommene Bild, das ermittelte Kennzeichen sowie das Protokoll der DSRC-Datenkommunikation 28 aus dem Datenspeicher der Bildaufnahme- und Auswertevorrichtung 26 gelöscht.

Für den Fall einer mangelnden Nutzungsberechtigung (negatives Kontrollergebnis) besteht eine Datenverbindung von der Kontrollbrücke 25 zu der zentralen Datenverarbeitungseinrichtung 200 der Mautzentrale 20, die von der Bildaufnahme- und Auswertevorrichtung 26 das Bild des Fahrzeugs des Mautprellers zur Initialisierung eines Ordnungswidrigkeitsverfahrens empfängt.

Für erste Positionsdaten, die zwei Positionen des Fahrzeugs 50 auf gegenüberliegenden Seiten der Erkennungslinie zwischen der Position C und D entsprechen, ermittelt das Mautvermittlungsprogramm zwei zur möglichen Nutzung anstehende Autobahnabschnitte, nämlich den Autobahnabschnitt 7903, der dem Autobahnabschnitt 7901 in Fahrtrichtung unmittelbar folgt, und den Autobahnabschnitt 7902, der die Gegenfahrbahn des benutzten Autobahnabschnittes 7901 bildet (S 201 in Fig. 1b). Beide Autobahnabschnitte 7902 und 7903 können unmittelbar von der Anschlussstelle 792 befahren werden, auf die sich das Fahrzeug auf dem Autobahnabschnitt 7901 zu bewegt. Für die beiden Autobahnabschnitte 7902 und 7903 bewirkt das Mautvermittlungsprogramm die Sendung einer Buchungsanfrage von der vermittelnden zentralen Datenverarbeitungseinrichtung 300 an die erste zentrale Datenverarbeitungseinrichtung 200.

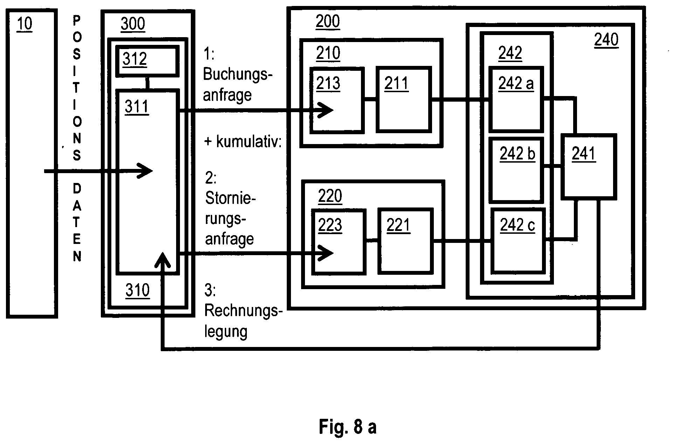

Die zentrale Datenverarbeitungseinrichtung 200 weist gemäß Fig. 8a einen Buchungsserver 210, einen Stornierungsserver 220 und einen Konsolidierungsserver 240 auf. Der Buchungsserver 210 weist einen Buchungsprozessor 211 auf sowie als Schnittstelle zum Empfang von Buchungsanfragen seitens der Mautvermittlungsstelle 30 einen Buchungswebdienst 213. Der Stornierungsserver 220 weist einen Stornierungsprozessor 221 auf sowie als Schnittstelle zum Empfang von Stornierungsanfragen seitens der Mautvermittlungsstelle 30 einen Stornierungswebdienst 223. Die Ausbildung der Schnittstellen von Buchungs- und Stornierungsserver 210 und 220 als Webdienste 213 und 223 ist für eine Vielzahl Anfragen seitens einer Vielzahl von Mautvermittlungsstellen 30 geeignet. Im Extremfall entspricht die Anzahl der Mautvermittlungsstellen 30 der Anzahl in Umlauf gebrachter Navigationsgeräte 10.

Die Buchungsanfrage für Nutzungsberechtigungen der Autobahnabschnitte 7902 und 7903 an den Buchungswebdienst 213 werden vom Buchungsprozessor 211 verarbeitet, indem er einen auf das Fahrzeug 50 bezogenen ersten Nutzungsberechtigungsdatensatz für den Autobahnabschnitt 7902 und einen auf das Fahrzeug 50 bezogenen zweiten Nutzungsberechtigungsdatensatz für den Autobahnabschnitt 7903 in einem Buchungsspeicherbereich 242a des Datenspeichers 242 des Konsolidierungsservers 240 ablegt (S 301 von Fig. 1b). Der erste und der zweite Nutzungsberechtigungsdatensatz sind miteinander über ein identisches Buchungszeit-Datenelement verknüpft, was den Zusammenhang der Buchungen rückverfolgbar macht.

Über den Buchungswebdienst 213 wird von dem Buchungsprozessor 211 eine Buchungsbestätigungsnachricht für die beiden Autobahnabschnitte 7902 und 7903 an die Mautvermittlungsstelle 30 zurückgegeben, die diese an das Navigationsgerät übermittelt. An der Position D in Fig. 2b liegt dem Fahrer auf seinem Navigationsgerät 10 eine Anzeige vor, wie sie in Fig. 6d in der Draufsicht des Navigationsgerätes 10 dargestellt ist. Zu sehen sind im OLED-Display 15 die vertikal ausgerichteten Rechtecke als Streckenabschnitte der Autobahn mit den entsprechenden Bezeichnungen. Für schwarz eingefärbte Rechtecke liegt eine Nutzungsberechtigung des jeweiligen Streckenabschnittes für das Fahrzeug 50 in der Mautzentrale 20 vor, für im Inhalt weiß gehaltene Rechtecke liegt keine Nutzungsberechtigung des jeweiligen Streckenabschnittes für das Fahrzeug 50 in der Mautzentrale 20 vor. Die weiße Ellipse auf dem Streckenabschnitt 7901 gibt die aktuelle Position des Fahrzeugs 50 an. Die Anzeige dieser Information zeigt dem Fahrer, dass er an der folgenden Anschlussstelle 792 (Fig. 2b) berechtigt ist, auf dem folgenden Streckenabschnitt 7903 weiterzufahren oder alternativ dazu zu wenden und in Gegenrichtung den Streckenabschnitt 7902 zur Rückfahrt zu nutzen.

Seit dem Empfang der Buchungsbestätigung für die Streckenabschnitte 7902 und 7903 von der Mautzentrale 20 interpretiert das Mautvermittlungsprogramm der Mautvermittlungsstelle 30 die vom Navigationsgerät 10 empfangenen Positionsdaten als zweite Positionsdaten entsprechend dem Schritt S 400 in Fig. 1b. Solange das Mautvermittlungsprogramm keinen Schnittpunkt einer Fahrlinie des Fahrzeugs mit einer der Position D nächst folgend erreichbaren Erkennungslinien feststellen kann, wird die Erfassung von zweiten Positionsdaten durch die zentrale vermittelnde Datenverarbeitungseinrichtung 300 weitergeführt.

Entsprechend des in Fig. 2b dargestellten Routenverlaufs entschließt sich der Fahrer an der Anschlussstelle 792 seine Fahrt in der ursprünglichen Fahrtrichtung auf dem Autobahnabschnitt 7903 fortzusetzen (Position E). Die zwischen der Position E und F an die zentrale vermittelnde Datenverarbeitungseinrichtung 300 gesendeten Positionsdaten wiesen zweite Positionsdaten des Fahrzeugs 50 auf, für die das Mautermittlungsprogramm ein Kreuzen der zwischen den Positionen E und F angeordneten Erhebungslinie feststellt. Ein Kreuzen dieser Erkennungslinie interpretiert das Mautermittlungsprogramm aufgrund der ihm zur Verfügung stehenden Autobahnabschnitts-Datensätze als eine Bestätigung der Nutzung des Autobahnabschnitts 7903 (S 502 in Fig. 1b). Die alternative Nutzungsmöglichkeit des Autobahnabschnitts 7902, an dessen Stelle der Autobahnabschnitt 7903 benutzt wurde, interpretiert das Mautvermittlungsprogramm als Stornierungsbedarf der Nutzungsberechtigung für den nicht benutzten Abschnitt 7902.

Infolgedessen weist das Mautvermittlungsprogramm die vermittelnde zentrale Datenverarbeitungseinrichtung 300 an, eine Stornierungsanfrage an den Stornierungswebdienst 223 des Stornierungsservers 220 der zentralen Datenverarbeitungseinrichtung 200 der zuständigen Mautstelle 20 zu richten (Fig. 8a). Die Stornierungsanfrage für die Nutzungsberechtigung des Autobahnabschnitts 7902 an den Stornierungswebdienst 223 wird vom Stornierungsprozessor 221 verarbeitet, indem er einen auf das Fahrzeug 50 bezogenen Stornierungsdatensatz für den Autobahnabschnitt 7902 in einem Stornierungsspeicherbereich 242b des Datenspeichers 242 des Konsolidierungsservers 240 ablegt (S 602 von Fig. 1b).

Mittels des Konsolidierungsprozessors 241 greift der Konsolidierungsserver 240 periodisch oder ereignisgesteuert auf den Buchungsspeicherbereich 242a und den Stornierungsspeicherbereich 242b des Datenspeichers 242 zu, um Nutzungsberechtigungsdatensätze (kurz: Buchungsdatensätze) mit Stornierungsdatensätzen zu vergleichen, die dasselbe Fahrzeugidentifizierungs-Datenelement und dasselbe Autobahnabschnitts-Datenelement aufweisen. Im Wege dieses Vergleichs extrahiert der Konsolidierungsserver 240 den mit dem Buchungsdatensatz des stornierten Autobahnabschnitts 7902 verknüpften Buchungsdatensatz des benutzten Autobahnabschnitts 7903. Dieser wird mit einer Mautgebühr versehen und im Nutzungsspeicherbereich 242c zu den Gebührendatensätzen abgelegt, für die die Nutzung eines Autobahnabschnitts als bestätigt gilt. Periodisch oder ereignisgesteuert ruft der Konsolidierungsserver 240 die auf das Fahrzeug 50 bezogenen, gesammelten Gebührendatensätze aus dem Nutzungsspeicherbereich 242c ab, um den Summenbetrag der Gebühren entweder unmittelbar von einem Konto des Fahrzeughalters oder -nutzers abzubuchen oder, wie in Fig. 8a dargestellt, der Mautvermittlungsstelle 30 durch Übertragung an den Mautvermittlungsprozessor 311 oder einen anderen nicht dargestellten Zahlungsdatenprozessors der Mautvermittlungsstelle 30 in Rechnung zu stellen. Für den Fall, dass die Mautvermittlungsstelle 30 von der Mobilfunkzentrale eines Mobilfunkbetreibers oder von der Verwaltungszentrale eines Herstellers des Navigationsgerätes 10 umfasst oder an eine solche angeschlossen ist, kann der Mobilfunkbetreiber/ Hersteller den empfangenen Mautbetrag von dem Konto des Navigationsgerätebesitzers, das mit der Mobilfunknummer des Navigationsgerätes 10 verknüpft in einer Kundendatenbank abgelegt ist, abbuchen und die Rechnung an den Navigationsgerätebesitzer, der in der Regel mit dem Fahrer identisch ist, weiterleiten.

Nach der Assoziierung der zweiten Positionsdaten des Fahrzeugs 50 prüft die vermittelnde zentrale Datenverarbeitungseinrichtung 300, ob mit der bestätigten Nutzung des Abschnitts 7903 die mögliche bevorstehende Nutzung weiterer Abschnitt verbunden ist. Diese Information kann sie aus einer Datenbank entnehmen, in der Verkehrsflächen-Sammlungsdatensätze gespeichert sind, die ein Verkehrsflächen-Datenelement B, dessen Nutzung bestätigt wurde mit weitere Verkehrsflächen-Datenelementen V1, ... Vi verknüpft, die aufgrund der Nutzung der Verkehrsfläche B hinsichtlich einer Nutzung bevorstehen können. Für den Autobahnabschnitt 7903 (bestätigte Nutzung) sind dies die Autobahnabschnitte 7904 und 7905 (mögliche bevorstehende Nutzung, S 700 in Fig. 1b). Für diese Abschnitte 7904 und 7905 sendet die vermittelnde zentrale Datenverarbeitungseinrichtung 300 eine Buchungsanfrage an den Buchungsserver 210 der Mautzentrale 20 (S 301 in Fig. 1b).

Folglich sind die zweiten Positionsdaten, die zur Feststellung der Nutzung des Autobahnabschnitts 7903 geführt haben, bezüglich der Feststellung einer möglichen bevorstehenden Nutzung der Autobahnabschnitte 7904 und 7905 erfindungsgemäß als erste Positionsdaten zu werten, zu deren Bestätigung einer Nutzung und/ oder Nichtnutzung erneut zweite Positionsdaten des Fahrzeugs 50 erfasst werden müssen.

Verlässt das Fahrzeug auf einer alternativen, nicht dargestellten Fahrtroute die Autobahn A 79 an der Anschlussstelle 792, so führt es sein Weg über eine der beiden Erkennungslinien westlich und östlich der Anschlussstelle 792. Wenn die von der Mautvermittlungsstelle 30 empfangenen zweiten Positionsdaten nicht mit der Nutzung des Abschnittes 7903 oder 7902 assoziiert werden können, prüft das Mautvermittlungsprogramm als nächstes, ob die zweiten Positionsdaten mit einer Entfernung des Fahrzeugs von beiden gebuchten Abschnitten 7902 und 7903 (ohne sie vorher befahren zu haben) übereinstimmen können (S 501 in Fig. 1b). Dies wäre dann der Fall, wenn eine aus den zweiten Positionsdaten abgeleitete Fahrlinie des Fahrzeugs eine der beiden Erkennungslinien östlich und westlich der Anschlussstelle 792 schneiden würde. Ist dies der Fall, so assoziiert das Mautvermittlungsprogramm die zweiten Positionsdaten mit einer Nichtnutzung des ersten Abschnittes 7902 und des zweiten Abschnittes 7903. Die vermittelnde zentrale Datenverarbeitungseinrichtung 300 stellt in diesem Fall eine Stornierungsanfrage an den Stornierungsserver 220 der Mautzentrale für beide Abschnitte 7902 und 7903, die der Stornierungsserver entsprechend durch die Speicherung zweier Stornierungs-Datensätze im Stornierungsspeicherbereich 242c des Datenspeichers 242 des Konsolidierungsservers 240 bedient, der seinerseits die den Stornierungen entsprechenden Buchungen mit den Stornierungen annulliert, in dem er die Nutzungsberechtigungen für die Abschnitte 7902 und 7903 aus dem Buchungsspeicherbereich 242a löscht.

Auf dem Autobahnabschnitt 7903 unterquert das Fahrzeug 50, noch bevor die Feststellung der Nutzung des Autobahnabschnittes von der vermittelnden zentralen Datenverarbeitungseinrichtung 300 erfolgt ist, eine Kontrollbrücke 25, die mit einer Bildaufnahme- und -auswertevorrichtung 26 zur ein Bild des Fahrzeugs 50 aufnimmt und auswertet, um aus der Aufnahme des Nummernschildes 51 das Identifikationsmerkmal des Fahrzeugkennzeichens B-TC 123 zu gewinnen und an den Buchungsserver 210 der zentralen Datenverarbeitungseinrichtung 200 eine Anfrage zu entrichten, ob für das unter dem Fahrzeugkennzeichnen B-TC 123 registrierte Fahrzeug eine Nutzungsberechtigung für den Abschnitt 7903 vorliegt. Alternativ kann die Abfrage an einen separaten Kontrollserver (nicht dargestellt) erfolgen, der Zugriff auf den Buchungsspeicherbereich 242a besitzt. Bestätigt der Buchungsserver oder der Kontrollserver die Existenz der Nutzungsberechtigung, so werden alle von der Bildaufnahme- und -auswertevorrichtung 26 vom Fahrzeug 50 erfassten und abgeleiteten Daten von der Kontrollbrücke 25 gelöscht.

### DRITTES AUSFÜHRUNGSBEISPIEL

Zur Erläuterung des dritten Ausführungsbeispiels dienen die Figuren 2c, 6a, 6e, 7c, 8b und 8c.

Gemäß der Route des zweiten Ausführungsbeispiels (Fig. 2c) nähert sich ein Fahrer - wie im ersten und zweiten Ausführungsbeispiel - mit seinem Fahrzeug 50 (Fig. 7c) von Süden her auf der zweispurigen Bundesstraße B 631 dem Beginn der vierspurigen Autobahn A 79.

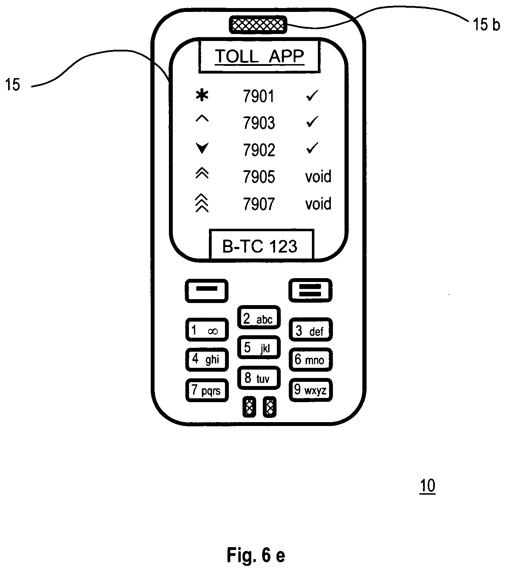

Zur Ermittlung von mit der Fahrzeugposition in Beziehung stehenden gebührenpflichtigen Streckenabschnitten führt der Fahrer ein Mobiltelefon 10 (Fig. 6e) mit sich, dessen prinzipieller Aufbau in Fig. 6a schematisch dargestellt ist und bereits im ersten Ausführungsbeispiel erläutert wurde. Der kryptographische Datenspeicher 18 wird durch eine SIM-Karte des Mobilfunk-Anbieters bereitgestellt. Durch das Vorhandensein eines Mobilfunk-Sendeempfängers 13 ist das Mobiltelefon 10 als Mobilfunkgerät ausgebildet. Der Prozessor 11 des Mobiltelefons 10 führt eine Positionserfassungs-, Assoziierungs- und Anfragesoftware aus, die als "Mautprogramm", englisch umgangssprachlich "toll app" bezeichnet wird und die sich der Nutzer von einer zentralen Datenbank, beispielsweise einer Verkaufsstelle von Programmen (englisch umgangssprachlich "app store"), in den Daten-Lese-Speicher 16 seines Mobiltelefons 10 heruntergeladen ("ge-downloaded") hat. Das Mautprogramm umfasst eine Streckenabschnittsdatenbank mit Streckenabschnittsdatensätzen von Erkennungsobjekten in Form von Erkennungslinien, die durch jeweils zwei Endpunkte mit jeweils zwei Ortskoordinaten (Längen- und Breitengradangabe) definiert sind, und jeweils der Erkennungslinie zugeordneten ein oder mehreren gebührenpflichtigen Streckenabschnitten in Form von Abschnittsnummer. Der der Erkennungslinie im Streckenabschnittsdatensatz zunächst nachfolgende Streckenabschnitt ist derjenige, für den die Erkennungslinie eine tatsächliche Benutzung repräsentiert; alle nachfolgenden Streckenabschnitte sind Streckenabschnitte, die gebucht oder storniert werden sollen. Bei Erkennungslinien außerhalb von gebührenpflichtigen Streckenabschnitten (zum Beispiel solche auf Bundesstraßen) bleibt der erste Streckenabschnittsplatz im Streckenabschnittsdatensatz leer. Bei Erkennungslinien, die nur der Nutzungsbestätigung dienen, ist nur der erste Streckenabschnittsplatz im Streckenabschnittsdatensatz belegt und die übrigen sind leer. Ein letztes Datenelement im Streckenabschnittsdatensatz kann eine für die jeweilige Erkennungslinie oder den jeweiligen Streckenabschnitt zur Mauterhebung berechtigte Stelle 20 (Mautbetreiber 1) oder 20' (Mautbetreiber 2) kennzeichnen, deren URL zur Buchung und/ oder Stornierung einer Nutzungsberechtigung für den betreffenden Streckenabschnitt in einer separaten Datenbank gespeichert ist (siehe Fig. 7c).

Der Prozessor 11 ist durch die Ausführung des Mautprogramms dazu befähigt, periodisch sekündlich aktuell Positionsdaten von dem GPS-Empfänger 12 zu empfangen und im Daten-Schreib-Lese-Speicher 17 zwischenzuspeichern, um aus den Positionsdaten des Mobiltelefons 10 abgeleitete Fahrlinien des Fahrzeugs 50 mit im Daten-Lese-Speicher 16 vorrätigen Erkennungslinien daraufhin vergleichen, ob ein Schnittpunkt zwischen der Fahrlinie und einer Erkennungslinie vorliegt. Können die Positionsdaten auf diese Weise mit einem gebührenpflichtigen Streckenabschnitt assoziiert werden, so prüft der Prozessor mittels des Mautprogramms, ob die Fahrlinie die Erkennungslinie in positiver Fahrtrichtung auf den Streckenabschnitt hin oder in negativer Fahrtrichtung von dem Streckenabschnitt weg schneidet. Dies kann in einfacher Weise unter Zugrundelegung einer Konvention, die die Erkennungslinie als Vektor vom ersten Endpunkt zu zweiten Endpunkt auffasst und die Fahrlinie als Vektor von der älteren Fahrposition A zur jüngeren Fahrposition B, unter der Maßgabe ermittelt werden, dass für eine positive Fahrtrichtung ein Winkel zwischen Erkennungslinienvektor und Fahrlinienvektor zwischen 0° und 180° liegt und für eine negative Fahrtrichtung ein Winkel zwischen Erkennungslinienvektor und Fahrlinienvektor zwischen 180° und 360° liegt. Letzteres bedeutet, dass der Fahrlinienvektor gegenüber dem Erkennungslinienvektor in einem Winkel zwischen 0° und 180° im Uhrzeigersinn verdreht liegt. Dazu sind die Erkennungslinien in Fig. 2c als Vektoren dargestellt, die in Fahrtrichtung hin auf eine Anschlussstelle 791, 792 oder 793 der Autobahn von der linken zur rechten Straßenseite orientiert sind.

Die Implementierung einer Routine zur Ermittlung von Streckenabschnitten, seien es die einer möglichen bevorstehenden Nutzung, die einer bestätigten Nutzung oder die einer bestätigten Nichtnutzung, aus Positionsdaten des Fahrzeugs 50 auf dem Mobiltelefon 10 macht das Mobiltelefon 10 zu einem "Thick Client", der den Assoziierungsprozess einer zentralen Datenverarbeitungseinrichtung abnimmt und dezentral im Fahrzeug 50 ausführt.

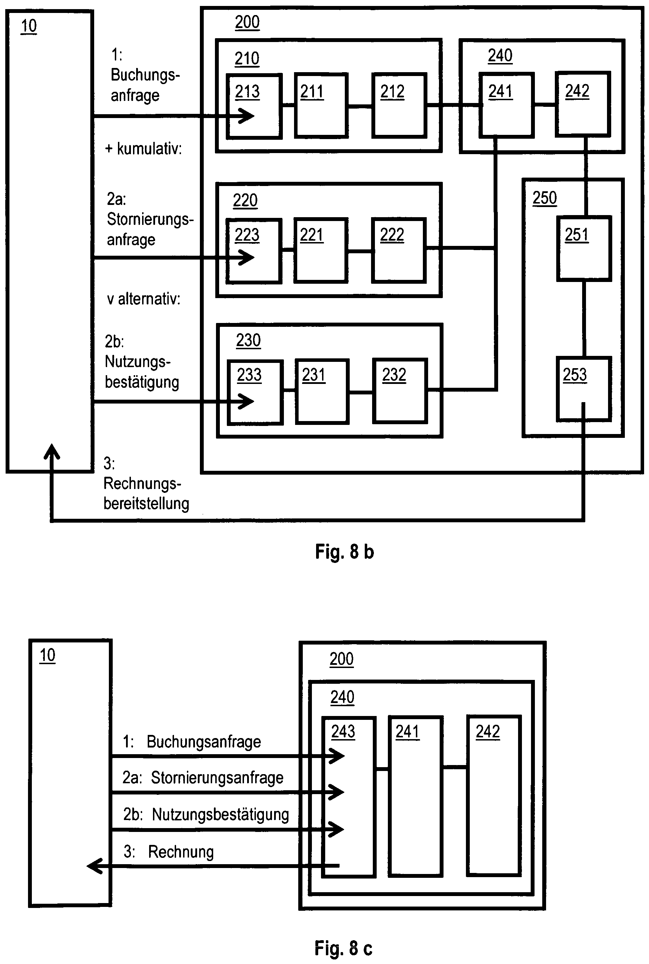

Erste Positionsdaten zwischen den Positionen A und B entsprechen erfindungsgemäß einer positiven Fahrtrichtung, deren Feststellung das Mautprogramm dazu veranlasst für den mit den ersten Positionsdaten assoziierten ersten gebührenpflichtigen Streckenabschnitt 7901 über den Mobilfunk-Sendeempfänger 13 unter der Web-Adresse (z. B. die URL http://www.toll-collect.de/buchung/) eines Buchungswebdienstes 213 eine Buchungsanfrage unter Angabe einer Nutzerkennung (z. B. des Fahrzeugkennzeichens) für den Streckenabschnitt 7901 an den Buchungsserver 210 einer zentralen Datenverarbeitungseinrichtung 200 einer Mauterhebungsstelle 20 zu richten (Fig. 7c und Fig. 8b). Hätte das Mautprogramm eine andere Mauterhebungsstelle 20', die statt der erstgenannten Mauterhebungsstelle 20 zur Mauterhebung für den Streckenabschnitt 7901 berechtigt wäre, ermittelt, so hätte sie den von dieser Mauterhebungsstelle 20' auf deren zentralen Datenverarbeitungseinrichtung 200' bereitgestellten anderen Buchungswebdienst angewählt.

Die Buchungsanfrage, die vom Mobiltelefon 10 an den Buchungswebdienst 213 gestellt wird, wird vom Prozessor 211 des Buchungsservers 210 verarbeitet und in Form eines Buchungsdatensatzes für den dem Fahrzeug 50 zugeordneten Streckenabschnitt 7901 als Nutzungsberechtigung im der Buchungsdatenspeicher 212 des Buchungsservers gespeichert. Der Prozessor 211 weist den Buchungswebdienst 213 anschließend an, eine Nachricht über die Bestätigung der Buchung der Nutzungsberechtigung an das Mobiltelefon 10 zu senden oder dem Mobiltelefon 10 zur Annahme zur Verfügung zu stellen. Die Buchungsbestätigung für den vorausliegenden Streckenabschnitt 7901 wird dem Fahrer mittels des TFT-Bildschirms 15 durch sein Mobiltelefon 10 an der Fahrzeugposition B angezeigt, so dass er guten Gewissens die Autobahn 79 an der Anschlussstelle 791 befahren kann.

Eine ausbleibende Buchungsbestätigung würde das Mobiltelefon nach Ablauf einer bestimmten Zeitdauer ab Sendung der Buchungsanforderung dazu veranlassen, mittels seines Lautsprechers 15b ein Alarmsignal abzugeben.

Zwischen der Fahrzeugposition C und D erfasst das Mobiltelefon 10 zweite Positionsdaten, die das Mautprogramm mit der Nutzung des Streckenabschnittes 7901 assoziiert. Es sendet daraufhin eine Nutzungsbestätigungsnachricht für den Streckenabschnitt 7901 unter seiner Nutzerkennung über eine Verbindung mit http://www.toll-collect.de/nutzung/ an den Nutzungswebdienst 233 des Nutzungsservers 230 der zentralen Datenverarbeitungseinrichtung 200. Diese Nachricht wird vom Nutzungsprozessor 231 des Nutzungsservers 230 im Nutzungsdatenspeicher 232 als Nutzungsdatensatz für das Fahrzeug 50 auf dem Streckenabschnitt 7901 abgespeichert. Anschließend wird der Konsolidierungsserver 240 aufgefordert, die fahrzeugspezifischen Nutzungsdaten vom Nutzungsdatenspeicher 232 mit den fahrzeugspezifischen Buchungsdaten vom Buchungsdatenspeicher 211 zu vergleichen und einen auf das Fahrzeug 50 und den Streckenabschnitt 7901 bezogenen Gebührendatensatz im Gebührendatenspeicher 242 des Konsolidierungsservers 240 abzulegen. Ferner wird der Konsolidierungsserver 240 aufgefordert, a) auf einen Stornierungsbedarf für zusammen mit dem Streckenabschnitt 7901 gebuchte weitere Streckenabschnitte zu prüfen sowie b) auf einen Buchungsbedarf für neue Streckenabschnitte, die sich dem Streckenabschnitt 7901 anschließen. Im Ergebnis stellt der Konsolidierungsprozessor 241 des Konsolidierungsservers 240 fest, dass a) keine Stornierung möglich ist, weil zusätzlich zu dem benutzten Streckenabschnitt 7901 kein weiterer Streckenabschnitt gebucht wurde, und b) ein Buchungsbedarf für die Streckenabschnitte 7903 und 7902 besteht. Für diese beiden Streckenabschnitte erstellt der Konsolidierungsprozessor daraufhin entsprechende auf das Fahrzeug 50 bezogene Nutzungsberechtigungen im Buchungsdatenspeicher 212. Er weist anschließend den Nutzungsserver 230 an, eine Buchungsbestätigung für die beiden Streckenabschnitte 7903 und 7902 an das Mobiltelefon 10 zu übermitteln. Bezüglich der aus der Nutzungsbestätigung abgeleiteten Buchung neuer Streckenabschnitte gelten die zweiten Positionsdaten nunmehr als neue erste Positionsdaten.

An der Position D wird dem Fahrer im TFT-Bildschirm 15 seines Mobiltelefons 10 wie in Fig. 6e dargestellt angezeigt, dass er sich auf dem Streckenabschnitt 7901 befindet und für diesen eine Nutzungsberechtigung besitzt. Für den in Fahrtrichtung folgenden Abschnitt 7903 besitzt er ebenso eine Nutzungsberechtigung wie für den Abschnitt 7902 in Gegenrichtung. Für den dem Abschnitt 7903 in Fahrtrichtung nächstfolgenden Abschnitt 7905 besitzt er noch keine Nutzungsberechtigung. Für den dem Abschnitt 7903 in Fahrtrichtung übernächst folgenden Abschnitt 7907 besitzt er ebenfalls noch keine Nutzungsberechtigung.

Mit dieser Information auf der Anzeige 15 seines Mobiltelefons 10 weiß sich der Fahrer berechtigt, an der Anschlussstelle 792 auf dem Abschnitt 7903 weiterzufahren. Dort passiert er eine Kontrollbrücke 25, die mit einer Bildaufnahme- und - auswertevorrichtung 26 zur ein Bild des Fahrzeugs 50 aufnimmt und auswertet, um aus der Aufnahme des Nummernschildes 51 das Identifikationsmerkmal des Fahrzeugkennzeichens B-TC 123 zu gewinnen und an den Konsolidierungsserver 240, der Zugriff auf den Buchungsdatenspeicher 212 besitzt, der zentralen Datenverarbeitungseinrichtung 200 eine Anfrage zu entrichten, ob für das unter dem Fahrzeugkennzeichnen B-TC 123 registrierte Fahrzeug eine Nutzungsberechtigung für den Abschnitt 7903 vorliegt. Bestätigt der Konsolidierungsserver 240 die Existenz der Nutzungsberechtigung, so werden alle von der Bildaufnahme- und -auswertevorrichtung 26 vom Fahrzeug 50 erfassten und abgeleiteten Daten von der Kontrollbrücke 25 gelöscht und der Buchungsdatensatz des Abschnittes 7903 zu einem Gebührendatensatz in dem Gebührendatenspeicher 242 konsolidiert. Außerdem werden die von der Kontrollbrücke am Streckenabschnitt 7903 empfangenen Kontrolldaten vom Konsolidierungsserver 240 a) als Anfrage nach einer Stornierung für im Zusammenhang mit dem bestätigten Abschnitt 7903 zur alternativen Nutzung gebuchten Streckenabschnitten sowie b) als Anfrage für eine Nutzungsberechtigung für mit dem Streckenabschnitt 7903 in unmittelbarer Verbindung stehende Folgestreckenabschnitte interpretiert. Durch Zugriff auf den Buchungsdatenspeicher 212 ermittelt der Konsolidierungsprozessor 241, dass eine zum Abschnitt 7903 alternative Buchung einer Nutzungsberechtigung für den Streckenabschnitt 7902 vorliegt. Für diesen Abschnitt trägt der Konsolidierungsprozessor 241 einen auf das Fahrzeug 50 bezogenen Stornierungsdatensatz im Stornierungsdatenspeicher 222 des Stornierungsservers 220 ein. Durch Abfrage in einer Streckenabschnittsdatenbank, die Datensätze miteinander verknüpfter Streckenabschnitte enthält, stellt der Konsolidierungsprozessor einen Buchungsbedarf für die Streckenabschnitte 7905 und 7904 fest und erstellt die zugehörigen auf das Fahrzeug 50 bezogenen Buchungsdatensätze im Buchungsdatenspeicher. Die von der Kontrollbrücke 25 an die Mauterhebungsstelle 20 übermittelten Fahrzeugdaten sind bezogen auf diesen Buchungsvorgang als erste positionsbezogenen Daten des Fahrzeugs 50 aufzufassen, weil sie das Fahrzeug 50 mit der Position der Kontrollbrücke in Verbindung bringen.

Eine Vorlage dieser neuen, selbstständig von der zentralen Datenverarbeitungseinrichtung 200 erstellten, Nutzungsberechtigungen kann manuell ausgelöst oder automatisch jederzeit von dem Mobiltelefon 10 über den Buchungswebdienst 213 unabhängig von einem Buchungsbedarf, der sich aus der Assoziierung von ersten positionsbezogenen Daten mit Streckenabschnitten hinsichtlich einer bevorstehenden Nutzung ergeben könnte, beispielsweise an der Position E, angefordert werden. Mit einer zentralseitig initiierten Buchung kann vorteilhaft einem mangelnden Satellitensignal-Empfang des GPS-Empfängers 12 oder einer mangelnden Mobilfunk-Kommunikationsverbindung 41a im Zuge des Fahrweges des Fahrzeugs 50 vorgebeugt werden.

Auf dem Abschnitt 7903 stellt der Fahrer fest, dass er die Ausfahrt 792, die er eigentlich benutzen wollte, verpasst hat. Er entscheidet sich daher, an der Anschlussstelle 793 zu wenden und auf der Gegenfahrbahn (Abschnitt 7904) zu der Abfahrt 792 zurückzufahren (Fig. 2c). Da er auch für diesen Abschnitt 7904 als Alternative zum Abschnitt 7905 eine Nutzungsberechtigung besitzt, ist seine Wahl rechtlich unproblematisch. Sein Mobiltelefon 10 stellt auf dem Weg zur Position F die Benutzung des Abschnittes 7904 fest und meldet diese an den Nutzungsserver 230 (Fig. 8b). Die zentrale Datenverarbeitungseinrichtung 200 konsolidiert die gemeldete Nutzung mit der Buchung zu einem Gebührendatensatz, storniert den alternativen Abschnitt 7905 und bucht Nutzungsberechtigungen für die Abschnitte 7902 und 7903, die sie dem Mobiltelefon 10 bekannt gibt.

An der Abfahrt 792 verlässt der Fahrer die Autobahn A 79 auf eine Landstraße gen Westen. In Annäherung an die Position G kreuzt die aus zweiten Positionsdaten des Fahrzeugs 50 abgeleitete Fahrlinie den Erkennungsvektor (a2-a1, b2-b1) zwischen den Ortskoordinaten (a1, b1) des Punktes 1 und den Ortskoordinaten (a2, b2) des Punktes 2, der im Streckenabschnittsdatensatz (a1, b1, a2, b2, 0, 7902, 7903, 0, 0, 1) enthalten ist (Fig. 2c). Die Orientierung der Fahrtrichtung zu dem Erkennungsvektor ergibt einen Stornierungsbedarf für die nicht genutzten gebuchten Abschnitte 7902 und 7903. Für diese Abschnitte stellt das Mobiltelefon 10 eine Stornierungsanfrage an den Stornierungswebdienstes 223 unter Aufruf der Adresse http://www.toll-collect.de/stornierung/. Für die Streckenabschnitte 7902 und 7903 werden auf das Fahrzeug 50 bezogene Stornierungsdatensätze in der Stornierungsdatenbank 222 des Stornierungsservers 220 abgespeichert. Der Konsolidierungsprozessor 241 sucht anschließend zu den Stornierungsdatensätzen passende Buchungsdatensätze in der Buchungsdatenbank 212 und löscht diese bei festgestellter Zusammengehörigkeit und Plausibilität sowohl aus der Stornierungsdatenbank 222 als auch aus der Buchungsdatenbank 212. Eine Stornierungsbestätigung wird vom Stornierungsserver 220 an das Mobiltelefon 10 gesendet, welches die Anzeige der Nutzungsberechtigungen im TFT-Bildschirm 15 entsprechend bereinigt.

Nachdem die Fahrt auf einer mautpflichtigen Strecke für den Fahrer damit zu Ende gegangen ist, liegen auf das Fahrzeug 50 bezogene Gebührendatensätze für die Streckenabschnitte 7901, 7903 und 7904 im Gebührendatenspeicher 242 vor. Der Rechnungsprozessor 251 eines Rechnungsservers 250 nimmt zur Rechnungsbereitstellung auf Anfrage auf Rechnungslegung unter Nutzerkennung für das Fahrzeug 50 an den Rechnungswebdienst 253 Zugriff auf den Gebührendatenspeicher und übermittelt die Rechnung mit einer Auflistung aller befahrenen Streckenabschnitte in der Reihenfolge ihrer Nutzung an den Fahrer beziehungsweise Fahrzeughalter. Die Anfrage auf Rechnungslegung kann, wie in Fig. 8b dargestellt vom Mobiltelefon erfolgen und /oder von einer anderen nicht dargestellten Datenverarbeitungseinrichtung.

Für eine Variante des dritten Ausführungsbeispieles ist in Fig. 8c eine andere zentrale Datenverarbeitungseinrichtung 200 gezeigt, die nur einen einzigen System-Webdienst 243 zur Entgegennahme von Buchungsanfragen, Stornierungsanfragen, Nutzungsbestätigungen und Anfragen auf Rechnungslegung aufweist, welcher von einem Systemprozessor 241 eines Systemservers 240 gesteuert wird. Nutzungsberechtigungen werden vom Systemprozessor 241 mit der Speicherung eines Nutzungsberechtigungsdatensatzes samt Vorläufigkeitsvermerk im Systemspeicher 242 gebucht. Stornierungen werden vom Systemprozessor 241 durch Löschung des entsprechenden Nutzungsberechtigungsdatensatzes aus dem Systemspeicher 242 durchgeführt. Nutzungsbestätigungen werden vom Systemprozessor 241 durch Entfernen des Vorläufigkeitsvermerks im entsprechenden Nutzungsberechtigungsdatensatz im Systemspeicher registriert. Für Nutzungsberechtigungsdatensätze ohne Vorläufigkeitsvermerk werden vom Systemprozessor 241 Gebührendatensätze erstellt und im Systemspeicher 242 abgelegt. Nutzerspezifisch werden die Gebührendatensätze zu einer Rechnung zusammengestellt.

Ein Vergleich mit der zentralen Datenverarbeitungseinrichtung 200 aus Fig. 8b zeigt, dass sich zur Bildung eines System-Webdienstes 243 in Fig. 8c der Buchungsserver 210, der Stornierungsserver 220, der Nutzungsserver 230 und der Rechnungsserver 250 in den Konsolidierungsserver 240 integrieren lassen, der in einer solchen Integration den Systemserver bildet und einen System-Webdienst 243 mit den Funktionalitäten des Buchungswebdienstes 213, des Stornierungswebdienstes 223, des Nutzungswebdienstes 233 und des Rechnungswebdienstes 253 bereitstellt sowie einen Systemspeicher 242, der die Daten des Buchungsdatenspeichers 212, des Stornierungsdatenspeichers 222 und alternativ oder kumulativ dazu des Nutzungsdatenspeichers 232 einzeln und/ oder in konsolidierter Form wie in dem Konsolidierungsdatenspeicher 242 von Fig. 8b umfasst.

Für die folgenden Ausführungsbeispiele kann jede der mobilen Einrichtungen des ersten Ausführungsbeispiels (Mauterhebungsgerät 10), des zweiten Ausführungsbeispiels (Navigationsgerät 10) oder dritten Ausführungsbeispieles (Mobiltelefon 10) in der entsprechenden Systemkonfiguration (erstes Ausführungsbeispiel: dezentrale Mauterhebung; zweites Ausführungsbeispiel zentrale Mauerhebung mit Vermittlungsstelle für einen Thin Client; drittes Ausführungsbeispiel: zentrale Mauterhebung für einen Thick Client) zur Mauterhebung verwendet werden.

### VIERTES AUSFÜHRUNGSBEISPIEL

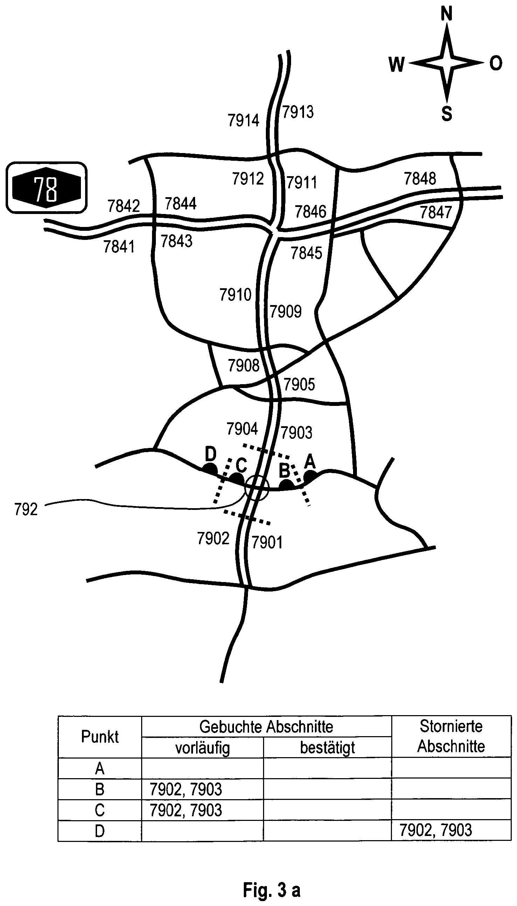

Gemäß der Route des vierten Ausführungsbeispiels (Fig. 3a) nähert sich ein Fahrer mit seinem Fahrzeug von Osten her einer Anschlussstelle 792, von der aus die Autobahn A 79 wahlweise in südlicher Richtung auf dem Autobahnabschnitt 7902 oder in nördlicher Richtung auf dem Autobahnabschnitt 7903 befahren werden kann.

Eine aus ersten Positionsdaten des Fahrzeugs zwischen den Positionen A und B abgeleitete Fahrlinie wird über ihren Schnitt mit einer an die Autobahnabschnitte 7903 und 7902 geknüpfte Erkennungslinie mit den Autobahnabschnitten 7903 und 7902 hinsichtlich einer möglichen bevorstehenden Nutzung dieser Abschnitte durch das Fahrzeug assoziiert. Für diese Abschnitte 7903 und 7902 wird jeweils eine auf das Fahrzeug bezogene Nutzungsberechtigung gebucht, die in dem Moment vorliegt, in dem das Fahrzeug die Position B passiert. An der Anschlussstelle 792 überquert der Fahrer mit seinem Fahrzeug die Autobahn A 79, ohne sie zu befahren.

Eine aus zweiten Positionsdaten des Fahrzeugs zwischen den Positionen C und D abgeleitete Fahrlinie wird über ihren Schnitt mit einer an die Autobahnabschnitte 7903 und 7902 geknüpfte Erkennungslinie mit den Autobahnabschnitten 7903 und 7902 hinsichtlich einer bestätigten Nichtnutzung dieser Abschnitte durch das Fahrzeug assoziiert. Für diese Abschnitte 7903 und 7902 werden daraufhin die gebuchten Nutzungsberechtigungen storniert.

### FÜNFTES AUSFÜHRUNGSBEISPIEL

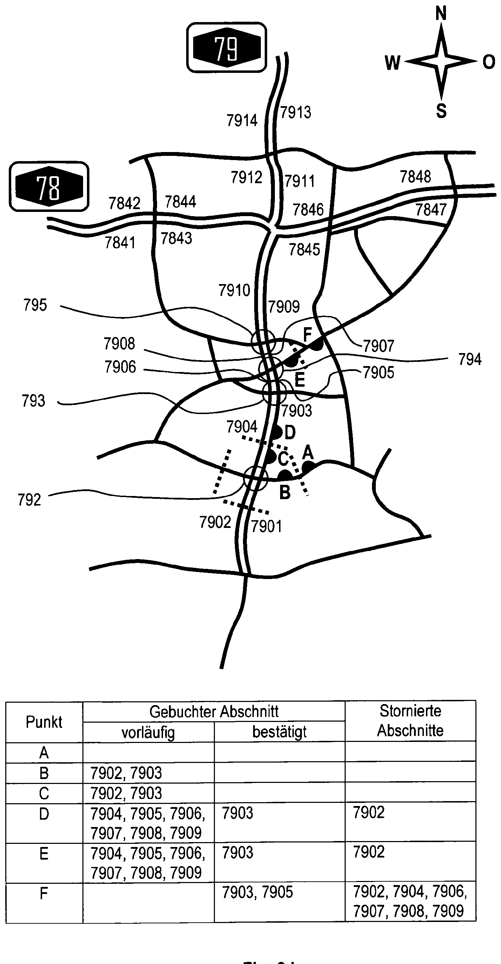

Gemäß der Route des fünften Ausführungsbeispiels (Fig. 3b) nähert sich ein Fahrer mit seinem Fahrzeug wie im vierten Ausführungsbeispiel von Osten her einer Anschlussstelle 792, von der aus die Autobahn A 79 wahlweise in südlicher Richtung auf dem Autobahnabschnitt 7902 oder in nördlicher Richtung auf dem Autobahnabschnitt 7903 befahren werden kann.

Eine aus ersten Positionsdaten des Fahrzeugs zwischen den Positionen A und B abgeleitete Fahrlinie wird über ihren Schnitt mit einer an die Autobahnabschnitte 7903 und 7902 geknüpfte Erkennungslinie mit den Autobahnabschnitten 7903 und 7902 hinsichtlich einer möglichen bevorstehenden Nutzung dieser Abschnitte durch das Fahrzeug assoziiert. Für diese Abschnitte 7903 und 7902 wird jeweils eine auf das Fahrzeug bezogene Nutzungsberechtigung gebucht, die in dem Moment vorliegt, in dem das Fahrzeug die Position B passiert. An der Anschlussstelle 792 fährt der Fahrer auf die Autobahn A 79 in Richtung Norden unter Nutzung des Abschnitts 7903 auf.

Eine aus zweiten Positionsdaten des Fahrzeugs zwischen den Positionen C und D abgeleitete Fahrlinie wird über ihren Schnitt mit einer an den Autobahnabschnitt 7903 geknüpfte Erkennungslinie mit dem Autobahnabschnitt 7903 hinsichtlich einer bestätigten Nutzung dieses Abschnittes durch das Fahrzeug assoziiert. Für den zum Abschnitt 7903 alternativen gebuchten Abschnitt 7902 wird daraufhin die gebuchte Nutzungsberechtigung storniert. Ferner ist die Erkennungslinie mit einer Vielzahl von Abschnitten verknüpft, die hinsichtlich einer bevorstehenden Nutzung im Anschluss an den Abschnitt 7903 befahren werden können. Die in Fahrtrichtung folgenden Abschnitte 7905 und 7907 sind jedoch so kurz, dass eine Nutzungserkennung und Erkennung von weiteren in Fahrtrichtung folgenden Abschnitten, die einer möglichen bevorstehenden Nutzung unterliegen, keine rechtzeitige Buchung einer Nutzungsberechtigung für diese Abschnitte ermöglicht. Das gleiche gilt für die in der Gegenrichtung liegenden Abschnitte 7906 und 7908. Aus diesem Grunde wird das Überqueren der Erkennungslinie zwischen den Positionen C und D mit einem Buchungsbedarf für die Abschnitte 7904, 7905, 7906, 7907, 7908 und 7909 assoziiert und die Buchung der Nutzungsberechtigungen für diese Abschnitte vollzogen. Erhebungslücken, die auf den kurzen Abschnitten auftreten können, werden damit an dezentraler Stelle präventiv vermieden.

An der Anschlussstelle 794 verlässt der Fahrer die Autobahn, nachdem er den Abschnitt 7905 befahren hat. Im Zuge des Passierens der Erkennungslinie zwischen den Fahrzeugpositionen E und F wird ein Vergleich von mit dieser Erkennungslinie verknüpften Abschnitten 7904, 7905, 7906, 7907, 7908 und 7909 mit dem zuletzt erstellten Buchungsdatensatz von Nutzungsberechtigungen 7904, 7905, 7906, 7907, 7908 und 7909 und der zuletzt bestätigten Nutzung des Abschnittes 7903 unter Anwendung eines Algorithmus verglichen, der für diese zweite Erkennungslinie und die zuvor passierte erste Erkennungslinie die Anordnung der Abschnitte zueinander und bezüglich der jeweiligen Erkennungslinie berücksichtigt. Im Ergebnis dieses Vergleichs steht fest, dass der Fahrer ausgehend von der ersten Erkennungslinie auf dem Abschnitt 7903 nur zu einer Passage der zweiten Erkennungslinie in von der Anschlussstelle weg führender Fahrtrichtung gelangen kann, wenn er zuvor den Abschnitt 7905 - und nur den Abschnitt 7905 - benutzt hat. Die auf den Abschnitt 7905 bezogene Nutzungsbestätigung wird von einem Prozessor mit den gebuchten Nutzungsberechtigungen verglichen und resultiert in einer Stornierung der Nutzungsberechtigungen aller zuletzt gebuchten Abschnitte 7904, 7906, 7907, 7908 und 7909 mit Ausnahme des Abschnitts 7905.

### SECHSTES AUSFÜHRUNGSBEISPIEL

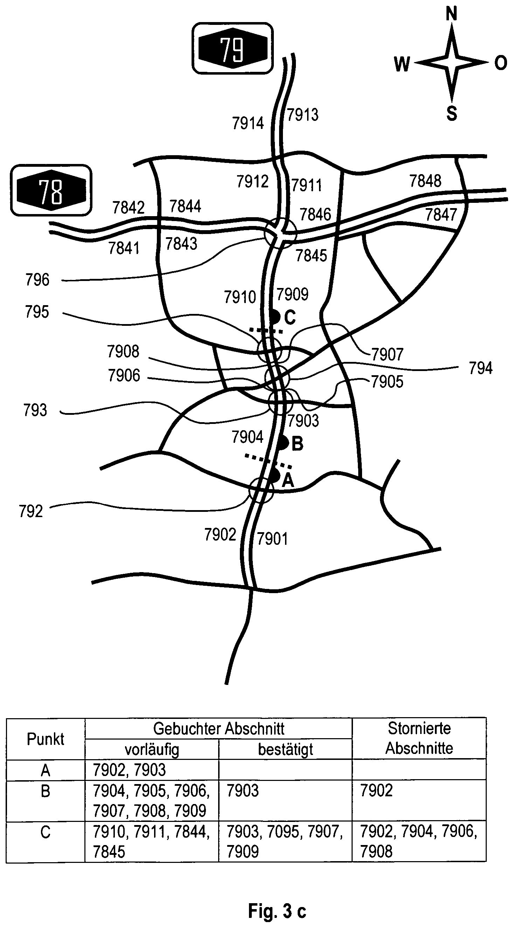

Das sechste Ausführungsbeispiel veranschaulicht anhand von Fig. 3c ein Buchungs- und Stornierungsszenario für den Fall, in dem der Fahrer seinen Weg auf der Autobahn A 79 nicht an der Anschlussstelle 794 verlässt, sondern auf der Autobahn A 79 in Richtung des Autobahnkreuzes der A 79 mit der A 78 weiterfährt.

An der Position B liegen nach der Passage der ersten Erkennungslinie auf dem Abschnitt 7903 zwischen den Fahrzeugpositionen A und B die Buchungsbestätigung für den Abschnitt 7903 und die präventiv gebuchten Nutzungsberechtigungen für die Abschnitte 7904, 7905, 7906, 7907, 7908 und 7909 vor. Die in Fahrtrichtung zum Autobahnkreuz nächstfolgende, zweite Erkennungslinie zwischen der Anschlussstelle 795 und der Fahrzeugposition C entspricht einer Nutzungsbestätigung für den Abschnitt 7909. Der Vergleich mit der Konstellation der Abschnitte an der ersten Erkennungslinie der zuletzt durchgeführten Buchungen ergibt, dass nach der Benutzung des Abschnittes 7903 die Abschnitte 7905 und 7907 befahren werden mussten, um zum hinsichtlich einer Nutzung unmittelbar bestätigten Abschnitt 7909 zu gelangen. Die Nutzung der Abschnitte 7905 und 7907 wird damit mittelbar bestätigt und resultiert in einer Stornierung der insofern nachweislich nicht befahrenen Abschnitte 7904, 7906 und 7908.

### SIEBTES AUSFÜHRUNGSBEISPIEL

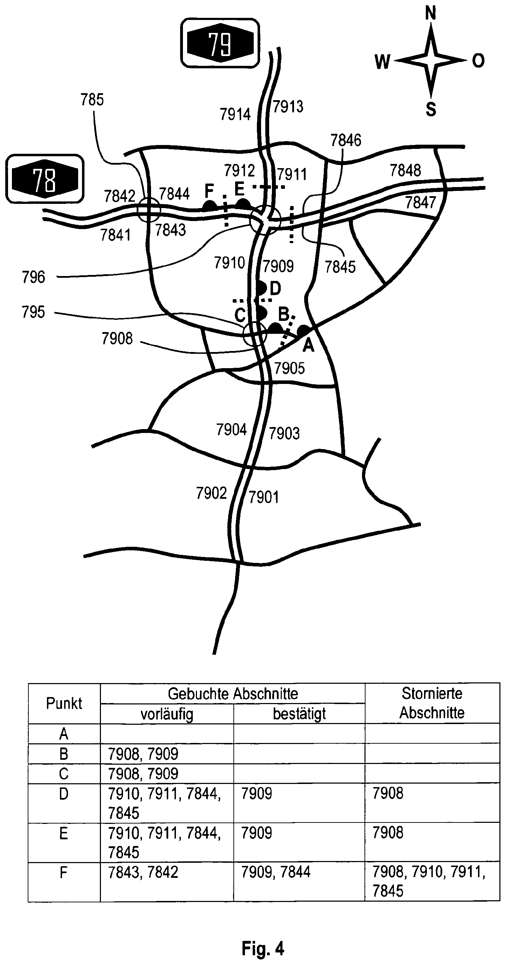

Das siebte Ausführungsbeispiel veranschaulicht anhand von Fig. 4 ein Buchungs- und Stornierungsszenario im Zuge der Passage eines Autobahnkreuzes, in diesem Fall gebildet durch die Kreuzung der Autobahnen A 79 und A 78, die so ausgebildet ist, dass ein Fahrer aus einer beliebigen Richtung (N, S, W, O) kommend in jede Richtung (N, S, W, O) weiter beziehungsweise zurück fahren kann.

Der Fahrer fährt an der Anschlussstelle 795 auf die Autobahn 79 in nördlicher unter Befahrung des Abschnittes 7909 berechtigterweise auf, weil zuvor durch Passage der Erkennungslinie zwischen den Positionen A und B eine Nutzungsberechtigung für den Abschnitt 7909 in nördlicher Fahrtrichtung und für den Abschnitt 7908 in südlicher Fahrtrichtung gebucht wurde. Die Nutzung des Abschnittes 7909 wird durch Passieren der Erkennungslinie zwischen den Positionen C und D bestätigt, was zu einem Stornieren der Nutzungsberechtigung des alternativ nutzbaren Abschnittes 7908 führt und eine Buchung von Nutzungsberechtigungen für weitere Autobahnabschnitte nach sich zieht, die ausgehend vom Abschnitt 7909 befahrbar sind. Es sind dies der Abschnitt 7911 in nördlicher Fahrtrichtung auf der A 79, der Abschnitt 7910 in südlicher Gegenrichtung zum Abschnitt 7909, der Abschnitt 7845 auf der A 78 in östlicher Fahrtrichtung und der Abschnitt 7844 in westlicher Fahrtrichtung auf der A 78. Am Autobahnkreuz verlässt der Fahrer die A 79 und fährt auf der A 78 in westlicher Richtung unter Nutzung des Abschnittes 7844 weiter. Die Nutzung dieses Abschnittes wird durch die Passage der Erkennungslinie zwischen den Positionen E und F bestätigt. Im Zuge dieser Nutzungsbestätigung wird die Stornierung der drei alternativ nutzbaren, jedoch ungenutzten Abschnitte 7910, 7911 und 7845 durchgeführt.

### ACHTES AUSFÜHRUNGSBEISPIEL

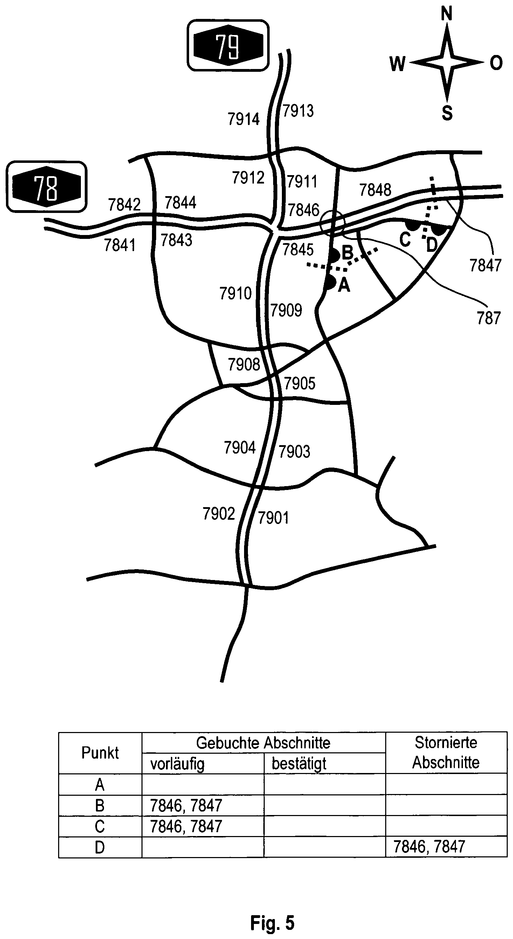

Das achte Ausführungsbeispiel veranschaulicht anhand von Fig. 5 ein Buchungs- und Stornierungsszenario im Zuge einer teilweisen Parallelfahrt zu einem mautpflichtigen Streckenabschnitt auf einer nicht mautpflichtigen Straße:
Von Süden her nähert sich der Fahrer mit seinem Fahrzeug auf einer mautfreien Straße der Anschlussstelle 787 der Autobahn A 78. Die Passage der Erkennungslinie zwischen den Positionen A und B führt zu einer Buchung von Nutzungsberechtigungen für die Abschnitte 7846 in westlicher Fahrtrichtung und 7847 in östlicher Fahrtrichtung. Kurz vor der Anschlussstelle 787 zu diesen Abschnitten biegt der Fahrer mit seinem Fahrzeug Richtung Osten auf eine mautfreie Straße ab, die streckenweise in einem Abstand von weniger als 100 Metern parallel zu dem Abschnitt 7847 der A 78 führt.

Eine Erkennung der Nutzung oder Nichtnutzung des mautpflichtigen Abschnittes 7847 ist über eine Länge von der Hälfte des Abschnittes nicht zuverlässig mittels der mitgeführten Positionsbestimmungs- und Assoziationsvorrichtung möglich. Angewiesen auf eine Nutzungsberechtigung würde der Fahrer auf dem Abschnitt 7847 ohne die Präventivbuchung die Hälfte der Länge des Abschnittes 7847 ohne eine Nutzungsbestätigung fahren, die nach dem herkömmlichen Erhebungsverfahren zur Nutzung des Abschnittes 7847 berechtigt. Eine Kontrolle auf der ersten Hälfte des Abschnittes würde daher im herkömmlichen Verfahren 100 % der Fahrer als Mautpreller ausweisen, wenn Fehlerhebungen für Fahrzeuge auf der mautfreien Parallelstraße vermieden werden sollen. Erfindungsgemäß verfügt der Fahrer aber über eine entsprechende Nutzungsberechtigung vor einer möglichen Befahrung des Abschnittes 7847, auch wenn sich später herausstellt, dass er sie eigentlich gar nicht benötigt hätte.

Die Erkennungslinie für eine Bestätigung der Nutzung des Abschnittes 7847 befindet sich in der zweiten Hälfte des Abschnittes 7847; Die Erkennungslinie für eine Bestätigung der Nichtnutzung des Abschnittes 7847 befindet sich in der zweiten Hälfte der mautfreien Straße, die in ihrer ersten Hälfte zu dicht an dem mautpflichtigen Abschnitt 7847 verläuft. Zwischen den Positionen C und D wird die Nichtnutzung des Abschnittes 7847 durch die Passage dieser Nichtnutzung-Erkennungslinie bestätigt. Damit werden die Nutzungsberechtigung sowohl des Abschnittes 7847 als auch des Abschnittes 7846 gelöscht.

Diese Ausführungsbeispiele belegen in vielfältiger Weise die zahlreichen vorteilhaften Verwendungsmöglichkeiten der Erfindung in einem System zur Erhebung von Gebühren für die Nutzung gebührenpflichtiger Verkehrsflächen, wie in den Ansprüchen definiert.

### Bezugszeichenliste

- 10: Fahrzeugeinrichtung, Mobilfunkgerät
- 11: dezentraler Prozessor
- 12: Positionsbestimmungseinrichtung
- 12 a: GNSS-Empfänger
- 12 b: GNSS-Empfangsantenne
- 12 c: GNSS-Satellit
- 13: Mobilfunk- oder DSRC-Sendeempfänger (fahrzeugseitig)
- 13 b: Mobilfunk- oder DSRC-Antenne (fahrzeugseitig)
- 14: Uhr
- 15: Anzeigeeinrichtung
- 15 a: Leuchtdiode
- 15 b: Lautsprecher
- 16: Daten-Lese-Speicher
- 17: Daten-Schreib-Lese-Speicher
- 18: kryptographischer Datenspeicher
- 19: wiederaufladbare Batterie
- 19 a: Stromversorgungsanschluss
- 19 b: An-Aus-Schalter
- 20: erste Zentrale
- 20': zweite, zur ersten Zentrale alternative, Zentrale
- 25: Kontrollstelle, Kontrollbrücke
- 26: Bildaufnahme- und Auswerteeinrichtung
- 27: straßenseitiger DSRC-Sendeempfänger
- 28: DSRC-Kommunikationsverbindung
- 30: Mautvermittlungsstelle
- 41: Basis-Station eines Mobilfunknetzes
- 42: Basis-Station eines Mobilfunknetzes
- 41 a: Drahtlose Mobilfunk-Kommunikationsverbindung
- 45: Vermittlungsstelle eines Mobilfunknetzes
- 50: Fahrzeug
- 51: Fahrzeug-Nummernschild
- 78: Autobahn 78
- 79: Autobahn 79
- 200: erste zentrale Datenverarbeitungseinrichtung der ersten Zentrale 20
- 200': zweite zentrale Datenverarbeitungseinrichtung der zweiten Zentrale 20'
- 210: erster Server der ersten zentralen Datenverarbeitungseinrichtung 200
- 211: Prozessor des ersten Servers 210
- 212: Datenspeicher des ersten Servers 210
- 213: Webdienst des ersten Servers 210
- 220: zweiter Server der ersten zentralen Datenverarbeitungseinrichtung 200
- 221: Prozessor des zweiten Servers 220
- 222: Datenspeicher des zweiten Servers 220
- 223: Webdienst des zweiten Servers 220
- 230: dritter Server der ersten zentralen Datenverarbeitungseinrichtung 200
- 231: Prozessor des dritten Servers 230
- 232: Datenspeicher des dritten Servers 230
- 233: Webdienst des dritten Servers 230
- 240: weiterer Server der ersten zentralen Datenverarbeitungseinrichtung 200
- 241: Prozessor des weiteren Servers 240
- 242: Datenspeicher des weiteren Servers 240
- 242 a: erster Speicherbereich des Datenspeichers 242
- 242 b: zweiter Speicherbereich des Datenspeichers 242
- 242 c: dritter Speicherbereich des Datenspeichers 242
- 250: zusätzlicher Server der ersten zentralen Datenverarbeitungseinrichtung 200
- 251: Prozessor des zusätzlichen Servers 250
- 253: Webdienst des zusätzlichen Servers 250
- 300: vermittelnde zentrale Datenverarbeitungseinrichtung der Mautvermittlungsstelle 30
- 310: Mautvermittlungsserver der vermittelnden zentralen Datenverarbeitungseinrichtung 300
- 311: Prozessor des Mautvermittlungsservers 310
- 312: Datenspeicher des Mautvermittlungsservers 310
- 631: Bundesstraße B 631 als südlicher Anschluss der Autobahn A 79
- 632: Bundesstraße B 632 als west-östliche Querung der Anschlussstelle 791
- 7841, 7843, 7845, 7847: Streckenabschnitte der Autobahn A 78 in östlicher Fahrtrichtung
- 7848, 7846, 7844, 7842: Streckenabschnitte der Autobahn A 78 in westlicher Fahrtrichtung
- 7901, 7903, 7905, 7907, 7909, 7911, 7913: Streckenabschnitte der Autobahn A 79 in nördlicher Fahrtrichtung
- 7914, 7912, 7910, 790 7906, 7904, 7902: Streckenabschnitte der Autobahn A 79 in südlicher Fahrtrichtung
- 791, 792, 793, 794, 795: Anschlussstellen der Autobahn A 79
- 796: Autobahnkreuz von Autobahn A 78 und Autobahn A 79
- 785, 787: Anschlussstellen der Autobahn A 78
- A: erste Lokalisierung eines Fahrzeugs
- B: eine der ersten Lokalisierung A folgende zweite Lokalisierung des Fahrzeugs
- C: eine der zweiten Lokalisierung B folgende dritte Lokalisierung des Fahrzeugs
- D: eine der dritten Lokalisierung C folgende vierte Lokalisierung des Fahrzeugs
- E: eine der vierten Lokalisierung D folgende fünfte Lokalisierung des Fahrzeugs
- F: eine der fünften Lokalisierung E folgende sechste Lokalisierung des Fahrzeugs
- G: eine der sechsten Lokalisierung F folgende siebte Lokalisierung des Fahrzeugs

## Patentansprüche

1. Verfahren zur Buchung und Stornierung von Nutzungsberechtigungen in einem System für die Erhebung von Gebühren für die Nutzung von gebührenpflichtigen Verkehrsflächen durch ein Fahrzeug (50) mit folgenden Phasen:
a) eine erste Datenerfassungsphase, in der erste positionsbezogene Daten des Fahrzeugs (50) mittels wenigstens einer vom Fahrzeug (50) mitgeführten Positionsbestimmungseinrichtung (12) erfasst werden,
b) eine erste Assoziierungsphase, in der die ersten positionsbezogenen Daten mittels wenigstens eines positionsbezogene Daten verarbeitenden ersten Prozessors (11, 311)
i) mit einer möglichen, bevorstehenden Nutzung wenigstens einer ersten gebührenpflichtigen Verkehrsfläche durch das Fahrzeug (50) und
ii) mit wenigstens einer möglichen, zur ersten gebührenpflichtigen Verkehrsfläche alternativ bevorstehenden, Nutzung einer zweiten gebührenpflichtigen Verkehrsfläche durch das Fahrzeug (50) assoziiert werden,
c) eine Buchungsphase, in der
i) für die erste gebührenpflichtige Verkehrsfläche eine erste auf das Fahrzeug (50) bezogene Nutzungsberechtigung durch die Speicherung eines die Nutzungsberechtigung für wenigstens die erste gebührenpflichtige Verkehrsfläche repräsentierenden ersten Buchungsdatensatz in wenigstens einem ersten Datenspeicher (18, 212, 242) gebucht wird und
ii) zusätzlich zur ersten Nutzungsberechtigung eine zweite auf das Fahrzeug (50) bezogene Nutzungsberechtigung für die zweite gebührenpflichtige Verkehrsfläche durch die Speicherung des auch die Nutzungsberechti gung für die zweite gebührenpflichtige Verkehrsfläche repräsentierenden ersten Buchungsdatensatz oder ei nen die Nutzungsberechtigung für die zweite gebührenpflichtige Verkehrsfläche separat repräsentierenden zweiten Buchungsdatensatz in dem ersten Datenspeicher (18, 212, 242) gebucht wird,
d) eine zweite Datenerfassungsphase, in der zweite positionsbezogene Daten des Fahrzeugs (50) mittels der wenigstens einen vom Fahrzeug (50) mitgeführten Positionsbestimmungseinrichtung (12) erfasst werden,
e) eine zweite Assoziierungsphase, in der die zweiten positionsbezogenen Daten mittels des ersten Prozessors (11, 311) und/ oder eines positionsbezogene Daten verarbeitenden zweiten Prozessors (11, 311) mit einer bestätigten Nichtnutzung wenigstens der ersten gebührenpflichtigen Verkehrsfläche durch das Fahrzeug (50) assoziiert werden, und
f) eine Stornierungsphase, in der wenigstens die erste Nutzungsberechtigung für die erste gebührenpflichtige Verkehrsfläche durch die Erzeugung eines Stornierungsdatensatzes für die erste gebührenpflichtige Verkehrsfläche in dem ersten Datenspeicher (18, 242) oder einem zweiten Datenspeicher (222) oder durch eine Änderung oder Löschung des ersten Buchungsdatensatzes in dem Datenspeicher (18, 212, 242) storniert wird.

2. Verfahren nach Anspruch 1 **dadurch gekennzeichnet, dass**
die in der ersten Datenerfassungsphase erfassten ersten positionsbezogenen Daten wenigstens eine erste Position oder wenigstens eine erste Sammlung mehrerer erster Positionen des Fahrzeugs (50) umfassen, die in der ersten Datenerhebungsphase mittels einer von dem Fahrzeug (50) mitgeführten Positionsbestimmungseinrichtung (12) bestimmt werden, und
in der ersten Assoziierungsphase die erste Position oder die erste Sammlung mehrerer erster Positionen mit wenigstens der ersten gebührenpflichtigen Verkehrsfläche und der zweiten gebührenpflichtigen Verkehrsfläche assoziiert werden,
wobei
eine solche assoziierte gebührenpflichtige Verkehrsfläche ausgehend von der ersten Position oder einer Position der ersten Sammlung mehrerer erster Positionen mit dem Fahrzeug (50) unmittelbar über einen Weg erreichbar ist, der keine andere gebührenpflichtige Verkehrsfläche aufweist, für die keine auf das Fahrzeug (50) bezogene Nutzungsberechtigung vorliegt oder die zur Assoziierung mit der ersten Position oder einer Position der Sammlung mehrerer erster Positionen vorgesehen ist.

3. Verfahren nach einem der vorhergehenden Ansprüche **dadurch gekennzeichnet, dass**
die Buchung der ersten Nutzungsberechtigung durch die Erhebung einer ersten Gebühr für die erste gebührenpflichtige Verkehrsfläche erfolgt,
die Buchung der zweiten Nutzungsberechtigung durch die Erhebung einer zweiten Gebühr für die zweite gebührenpflichtige Verkehrsfläche erfolgt
und
die Stornierung der ersten Nutzungsberechtigung durch die zumindest teilweise Erstattung oder Annullierung der erhobenen ersten Gebühr erfolgt.

4. Verfahren zur Erhebung von Gebühren in einem System für die Erhebung von Gebühren für die Nutzung von gebührenpflichtigen Verkehrsflächen durch ein Fahrzeug (50) mit einem Verfahren nach einem der vorhergehenden Ansprüche **dadurch gekennzeichnet, dass**
in der zweiten Assoziierungsphase die zweiten positionsbezogenen Daten mit einer bestätigten Nutzung der zweiten gebührenpflichtigen Verkehrsfläche durch das Fahrzeug (50) assoziiert werden, wobei sich wegen der alternativen Nutzungsmöglichkeit der ersten und zweiten gebührenpflichtigen Verkehrsfläche mit der bestätigten Nutzung der zweiten gebührenpflichtigen Verkehrsfläche die bestätigte Nichtnutzung der ersten gebührenpflichtigen Verkehrsfläche ergibt, und
wobei
das Verfahren ferner die Erhebung einer Gebühr für die Nutzung der zweiten gebührenpflichtigen Verkehrsfläche nach der ersten Assoziierungsphase vorsieht.

5. Fahrzeugeinrichtung (10) mit
wenigstens einer Positionsbestimmungseinrichtung (12), wenigstens einem Prozessor (11) zum Empfang und zur Verarbeitung von Positionsdaten der Positionsbestimmungseinrichtung (12) und wenigstens einem ersten Datenspeicher (18), **dadurch gekennzeichnet, dass** der Prozessor (11) dazu ausgebildet ist,
die in einer ersten Positionsbestimmungsphase von der Positionsbestimmungseinrichtung (12) ermittelten ersten Positionsdaten zu empfangen und zu verarbeiten, indem er
die empfangenen ersten Positionsdaten mit der möglichen Nutzung wenigstens einer ersten gebührenpflichtigen Verkehrsfläche und der zur Nutzung der ersten gebührenpflichtigen Verkehrsfläche alternativen möglichen Nutzung einer zweiten gebührenpflichtigen Verkehrsfläche assoziiert, und
sowohl eine erste Nutzungsberechtigung für die erste gebührenpflichtige Verkehrsfläche durch die Speicherung eines ersten Nutzungsberechtigungsdatensatzes in dem ersten Datenspeicher (18) als auch
eine zweite Nutzungsberechtigung für die zweite gebührenpflichtige Verkehrsfläche durch die Speicherung eines zweiten Nutzungsberechtigungsdatensatzes in dem ersten Datenspeicher oder einem zweiten Datenspeicher registriert, sowie
die in einer auf die erste Positionsbestimmungsphase folgenden zweiten Positionsbestimmungsphase von der Positionsbestimmungseinrichtung (12) ermittelten zweiten Positionsdaten zu empfangen und zu verarbeiten, indem er die empfangenen zweiten Positionsdaten mit einer Nichtnutzung der ersten gebührenpflichtigen Verkehrsfläche assoziiert, und die erste Nutzungsberechtigung durch die Löschung des ersten Nutzungsberechtigungsdatensatzes aus dem ersten Datenspeicher (18), durch die Verknüpfung des ersten Nutzungsberechtigungsdatensatzes mit einem Ungültigkeitsvermerk oder durch die Speicherung eines ersten Stornierungsdatensatzes für die erste gebührenpflichtige Verkehrsfläche storniert.

6. Mobilfunkgerät (10) mit wenigstens einem Prozessor (11) und wenigstens einer Positionsbestimmungseinrichtung (12), die dem Prozessor (11) in einer ersten Datenerfassungsphase erste Positionsdaten bereitstellt und in einer zweiten Datenerfassungsphase zweite Positionsdaten bereitstellt,
wobei der Prozessor (11) dazu ausgebildet ist,
anhand der ersten Positionsdaten die mögliche Nutzung wenigstens einer ersten gebührenpflichtigen Verkehrsfläche und die zur Nutzung der ersten gebührenpflichtigen Verkehrsfläche alternativ mögliche Nutzung einer zweiten gebührenpflichtigen Verkehrsfläche festzustellen,
einen ersten Webdienst (213) und/ oder einen anderen Webdienst über eine Kommunikationsschnittstelle (13) des Mobilfunkgerätes aufzurufen und
i) eine Anfrage zur Buchung einer ersten Nutzungsberechtigung und/ oder zur Erhebung einer ersten Gebühr für die erste gebührenpflichtige Verkehrsfläche an den ersten Webdienst (213) und
ii) eine Anfrage zur Buchung einer zweiten Nutzungsberechtigung und/ oder zur Erhebung einer zweiten Gebühr für die zweite gebührenpflichtige Verkehrsfläche ah den ersten oder den anderen Webdienst zu stellen,
und
anhand der zweiten Positionsdaten eine Nichtnutzung der ersten gebührenpflichtigen Verkehrsfläche festzustellen und den ersten Webdienst (213) oder einen zweiten Webdienst (223) über die Kommunikationsschnittstelle (13) des Mobilfunkgerätes (10) aufzurufen und eine Anfrage zur Stornierung der ersten Nutzungsberechtigung und/ oder zur zumindest teilweisen Erstattung der ersten Gebühr für die erste gebührenpflichtige Verkehrsfläche an den wenigstens einen ersten Webdienst (213) oder den zweiten Webdienst (223) zu stellen.

7. Mobilfunkgerät (10) nach Anspruch 6 **dadurch gekennzeichnet, dass**
der Prozessor (11) dazu ausgebildet ist,
anhand der ersten Positionsdaten wenigstens eine Information zum Identifizieren des ersten Webdienstes (213) und/ oder des anderen Webdienstes zu ermitteln und diese zu verwenden, um den ersten Webdienst (213) und/ oder den anderen Webdienst über die Kommunikationsschnittstelle (13) des Mobilfunkgerätes (10) aufzurufen.

8. Mobilfunkgerät (10) nach Anspruch 6 oder 7 **dadurch gekennzeichnet, dass**
der Prozessor (11) dazu ausgebildet ist,
eine Nichtnutzung der ersten gebührenpflichtigen Verkehrsfläche aus einer anhand der zweiten Positionsdaten festgestellten Nutzung der zweiten gebührenpflichtigen Verkehrsfläche abzuleiten.

9. Computerprogrammprodukt, **gekennzeichnet durch** Mittel zur Ausführung folgender Anweisungen:
- Empfang von ersten positionsbezogenen Daten eines Mobilfunkgerätes (10),
- Assoziierung der ersten positionsbezogenen Daten des Mobilfunkgerätes (10)
i) mit einer möglichen Nutzung wenigstens einer ersten gebührenpflichtigen Verkehrsfläche und
ii) mit einer zur Nutzung der ersten gebührenpflichtigen Verkehrsfläche alternativ möglichen Nutzung einer zweiten gebührenpflichtigen Verkehrsfläche,
- Sendung von wenigstens einer Aufforderung
i) zur Buchung einer ersten Nutzungsberechtigung und/ oder Erhebung einer ersten Gebühr für die erste gebührenpflichtige Verkehrsfläche und
ii) zur Buchung einer zweiten Nutzungsberechtigung und/ oder Erhebung einer zweiten Gebühr für die zweite gebührenpflichtige Verkehrsfläche
an wenigstens eine erste zentrale Datenverarbeitungseinrichtung (200, 200'),
- Empfang von zweiten positionsbezogenen Daten des Mobilfunkgerätes (10),
- Assoziierung der zweiten positionsbezogenen Daten des Mobilfunkgerätes (10) mit einer Nichtnutzung der ersten gebührenpflichtigen Verkehrsfläche und
- Sendung von wenigstens einer Aufforderung zur Stornierung der ersten Nutzungsberechtigung und/ oder zumindest teilweisen Erstattung der ersten Gebühr für die erste gebührenpflichtige Verkehrsfläche an die erste zentrale Datenverarbeitungseinrichtung (200, 200') oder eine zweite zentrale Datenverarbeitungseinrichtung (200, 200').

10. Computerprogrammprodukt nach Anspruch 9 **dadurch gekennzeichnet, dass**
der Empfang der ersten und zweiten positionsbezogenen Daten des Mobilfunkgerätes (10) durch Entgegennahme der ersten und zweiten positionsbezogenen Daten von einer vom Mobilfunkgerät (10) umfassten Positionsbestimmungseinrichtung (12) erfolgt und
die Sendung der Aufforderung
i) zur Buchung der ersten Nutzungsberechtigung und/ oder Erhebung der ersten Gebühr für die erste gebührenpflichtige Verkehrsfläche und
ii) zur Buchung der zweiten Nutzungsberechtigung und/ oder Erhebung der zweiten Gebühr für die zweite gebührenpflichtige Verkehrsfläche
über eine Kommunikationsschnittstelle (13) des Mobilfunkgerätes (10) erfolgt.

11. Computerprogrammprodukt nach Anspruch 9 **dadurch gekennzeichnet, dass**
der Empfang der ersten positionsbezogenen Daten des Mobilfunkgerätes (10) durch Entgegennahme einer vom Mobilfunkgerät (10) in ein Mobilfunknetz an eine vermittelnde zentrale Datenverarbeitungseinrichtung (300) versandten ersten Nachricht, die die ersten positionsbezogenen Daten enthält, erfolgt und
der Empfang der zweiten positionsbezogenen Daten des Mobilfunkgerätes (10) durch Entgegennahme einer vom Mobilfunkgerät (10) in das Mobilfunknetz an die vermittelnde zentrale Datenverarbeitungseinrichtung (300) versandten zweiten Nachricht, die die zweiten positionsbezogenen Daten enthält, erfolgt und
die Sendung der Aufforderung
i) zur Buchung der ersten Nutzungsberechtigung und/ oder Erhebung der ersten Gebühr für die erste gebührenpflichtige Verkehrsfläche und
ii) zur Buchung der zweiten Nutzungsberechtigung und/ oder Erhebung der zweiten Gebühr für die zweite gebührenpflichtige Verkehrsfläche
über eine Kommunikationsschnittstelle der vermittelnden zentralen Datenverarbeitungseinrichtung (30) erfolgt.

12. System für die Erhebung von Gebühren für die Nutzung von gebührenpflichtigen Verkehrsflächen durch ein Fahrzeug (50) mit
- wenigstens einer zentralen Datenverarbeitungseinrichtung (200), die wenigstens einen ersten zentralen Prozessor (211, 241) aufweist und wenigstens einen ersten zentralen Datenspeicher (212, 242) aufweist und
- wenigstens einer vom Fahrzeug (50) mitgeführten elektronischen Einrichtung (10), die über wenigstens eine Positionsbestimmungseinrichtung (12), wenigstens einen dezentralen Prozessor (11) zum Empfang und zur Verarbeitung von Positionsdaten der Positionsbestimmungseinrichtung (12) sowie wenigstens einer zur zumindest teilweisen drahtlosen Kommunikation mit der zentralen Datenverarbeitungseinrichtung (200) ausgebildeten dezentralen Kommunikationseinrichtung (13) verfügt,
wobei der dezentrale Prozessor (11) dazu ausgebildet ist,
die in einer ersten Positionsbestimmungsphase von der Positionsbestimmungseinrichtung ermittelten ersten Positionsdaten zu empfangen und zu verarbeiten, indem er der dezentralen Kommunikationseinrichtung (13) zumindest einige erste Daten der ersten Positionsdaten oder aus den ersten Positionsdaten abgeleitete erste Daten zusammen mit einer Nutzerkennung zur Übertragung an die zentrale Datenverarbeitungseinrichtung (200) bereitstellt und
die in einer zweiten Positionsbestimmungsphase von der Positionsbestimmungseinrichtung ermittelten zweiten Positionsdaten zu empfangen und zu verarbeiten, indem er der dezentralen Kommunikationseinrichtung (13) zumindest einige zweite Daten der zweiten Positionsdaten oder aus den zweiten Positionsdaten abgeleitete zweite Daten zusammen mit einer Nutzerkennung zur Übertragung an die zentrale Datenverarbeitungseinrichtung (200) bereitstellt und
wobei der erste zentrale Prozessor (211, 241) dazu ausgebildet ist,
die von der elektronischen Einrichtung (10) an die zentrale Datenverarbeitungseinrichtung (200) übertragenen ersten Daten und die Nutzerkennung zu empfangen und zu verarbeiten, indem er eine der Nutzerkennung zugeordnete erste Nutzungsberechtigung für eine erste gebührenpflichtige Verkehrsfläche, die aus den ersten Daten assoziierbar oder identifizierbar ist, durch die Speicherung eines ersten Nutzungsberechtigungsdatensatzes in dem ersten zentralen Datenspeicher (212, 242) registriert und
eine der Nutzerkennung zugeordnete zweite Nutzungsberechtigung für eine, alternativ zur ersten gebührenpflichtigen Verkehrsfläche nutzbare, zweite gebührenpflichtige Verkehrsfläche, die aus den ersten Daten assoziierbar oder identifizierbar ist, durch die Speicherung eines zweiten Nutzungsberechtigungsdatensatzes in dem ersten zentralen Datenspeicher (212, 242) registriert,
und
wobei der erste zentrale Prozessor (242) oder ein zweiter zentraler Prozessor (221) der zentralen Datenverarbeitungseinrichtung (200) dazu ausgebildet ist,
die von der elektronischen Einrichtung (10) an die zentrale Datenverarbeitungseinrichtung (200) übertragenen zweiten Daten und die Nutzerkennung zu empfangen und zu verarbeiten, indem er die der Nutzerkennung zugeordnete erste Nutzungsberechtigung für die erste Verkehrsfläche, die aus den zweiten Daten assoziierbar oder identifizierbar ist, durch die Löschung des ersten Nutzungsberechtigungsdatensatzes aus dem ersten Datenspeicher (212, 242) oder durch die Verknüpfung des ersten Nutzungsberechtigungsdatensatzes mit einem Ungültigkeitsvermerk storniert, oder aber durch die Speicherung eines ersten Stornierungsdatensatzes für die erste Verkehrsfläche in dem ersten zentralen Datenspeicher (242) oder einem zweiten zentralen Datenspeicher (222) der zentralen Datenverarbeitungseinrichtung (200) als ungültig vermerkt.

13. System nach Anspruch 12 **gekennzeichnet durch** eine an oder auf einer gebührenpflichtigen Verkehrsfläche vorgesehenen Kontrolleinrichtung (25) mit einer Bildaufnahme- und -auswertevorrichtung (26) zur Aufnahme und Auswertung von Bildern von Fahrzeugen, die die Verkehrsfläche nutzen und zur Gewinnung von Fahrzeugdaten zur Identifikation dieser Fahrzeuge aus diesen Bildern,
wobei die Nutzungsberechtigungsdatensätze der zentralen Datenverarbeitungseinrichtung (200) Fahrzeugdaten umfassen, und
wobei zumindest zeitweise eine Kommunikationsverbindung zwischen der Kontrolleinrichtung (25) und der zentralen Datenverarbeitungseinrichtung (200) zur Übertragung von Fahrzeugdaten von der zentralen Datenverarbeitungseinrichtung an die Kontrolleinrichtung (25) und/ oder zur Übertragung von Fahrzeugdaten von der Kontrolleinrichtung (25) an die zentrale Datenverarbeitungseinrichtung (200) besteht,
und die Kontrolleinrichtung oder die zentralen Datenverarbeitungseinrichtung ausgebildet ist, die Fahrzeugdaten auf eine Verknüpfung mit einem der Verkehrsfläche zugeordneten Nutzungsberechtigungsdatensatz zu prüfen und wenigstens ein Signal zu erzeugen, welches davon abhängig ist, ob die Prüfung der Fahrzeugdaten auf eine Verknüpfung mit einem der Verkehrsfläche zugeordneten Nutzungsberechtigungsdatensatz ein positives oder negatives Ergebnis erbringt.

## Claims

1. A method for posting and cancelling usage authorizations in a system for the levying of charges for the use of traffic areas on which tolls are payable by a vehicle (50) having the following phases:
a) a first data acquisition phase in which positional data relating to the vehicle (50) is captured by means of at least one position determination device (12) on board the vehicle (50),
b) a first association phase in which the first positional data are associated by means of at least a first processor (11, 311) processing positional data
i) with a possible forthcoming use by the vehicle (50) of at least a first traffic area on which tolls are payable and
ii) with at least one possible forthcoming use by the vehicle (50) of a second traffic area on which tolls are payable as an alternative to the first traffic area on which tolls are payable,
c) a posting phase in which
i) for the first traffic area on which tolls are payable, a first usage authorization relating to the vehicle (50) is posted through the storage of a first posting data record representing the usage authorization for at least the first traffic area on which tolls are payable in at least a first data store (18, 212, 242) and
ii) in addition to the first usage authorization, a second usage authorization relating to the vehicle (50) is posted in the first data store (18, 212, 242) for the second traffic area on which tolls are payable through the storage of the first posting data record which also represents the usage authorization for the second traffic area on which tolls are payable or a second posting data record separately representing the usage authorization for the sec ond traffic area for which tolls are payable,
d) a second data acquisition phase in which second positional data for the vehicle (50) is captured by means of the at least one position determination device (12) on board the vehicle (50),
e) a second association phase in which second positional data are associated by means of the first processor (11, 311) and/or a second processor (11, 311) processing positional data with a confirmed non-usage by the vehicle (50) of at least the first traffic area on which tolls are payable,
and
f) a cancellation phase in which at least the first usage authorization for the first traffic area on which tolls are payable is cancelled by generating a cancellation data record for the first traffic area on which tolls are payable in the first data store (18, 242) or a second data store (222) or by amending or deleting the first posting data record in the data store (18, 212, 242).

2. The method according to claim 1, **characterized in that**
the first positional data captured in the first data acquisition phase include at least a first position, or at least a first collection of multiple first positions, of the vehicle (50) which are determined in the first data acquisition phase by means of a position determination device (12) on board the vehicle (50),
and
in the first association phase, the first position or the first collection of multiple first positions are associated at least with the first traffic area on which tolls are payable and the second traffic area on which tolls are payable,
wherein
this kind of associated traffic area on which tolls are payable can be reached starting from the first position or a position of the first collection of multiple first positions with the vehicle (50) directly via a route which involves no other traffic area on which tolls are payable, for which there is no usage authorization relating to the vehicle (50) or which is provided for association with the first position or a position of the collection of multiple first positions.

3. The method according to one of the preceding claims, **characterized in that**
the posting of the first usage authorization takes place through the levying of a first charge for the first traffic area on which tolls are payable
the posting of the second usage authorization takes place through the levying of a second charge for the second traffic area on which tolls are payable
and
the cancellation of the first usage authorization takes place through the at least partial refunding or cancellation of the first charge levied.

4. A method for the levying of charges in a system for the levying of charges for the use of traffic areas on which tolls are payable by a vehicle (50) using a method according to one of the preceding claims,
**characterized in that**
in the second association phase the second positional data are associated with a confirmed usage by the vehicle (50) of the second traffic area on which tolls are payable, wherein due to the alternative possible use of the first and second traffic area on which tolls are payable with the confirmed use of the second traffic area on which tolls are payable, the confirmed non-usage of the first traffic area on which tolls are payable results, and
wherein
the method further envisages the levying of a charge for the use of the second traffic area on which tolls are payable following the first association phase.

5. A vehicle device (10) having
at least one position determination device (12), at least one processor (11) for receiving and processing positional data from the position determination device (12) and at least a first data store (18),
**characterized in that** the processor (11) is configured
to receive and process the first positional data determined in a first position determination phase by the position determination device (12), **in that** it
associates the first positional data received with the possible use of at least a first traffic area on which tolls are payable and the possible use of a second traffic area on which tolls are payable as an alternative to the use of the first traffic area on which tolls are payable, and
registers both a first usage authorization for the first traffic area on which tolls are payable through the storage of a first usage authorization data record in the first data store (18) and
a second usage authorization for the second traffic area on which tolls are payable through the storage of a second usage authorization data record in the first data store or a second data store, and
to receive and process the second positional data determined in a second position determination phase following the first position determination phase by the position determination device (12), **in that** it associates the second positional data received with non-usage of the first traffic area on which tolls are payable, and cancels the first usage authorisation by deleting the first usage authorisation data record from the first data store (18), by linking the first usage authorization data record to a void term or by storing a first cancellation data record for the first traffic area on which tolls are payable.

6. A mobile phone (10) having at least one processor (11) and at least one position determination device (12) which supplies first positional data to the processor (11) in a first data acquisition phase and supplies second positional data in a second data acquisition phase,
wherein the processor (11) is configured,
to determine the possible use of at least a first traffic area on which tolls are payable and the possible use of a second traffic area on which tolls are payable as an alternative to the use of the first traffic area on which tolls are payable with the help of the first positional data,
to activate a first web service (213) and/or another web service via a communication interface (13) of the mobile phone and
i) to make an enquiry for the posting of a first usage authorization and/or for the levying of a first charge for the first traffic area on which tolls are payable to the first web service (213) and
ii) to make an enquiry for the posting of a second usage authorization and/or for the levying of a second charge for the second traffic area on which tolls are payable to the first or the other web service,
and
to determine with the help of the second positional data non-usage of the first traffic area on which tolls are payable and to activate the first web service (213) or a second web service (223) via the communication interface (13) of the mobile phone (10) and to make an enquiry for the cancellation of the first usage authorization and/or the at least partial refund of the first charge for the first traffic area on which tolls are payable to the at least one first web service (213) or the second web service (223).

7. The mobile phone (10) according to claim 6, **characterized in that**
the processor (11) is configured,
with the help of the first positional data, to determine at least one piece of information in order to identify the first web service (213) and/or the other web service and to use this in order to activate the first web service (213) and/or the other web service via the communication interface (13) of the mobile phone (10).

8. The mobile phone (10) according to Claim 6 or 7, **characterized in that**
the processor (11) is configured
to infer non-usage of the first traffic area on which tolls are payable from usage of the second traffic area on which tolls are payable determined with the help of the second positional data.

9. A computer program product, **characterized by** means for carrying out the following instructions:
- receiving first positional data from a mobile phone (10),
- associating the first positional data from the mobile phone (10)
i) with the possible use of at least a first traffic area on which tolls are payable and
ii) with the possible use of a second traffic area on which tolls are payable as an alternative to the use of the first traffic area on which tolls are payable,
- sending at least one request
i) for the posting of a first usage authorization and/or levying of a first charge for the first traffic area on which tolls are payable and
ii) for the posting of a second usage authorization and/or levying of a second charge for the second traffic area on which tolls are payable
to at least a first central data processing device (200, 200'),
- receiving second positional data from the mobile phone (10),
- associating the second positional data from the mobile phone (10) with non-usage of the first traffic area on which tolls are payable and
- sending at least one request for the cancellation of the first usage authorization and/or at least partial refund of the first charge for the first traffic area on which tolls are payable to the first central data processing device (200, 200') or a second central data processing device (200, 200').

10. The computer program product according to claim 9, **characterized in that**
the receiving of the first and second positional data from the mobile phone (10) takes place through acceptance of the first and second positional data from a position determination device (12) included in the mobile phone (10) and
the sending of the request
i) for the posting of the first usage authorization and/or levying of the first charge for the first traffic area on which tolls are payable and
ii) for the posting of the second usage authorization and/or levying of the second charge for the second traffic area on which tolls are payable takes place via a communication interface (13) of the mobile phone (10).

11. The computer program product according to claim 9, **characterized in that**
the receiving of the first positional data from the mobile phone (10) takes place through acceptance of a first message sent by the mobile phone (10) over a mobile phone network to a conveying central data processing device (300), which first message contains the first positional data, and
the receiving of the second positional data from the mobile phone (10) takes place through acceptance of a second message sent by the mobile phone (10) over the mobile phone network to the conveying central data processing device (300), which second message contains the second positional data, and
the sending of the request
i) for the posting of the first usage authorization and/or levying of the first charge for the first traffic area on which tolls are payable and
ii) for the posting of the second usage authorization and/or levying of the second charge for the second traffic area on which tolls are payable
takes place via a communication interface of the conveying central data processing device (30).

12. A system for the levying of charges for the use of traffic areas in which tolls are payable by a vehicle (50) having
- at least one central data processing device (200) which has at least a first central processor (211, 241) and at least a first central data store (212, 242) and
- at least one electronic device (10) on board the vehicle (50) which has at least one position determination device (12), at least one decentralized processor (11) for receiving and for processing positional data from the position determination device (12) and at least one decentralized communication device (13) for at least partial wireless communication with the central data processing device (200),
wherein the decentralized processor (11) is configured
to receive and process the first positional data received in a first position determination phase from the position determination device, in that it supplies the decentralized communication device (13) with at least some first data of the first positional data or derived from the first positional data along with a user ID for transmission to the central data processing device (200) and
to receive and process the second positional data received in a second position determination phase from the position determination device, in that it supplies the decentralized communication device (13) with at least some second data of the second positional data or derived from the second positional data along with a user ID for transmission to the central data processing device (200) and
wherein the first central processor (211, 241) is configured
to receive and process the first data transmitted by the electronic device (10) to the central data processing device (200) and the user ID, in that it registers a first usage authorization assigned to the user ID for a first traffic area in which tolls are payable, which can be associated or identified from the first data, through the storage of a first usage authorization data record in the first central data store (212, 242) and
registers a second usage authorization assigned to the user ID for a second traffic area on which tolls are payable which is an alternative to the first traffic area on which tolls are payable which can be associated or identified from the first data, through storage of a second usage authorization data record in the first central data store (212, 242),
and
wherein the first central processor (242) or a second central processor (221) of the central data processing device (200) is configured
to receive and process the second data transmitted from the electronic device (10) to the central data processing device (200) and the user ID, in that it cancels the first usage authorization assigned to the user ID for the first traffic area which can be associated or identified from the second data through deletion of the first usage authorization data record from the first data store (212, 242) or through the linking of the first usage authorization data record with a void term or, however, marks it as void through the storage of a first cancellation data record for the first traffic area in the first central data store (242) or a second central data store (222) of the central data processing device (200).

13. The system according to claim 12, **characterized by** a control device (25) provided at or on a traffic area in which tolls are payable, having an image recording and evaluating device (26) for recording and evaluating images of vehicles which use the traffic area and for obtaining vehicle data for the identification of these vehicles from these images,
wherein the usage authorization data records of the central data processing device (200) include vehicle data, and wherein a communication connection exists between the control device (25) and the central data processing device (200) for the transfer of vehicle data from the central data processing device to the control device (25) and/or for the transfer of vehicle data from the control device (25) to the central data processing device (200),
and the control device or the central data processing device is configured to check the vehicle data on a link against a usage authorization data record assigned to the traffic area and to generate at least one signal which is dependent on whether the checking of vehicle data on a link against a usage authorization data record assigned to the traffic area produces a positive or negative result.

## Revendications

1. Procédé de réservation et d'annulation d'autorisations d'utilisation dans un système pour la collecte de taxes pour l'utilisation de surfaces de circulation soumises à des taxes par un véhicule (50), comportant les phases suivantes :
a) une première phase de détection de données dans laquelle des premières données relatives à la position du véhicule (50) sont détectées au moyen d'au moins un dispositif de détermination de position de véhicule (12) embarqué dans le véhicule (50),
b) une première phase d'association dans laquelle les premières données relatives à la position du véhicule sont associées au moyen d'au moins un premier processeur traitant des données relatives à la position (11, 311)
i) avec une utilisation imminente éventuelle d'au moins une première surface de circulation soumise à des taxes par le véhicule (50) et
ii) avec au moins une utilisation éventuelle imminente en alternative à la première surface de circulation soumise à des taxes d'une seconde surface de circulation soumise à des taxes par le véhicule (50),
c) une phase de réservation dans laquelle,
i) pour la première surface de circulation soumise à des taxes, une autorisation d'utilisation relative au véhicule (50) est réservée par l'enregistrement d'un premier jeu de données de réservation représentant l'autorisation d'utilisation pour au moins la première surface de circulation soumise à des taxes dans au moins une première mémoire de données (18, 212, 242) et
ii) en plus de la première autorisation d'utilisation, une seconde autorisation d'utilisation relative au véhicule (50) est réservée pour la seconde surface de circulation soumise à des taxes en enregistrant le premier jeu de données de réservation représentant l'autorisation d'utilisation pour la seconde surface de circulation soumise à des taxes ou un second jeu de données de réservation représentant séparément l'autorisation d'utilisation pour la seconde surface de circulation soumise à des taxes dans la première mémoire de données (18, 212, 242),
d) une seconde phase de détection de données dans laquelle des secondes données relatives à la position du véhicule (50) sont détectées au moyen de l'au moins un dispositif de détermination de position (12) embarqué dans le véhicule (50),
e) une seconde phase d'association dans laquelle les secondes données relatives à la position sont associées au moyen du premier processeur (11, 311) et/ou d'un second processeur traitant les données relatives à la position (11, 311) avec une non-utilisation confirmée au moins de la première surface de circulation soumise à des taxes par le véhicule (50),
et
f) une phase d'annulation dans laquelle la première autorisation d'utilisation pour la première surface de circulation soumise à des taxes est annulée en générant un jeu de données d'annulation pour la première surface de circulation soumise à des taxes dans la première mémoire de données (18,242) ou dans une seconde mémoire de données (222) ou en modifiant ou en effaçant le premier jeu de données de réservation dans la mémoire de données (18,212,242).

2. Procédé selon la revendication 1, **caractérisé en ce que**
les premières données relatives à la position détectées dans la première phase de détection de données comprennent au moins une première position ou au moins un premier groupe de plusieurs premières positions du véhicule (50) qui sont déterminées dans la première phase de regroupement au moyen d'un dispositif de détermination de position (12) embarqué dans le véhicule (50),
et
dans la première phase d'association, la première position ou le premier regroupement de plusieurs premières positions est associé au moins à la première surface de circulation soumise à des taxes et à la seconde surface de circulation soumise à des taxes,
une telle surface de circulation associée soumise à des taxes pouvant être atteinte en partant de la première position ou d'une position du premier groupe de plusieurs premières positions avec le véhicule (50) directement ou par une voie qui ne présente pas d'autres surfaces de circulation soumises à des taxes pour laquelle il n'y a pas d'autorisations d'utilisation relative au véhicule (50) ou qui est prévue pour l'association à la première position ou à une position du groupe de plusieurs premières positions.

3. Procédé selon une des revendications précédentes, **caractérisé en ce que**
la réservation de la première autorisation d'utilisation a lieu en collectant une première taxe pour la première surface de circulation soumise à des taxes,
la réservation de la seconde autorisation d'utilisation a lieu en collectant une seconde taxe pour la seconde surface de circulation soumise à des taxes
et
l'annulation de la première autorisation d'utilisation a lieu en remplaçant au moins partiellement ou en annulant la première taxe collectée.

4. Procédé de collecte de taxes dans un système pour la collecte de taxes pour l'utilisation de surfaces de circulation soumises à des taxes par un véhicule (50) par un procédé selon une des revendications précédentes, **caractérisé en ce que**, dans la seconde phase d'association, les secondes données relatives à la position sont associées à une utilisation confirmée de la seconde surface de circulation soumise à des taxes par le véhicule (50), sachant que, en raison de la possibilité d'utilisation alternative des première et seconde surfaces de circulation soumises à des taxes, avec utilisation confirmée de la seconde surface de circulation soumise à des taxes, il en résulte la non-utilisation confirmée de la première surface de circulation soumise à des taxes, et
le procédé prévoyant en outre la collecte d'une taxe pour l'utilisation de la seconde surface de circulation soumise à des taxes après la première phase d'association.

5. Dispositif de véhicule (10) comportant
au moins un dispositif de détermination de position (12), au moins un processeur (11) pour la réception et le traitement de données de position du dispositif de détermination de position (12) au moins une première mémoire de données (18), **caractérisé en ce que** le processeur (11) est conçu pour
recevoir et traiter les premières données de position déterminée dans la première phase de détermination de position par le dispositif de détermination de position (12), par le fait qu'il
associe les premières données de position reçues avec l'utilisation éventuelle d'au moins une première surface de circulation soumise à des taxes et l'utilisation éventuelle en alternative à la première surface de circulation soumise à des taxes d'une seconde surface de circulation soumise à des taxes, et
enregistre aussi bien une première autorisation d'utilisation pour la première surface d'utilisation soumise à des taxes en enregistrant un premier jeu de données d'autorisations d'utilisation dans la première mémoire de données (18) qu'une seconde autorisation d'utilisation pour la seconde surface de circulation soumise à des taxes en enregistrant un second jeu de données d'autorisations d'utilisation dans la première mémoire de données ou dans une seconde mémoire de données, et
recevoir et pour traiter des secondes données de position déterminées dans une seconde phase de détermination de position suivant la première phase de détermination de position par le dispositif de détermination de position (12) en associant les secondes données de position reçue avec une non-utilisation de la première surface de circulation soumise à des taxes, et en annulant la première autorisation d'utilisation en effaçant le premier jeu de données d'autorisations d'utilisation dans la première mémoire de données (18), en mettant en lien le premier jeu de données d'autorisations d'utilisation avec une note de non-validité ou en enregistrant un premier jeu de données d'annulation pour la première surface d'utilisation soumise à des taxes.

6. Appareil de téléphonie mobile (10) comportant au moins un processeur (11) au moins un dispositif de détermination de position (12) qui met de premières données de position à disposition du processeur (11) dans une première phase de détection de données et met à disposition de secondes données de position dans une seconde phase de détection de données,
le processeur (11) étant conçu pour,
à partir des premières données de position, constater l'utilisation éventuelle d'au moins une première surface de circulation soumise à des taxes et l'utilisation éventuelle en alternative à l'utilisation de la première surface de circulation soumise à des taxes d'une seconde surface de circulation soumise à des taxes,
appeler un premier service Web (213) et/ou un autre service Web par l'intermédiaire d'une interface de communication (13) de l'appareil de téléphonie mobile et
i) faire une demande de réservation d'une première autorisation d'utilisation et/ou de collecte d'une première taxe pour la première surface de circulation soumise à des taxes auprès du premier service Web (213) et
ii) une demande de réservation d'une seconde autorisation d'utilisation et/ou de collecte d'une seconde taxe pour la seconde surface de circulation soumise à des taxes auprès du premier ou de l'autre service Web,
et,
en se basant sur les secondes données de position, constater une non-utilisation de la première surface de circulation soumise à des taxes et appeler le premier service Web (213) ou un second service Web (223) par l'intermédiaire de l'interface de communication (13) de l'appareil de téléphonie mobile (10) et faire une demande d'annulation de la première autorisation d'utilisation et/ou de remboursement au moins partiel de la première taxe pour la première surface de circulation soumise à des taxes auprès de l'au moins un premier service Web (213) ou du second service Web (223).

7. Appareil de téléphonie mobile (10) selon la revendication 6, **caractérisé en ce que**
le processeur (11) est conçu pour,
sur la base des premières données de position, déterminer au moins une information pour l'identification du premier service Web (213) et/ou de l'autre service Web et utiliser celui-ci afin de d'appeler le premier service Web (213) et/ou l'autre service Web par l'intermédiaire de l'interface de communication (13) de l'appareil de téléphonie mobile (10).

8. Appareil de téléphonie mobile (10) selon la revendication 6 ou 7, **caractérisé en ce que**
le processeur (11) est conçu pour
déduire une non-utilisation de la première surface de circulation soumise à des taxes d'une utilisation constatée à partir des secondes données de position de la seconde surface de circulation soumise à des taxes.

9. Produit de programmation informatique, **caractérisé par** des moyens d'exécution des instructions suivantes :
- réception de premières données relatives à la position d'un appareil de téléphonie mobile (10),
- association des premières données relatives à la position de l'appareil de téléphonie mobile (10)
i) avec une utilisation éventuelle d'au moins une première surface de circulation soumise à des taxes et
ii) avec une utilisation éventuelle en alternative à l'utilisation de la première surface de circulation soumise à des taxes d'une seconde surface de circulation soumise à des taxes,
- envoi d'au moins une demande
i) de réservation d'une première autorisation d'utilisation et/ou de collecte d'une première taxe pour la première surface de circulation soumise à des taxes et
ii) de réservation d'une seconde autorisation d'utilisation et/ou de collecte d'une seconde taxe pour la seconde surface de circulation soumise à des taxes
à au moins une première un premier dispositif centralisé de traitement de données (200, 200'),
- réception de secondes données relatives à la position de l'appareil de téléphonie mobile (10),
- association des secondes données relatives à la position de l'appareil de téléphonie mobile (10) avec une non-utilisation de la première surface de circulation soumise à des taxes et
- envoi d'au moins une demande d'annulation de la première autorisation d'utilisation et/ou de remboursement au moins partiel de la première taxe pour la première surface de circulation soumise à des taxes au premier dispositif centralisé de traitement de données (200, 200') ou à un second dispositif centralisé de traitement de données (200, 200').

10. Produit de programmation informatique selon la revendication 9, **caractérisé en ce que**
la réception des premières et secondes données relatives à la position de l'appareil de téléphonie mobile (10) se fait en prenant en compte les premières et secondes données relatives à la position d'un dispositif de détermination de position (12) englobé par l'appareil de téléphonie mobile (10) et
l'envoi de la demande
i) de réservation de la première autorisation d'utilisation et/ou de collecte de la première taxe pour la première surface de circulation soumise à des taxes et
ii) de réservation de la seconde autorisation d'utilisation et/ou de collecte de la seconde taxe pour la seconde surface de circulation soumise à des taxes a lieu par l'intermédiaire d'une interface de communication (13) de l'appareil de téléphonie mobile (10).

11. Produit de programmation informatique selon la revendication 9, **caractérisé en ce que**
la réception des premières données relatives à la position de l'appareil de téléphonie mobile (10) se fait en prenant en compte un premier message envoyé par l'appareil de téléphonie mobile (10) dans un réseau de téléphonie mobile à un dispositif centralisé de traitement de données médiateur (300) et qui contient les premières données relatives à la position et
la réception des secondes données relatives à la position de l'appareil de téléphonie mobile (10) fait en prenant en compte un second message envoyé par l'appareil de téléphonie mobile (10) dans le réseau de téléphonie mobile à un dispositif centralisé de traitement de données médiateur (300) et qui contient les secondes données relatives à la position et l'envoi de la demande
i) de réservation de la première autorisation d'utilisation et/ou de collecte de la première taxe pour la première surface de circulation soumise à des taxes et
ii) de réservation de la seconde autorisation d'utilisation et/ou de collecte de la seconde taxe pour la seconde surface de circulation soumise à des taxes se fait
par l'intermédiaire d'une interface de communication du dispositif centralisé de traitement de données (30).

12. Système de collecte de taxes pour l'utilisation de surfaces de circulation soumises à des taxes par un véhicule (50), comportant
- au moins un dispositif centralisé de traitement de données (200) qui présente au moins un premier processeur centralisé (211, 241) et au moins une première mémoire de données centralisée (212, 242) et
- au moins un dispositif électronique (10) embarqué dans le véhicule (50), qui dispose d'au moins un dispositif de détermination de position (12), d'au moins un processeur décentralisé (11) pour recevoir et pour traiter des données de position du dispositif de détermination de position (12) ainsi que d'au moins un dispositif décentralisé de communication (13) conçu pour une communication du moins partiellement sans fil avec le dispositif centralisé de traitement de données (200),
le processeur décentralisé (11) étant conçu pour
recevoir les premières données de position déterminées dans une première phase de détermination de position par le dispositif de détermination de position (13) en mettant à disposition du dispositif décentralisé de communication au moins certaines premières données des premières données de position ou des premières données dérivées des premières données de position en même temps qu'un identifiant d'utilisateur pour transfert au dispositif centralisé de traitement de données (200) et
recevoir et traiter les secondes données de position déterminées dans une seconde phase de détermination de position par le dispositif de détermination de position en mettant à disposition du dispositif décentralisé de communication (13) au moins certaines secondes données des secondes données de position ou des secondes données dérivées des secondes données de position en même temps qu'un identifiant d'utilisateur pour transfert au dispositif centralisé de traitement de données (200) et
le premier processeur centralisé (211, 241) étant conçu pour
recevoir et traiter les premières données transférées par le dispositif électronique (10) au dispositif centralisé de traitement de données (200) et l'identifiant d'utilisateur en enregistrant une première autorisation d'utilisation associée à l'identifiant d'utilisateur pour une première surface de circulation soumise à des taxes qui est associable ou identifiable à partir des premières données en enregistrant un premier jeu de données d'autorisation d'utilisation dans la première mémoire de données centralisée (212, 242) et
en enregistrant une seconde autorisation d'utilisation associée à l'identifiant d'utilisateur pour une seconde surface de circulation soumise à des taxes et utilisable en alternative à la première surface de circulation soumise à des taxes et qui est associable ou identifiable à partir des premières données en enregistrant un second jeu de données d'autorisation d'utilisation dans la première mémoire de données centralisée (212, 242),
et
le premier processeur centralisé (242) ou un second processeur centralisé (221) du dispositif centralisé de traitement de données (200) étant conçu pour
recevoir et traiter les secondes données transférées par le dispositif électronique (10) au dispositif centralisé de traitement de données (200) et un l'identifiant d'utilisateur en annulant la première autorisation d'utilisation associée à l'identifiant d'utilisateur pour la première surface de circulation qui est associable ou identifiable à partir des secondes données en effaçant le premier jeu de données d'autorisation d'utilisation dans la première mémoire de données (212,242) ou en mettant en lien le premier jeu de données d'autorisation d'utilisation avec une note de non-validité, ou en le marquant comme non valable en enregistrant un premier jeu de données d'annulation pour la première surface de circulation dans la première mémoire de données centralisée (242) ou une seconde mémoire de données centralisée (222) du dispositif centralisé de traitement de données (200).

13. Système selon la revendication 12, **caractérisé par** un dispositif de contrôle (25) prévu au niveau d'une ou sur une surface de circulation soumise à des taxes comportant un dispositif de prise et d'évaluation de photos (26) pour la prise et l'évaluation de photos de véhicules qui utilisent la surface de circulation et pour la récupération de données sur les véhicules pour l'identification de ces véhicules à partir de ces photos,
les jeux de données d'autorisation d'utilisation du dispositif centralisé de traitement de données (200) comprenant des données sur les véhicules, et
une liaison de communication entre le dispositif de contrôle (25) et le dispositif centralisé de traitement de données (200) existant au moins temporairement pour le transfert de données sur les véhicules par le dispositif centralisé de traitement de données au dispositif de contrôle (25) et/ou pour le transfert de données sur les véhicules par le dispositif de contrôle (25) au dispositif centralisé de traitement de données (200),
et le dispositif de contrôle ou le dispositif centralisé de traitement de données étant conçu pour contrôler les données sur les véhicules au niveau de la mise en lien avec un jeu de données d'autorisation d'utilisation associé à la surface de circulation et générer au moins un signal qui dépend du fait que le contrôle des données sur les véhicules au niveau d'une mise en lien avec un jeu de données d'autorisation d'utilisation associé à la surface de circulation donne un résultat positif ou négatif.
